(19) Europäisches Patentamt / European Patent Office / Office européen des brevets

(11) **EP 4 693 942 A1**

(12) **EUROPEAN PATENT APPLICATION**
published in accordance with Art. 153(4) EPC

(43) Date of publication:
**11.02.2026 Bulletin 2026/07**

(21) Application number: **23932105.2**

(22) Date of filing: **07.04.2023**

(51) International Patent Classification (IPC):
**H04B 7/08** (2006.01)   **H04J 13/18** (2011.01)
**H04L 27/26** (2006.01)

(52) Cooperative Patent Classification (CPC):
**H04B 7/08; H04J 13/18; H04L 27/26**

(86) International application number:
**PCT/JP2023/014453**

(87) International publication number:
**WO 2024/209695 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)      A terminal according to an aspect of the present disclosure includes a receiving section that, when a combination of a category 1 demodulation reference signal (DMRS) port, a category 2 DMRS port, and a category 3 DMRS port in at least one code division multiplexing (CDM) group is supported, receives downlink control information (DCI) indicating the combination and being for scheduling a downlink shared channel for one or two codewords, and a control section that determines a DMRS port for the downlink shared channel, based on the combination, wherein the control section controls switching of the DMRS ports, based on information related to the switching of DMRS ports. According to an aspect of the present disclosure, it is possible to appropriately control communication even when the number of the DMRS ports is increased compared to a conventional case.

dmrs-Type=eType1, maxLength=1                                      (PDSCH)

| | One Codeword:<br>Codeword 0 enabled,<br>Codeword 1 disabled | | | | Two Codewords:<br>Codeword 0 enabled,<br>Codeword 1 enabled | | |
|---|---|---|---|---|---|---|---|
| Value | Number of DMRS CDM group(s) without data | DMRS port(s) | Notes | Value | Number of DMRS CDM group(s) without data | DMRS port(s) | Notes |
| 0 | 1 | 0 | | 0 | 2 | 0,1,2,3,8 | Rank 5-8 with one DMRS symbol |
| 1 | 1 | 1 | | 1 | 2 | 0,1,2,3,8,10 | |
| 2 | 1 | 0,1 | | 2 | 2 | 0,1,2,3,8,9,10 | |
| 3 | 2 | 0 | | 3 | 2 | 0,1,2,3,8,9,10,11 | |
| 4 | 2 | 1 | | | | | |
| 5 | 2 | 2 | | | | | |
| 6 | 2 | 3 | Cat. 1 | | | | |
| 7 | 2 | 0,1 | | | | | |
| 8 | 2 | 2,3 | | | | | |
| 9 | 2 | 0-2 | | | | | |
| 10 | 2 | 0-3 | | | | | |
| 11 | 2 | 0,2 | | | | | |
| 12 | 1 | 8 | | | | | |
| 13 | 1 | 9 | | | | | |
| 14 | 1 | 8,9 | | | | | |
| 15 | 2 | 8 | | | | | |
| 16 | 2 | 9 | | | | | |
| 17 | 2 | 10 | Cat.2 | | | | |
| 18 | 2 | 11 | | | | | |
| 19 | 2 | 8,9 | | | | | |
| 20 | 2 | 10,11 | | | | | |
| 21 | [2] | [8-10] | | | | | |
| 22 | [2] | [8-11] | | | | | |
| 23 | [?] | [8, 10], [9, 11] | | | | | |
| 24 | 1 | 0,1,8 | | | | | |
| 25 | 1 | 0,1,8,9 | | | | | |
| 26 | 2 | 0,1,8 | Cat.3 | | | | |
| 27 | 2 | 0,1,8,9 | | | | | |
| 28 | 2 | 2,3,10 | | | | | |
| 29 | 2 | 2,3,10,11 | | | | | |

FIG. 5

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In preparation for future radio communication systems (for example, Rel-18 NR), an increase in the number of demodulation reference signal (DMRS) ports is under study. A new DMRS port that is different from such an existing DMRS port (also referred to as an Rel-15 DMRS port) is also referred to as an Rel-18 DMRS port.

However, when the Rel-18 DMRS ports are introduced with an increased number of DMRS ports, a difference in an indication from the Rel-15 DMRS ports, an antenna port table to be referenced, and the like have not been sufficiently studied. If these are not clearly specified, communication throughput/communication quality may not be preferably improved.

One of the objectives of the present disclosure is therefore to provide a terminal, a radio communication method and a base station that can appropriately control communication even when the number of the DMRS ports is increased compared to a conventional case.

Solution to Problem

A terminal according to an aspect of the present disclosure includes a receiving section that, when a combination of a category 1 demodulation reference signal (DMRS) port, a category 2 DMRS port, and a category 3 DMRS port in at least one code division multiplexing (CDM) group is supported, receives downlink control information (DCI) indicating the combination and being for scheduling a downlink shared channel for one or two codewords, and a control section that determines a DMRS port for the downlink shared channel, based on the combination, wherein the control section controls switching of the DMRS ports, based on information related to the switching of DMRS ports.

Advantageous Effects of Invention

According to an aspect of the present disclosure, it is possible to appropriately control communication even when the number of the DMRS ports is increased compared to a conventional case.

Brief Description of Drawings

EP 4 693 942 A1

[FIG. 1] FIG. 1 illustrates an example of an existing DMRS port table for DMRS configuration type 1/2 for a PDSCH.
[FIG. 2] FIG. 2 illustrates an example of the existing DMRS port table for DMRS configuration type 1/2 for a PUSCH.
[FIG. 3] FIGS. 3A to 3C are tables illustrating an example of a new OCC (Orthogonal Cover Code) that can be applied.
[FIG. 4] FIG. 4A is a diagram illustrating an example of an association of CDM groups, DMRS ports and OCCs in enhanced type 1. FIG. 4B is a diagram illustrating an example of the association of the CDM groups, the DMRS ports and the OCCs in enhanced type 2.
[FIG. 5] FIG. 5 illustrates an example of an antenna port table for the PDSCH in a case in which DMRS type = enhanced type 1 and DMRS maximum length = 1.
[FIG. 6] FIG. 6 illustrates a variation of the antenna port table for the PDSCH in the case in which DMRS type = enhanced type 1 and DMRS maximum length = 1.
[FIG. 7] FIG. 7 illustrates an example of the antenna port table for the PDSCH in a case in which DMRS type = enhanced type 1 and DMRS maximum length = 2.
[FIG. 8] FIG. 8 illustrates an example of the antenna port table for the PDSCH in the case in which DMRS type = enhanced type 1 and DMRS maximum length = 2.
[FIG. 9] FIGS. 9A and 9B illustrate a variation of the antenna port table for the PDSCH in the case in which DMRS type = enhanced type 1 and DMRS maximum length = 2.
[FIG. 10] FIG. 10 illustrates an example of the antenna port table for the PDSCH in a case in which DMRS type = enhanced type 2 and DMRS maximum length = 1.
[FIG. 11] FIG. 11 illustrates an example of the antenna port table for the PDSCH in the case in which DMRS type = enhanced type 2 and DMRS maximum length = 1.
[FIG. 12] FIGS. 12A and 12B illustrate a variation of the antenna port table for the PDSCH in the case in which DMRS type = enhanced type 2 and DMRS maximum length = 1.
[FIG. 13] FIG. 13 illustrates an example of the antenna port table for the PDSCH in a case in which DMRS type = enhanced type 2 and DMRS maximum length = 2.
[FIG. 14] FIG. 14 illustrates an example of the antenna port table for the PDSCH in the case in which DMRS type = enhanced type 2 and DMRS maximum length = 2.
[FIG. 15] FIG. 15 illustrates an example of the antenna port table for the PDSCH in the case in which DMRS type = enhanced type 2 and DMRS maximum length = 2.
[FIG. 16] FIGS. 16A and 16B illustrate a variation of the antenna port table for the PDSCH in the case in which DMRS type = enhanced type 2 and DMRS maximum length = 2.
[FIG. 17] FIGS. 17A to 17D illustrate an example of the antenna port table for the PUSCH in a case in which DMRS type = enhanced type 1 and DMRS maximum length = 1 with a rank of 1 to 4.
[FIG. 18] FIGS. 18A to 18D illustrate an example of the antenna port table for the PUSCH in a case in which DMRS type = enhanced type 1 and DMRS maximum length = 1 with the rank of 5 to 8.
[FIG. 19] FIGS. 19A and 19B illustrate an example of the antenna port table for the PUSCH in a case in which DMRS type = enhanced type 1 and DMRS maximum length = 2 with the rank of 1 and 2.
[FIG. 20] FIGS. 20A to 20C illustrate an example of the antenna port table for the PUSCH in a case in which DMRS type = enhanced type 1 and DMRS maximum length = 2 with the rank of 3 to 5.
[FIG. 21] FIGS. 21A to 21C illustrate an example of the antenna port table for the PUSCH in a case in which DMRS type = enhanced type 1 and DMRS maximum length = 2 with the rank of 6 to 8.
[FIG. 22] FIGS. 22A and 22B illustrate an example of the antenna port table for the PUSCH in a case in which DMRS type = enhanced type 2 and DMRS maximum length = 1 with the rank of 1 and 2.
[FIG. 23] FIGS. 23A and 23B illustrate an example of the antenna port table for the PUSCH in a case in which DMRS type = enhanced type 2 and DMRS maximum length = 1 with the rank of 3 and 4.
[FIG. 24] FIGS. 24A to 24D illustrate an example of the antenna port table for the PUSCH in a case in which DMRS type = enhanced type 2 and DMRS maximum length = 1 with the rank of 5 to 8.
[FIG. 25] FIG. 25 illustrates an example of the antenna port table for the PUSCH in a case in which DMRS type = enhanced type 2 and DMRS maximum length = 2 with the rank of 1.
[FIG. 26] FIG. 26 illustrates an example of the antenna port table for the PUSCH in a case in which DMRS type = enhanced type 2 and DMRS maximum length = 2 with the rank of 2.
[FIG. 27] FIGS. 27A and 27B illustrate an example of the antenna port table for the PUSCH in a case in which DMRS type = enhanced type 2 and DMRS maximum length = 2 with the rank of 3 and 4.
[FIG. 28] FIGS. 28A and 28B illustrate an example of the antenna port table for the PUSCH in a case in which DMRS type = enhanced type 2 and DMRS maximum length = 2 with the rank of 5 and 6.
[FIG. 29] FIGS. 29A and 29B illustrate an example of the antenna port table for the PUSCH in a case in which DMRS type = enhanced type 2 and DMRS maximum length = 2 with the rank of 7 and 8.
[FIG. 30] FIG. 30A illustrates an example of the antenna port table for the PDSCH in a case in which DMRS type = enhanced type 1 and DMRS maximum length = 2 with two codewords. FIG. 30B illustrates an example of the antenna

3

port table for the PDSCH in a case in which DMRS type = enhanced type 2 and DMRS maximum length = 2 with two codewords.

[FIG. 31] FIG. 31 is a diagram illustrating an example of a schematic configuration of a radio communication system according to one embodiment.

[FIG. 32] FIG. 32 is a diagram illustrating an example of a configuration of a base station according to one embodiment.

[FIG. 33] FIG. 33 is a diagram illustrating an example of a configuration of a user terminal according to one embodiment.

[FIG. 34] FIG. 34 is a diagram illustrating an example of a hardware configuration of the base station and the user terminal according to one embodiment.

[FIG. 35] FIG. 35 is a diagram illustrating an example of a vehicle according to one embodiment.

Description of Embodiments

(DMRS)

A front-loaded demodulation reference signal (DMRS) is the first DMRS (in the first symbol or a symbol near the first symbol) for faster demodulation. An additional DMRS can be configured by RRC for a high-speed mobile terminal (terminal, user terminal, User Equipment (UE)) or a high modulation and coding scheme (MCS)/rank. A frequency location of the additional DMRS is the same as that of the front-loaded DMRS.

DMRS mapping type A or B is configured for a time domain. In DMRS mapping type A, DMRS location $l\_0$ is counted by a symbol index in a slot. $l\_0$ is configured by a parameter (dmrs-TypeA-Position) in an MIB or a common serving cell configuration (ServingCellConfigCommon). DMRS location 0 (reference point l) means the first symbol of the slot or each frequency hop. In DMRS mapping type B, DMRS location $l\_0$ is counted by a symbol index in a PDSCH/PUSCH. $l\_0$ is always 0. DMRS location 0 (reference point l) means the first symbol of the PDSCH/PUSCH or each frequency hop.

The DMRS location is defined by a table in a specification, and depends on duration of the PDSCH/PUSCH. The location of the additional DMRS is fixed.

(PDSCH/PUSCH) DMRS configuration type 1 or 2 is configured for a frequency domain. DMRS configuration type 1 includes a comb structure, and is applicable to both CP-OFDM (transport precoding=disabled) and DFT-S-OFDM (transport precoding=enabled). DMRS configuration type 2 is applicable to only CP-OFDM.

A single-symbol DMRS or a double-symbol DMRS is configured.

The single-symbol DMRS is normally used (is mandatory in Rel. 15). In the single-symbol DMRS, the number of additional DMRSs (symbols) is {0, 1, 2, 3}. The single-symbol DMRS supports both a case of enabled frequency hopping and a case of disabled frequency hopping. The single-symbol DMRS is used if a maximum number (maxLength) in uplink DMRS configuration (DMRS-UplinkConfig) is not configured.

The double-symbol DMRS is used for more DMRS ports (especially Multi User Multi Input Multi Output (MU-MIMO)). In the double-symbol DMRS, the number of additional DMRSs (symbols) is {0, 1}. The double-symbol DMRS supports a case of disabled frequency hopping. If the maximum number (maxLength) in the uplink DMRS configuration (DMRS-UplinkConfig) is 2 (len2), which of the single-symbol DMRS or the double-symbol DMRS is to be used is determined by DCI or a configured grant.

Thus, as possible DMRS configuration patterns, the following combinations are conceivable.

- DMRS configuration type 1, DMRS mapping type A, single-symbol DMRS
- DMRS configuration type 1, DMRS mapping type A, double-symbol DMRS
- DMRS configuration type 1, DMRS mapping type B, single-symbol DMRS
- DMRS configuration type 1, DMRS mapping type B, double-symbol DMRS
- DMRS configuration type 2, DMRS mapping type A, single-symbol DMRS
- DMRS configuration type 2, DMRS mapping type A, double-symbol DMRS
- DMRS configuration type 2, DMRS mapping type B, single-symbol DMRS
- DMRS configuration type 2, DMRS mapping type B, double-symbol DMRS

A plurality of DMRS ports mapped to the same resource element (RE, time and frequency resources) is referred to as a DMRS code division multiplexing (CDM) group.

For DMRS configuration type 1 and the single-symbol DMRS, four DMRS ports can be used. In each DMRS CDM group, two DMRS ports are multiplexed by an FD OCC (Frequency Domain OCC) having a length of 2. In a plurality of DMRS CDM groups (two DMRS CDM groups), two DMRS ports are multiplexed by frequency division multiplexing (FDM).

For DMRS configuration type 1 and the double-symbol DMRS, eight DMRS ports can be used. In each DMRS CDM group, two DMRS ports are multiplexed by an FD OCC having a length of 2, and two DMRS ports are multiplexed by a TD OCC (Time Domain OCC). In a plurality of DMRS CDM groups (two DMRS CDM groups), two DMRS ports are multiplexed by FDM.

For DMRS configuration type 2 and the single-symbol DMRS, six DMRS ports can be used. In each DMRS CDM group, two DMRS ports are multiplexed by an FD OCC having a length of 2. In a plurality of DMRS CDM groups (three DMRS CDM groups), three DMRS ports are multiplexed by FDM.

For DMRS configuration type 2 and the double-symbol DMRS, twelve DMRS ports can be used. In each DMRS CDM group, two DMRS ports are multiplexed by an FD OCC having a length of 2, and two DMRS ports are multiplexed by a TD OCC. In a plurality of DMRS CDM groups (three DMRS CDM groups), three DMRS ports are multiplexed by FDM.

An example of DMRS mapping type B is described here, but the same applies to DMRS mapping type A.

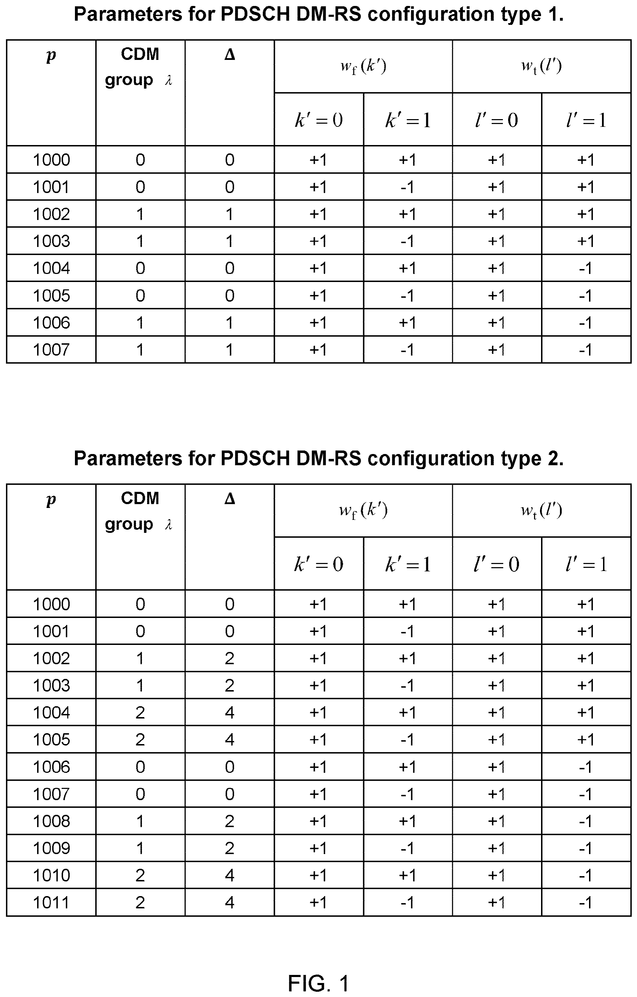

In parameters for a PDSCH DMRS (existing table, existing DMRS port table, FIG. 1), DMRS ports 1000 to 1007 and DMRS ports 1000 to 1011 can be used for DMRS configuration type 1 and DMRS configuration type 2, respectively.

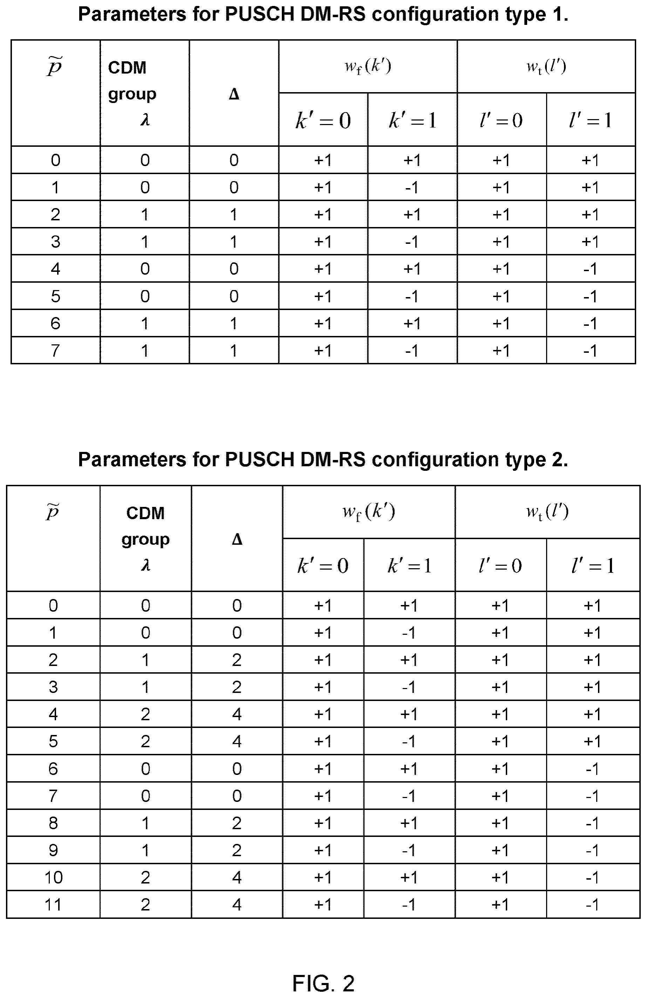

In parameters for a PUSCH DMRS (existing table, existing DMRS port table, FIG. 2), DMRS ports 0 to 7 and DMRS ports 0 to 11 can be used for DMRS configuration type 1 and DMRS configuration type 2, respectively.

(Reference Signal Port)

For orthogonalization of a MIMO layer, and the like, reference signals (for example, demodulation reference signals (DMRSs), CSI-RSs) with a plurality of ports are used.

For example, for single user MIMO (SU-MIMO), different DMRS ports / CSI-RS ports may be configured for each layer. For multi user MIMO (MU-MIMO), different DMRS ports / CSI-RS ports may be configured for each layer in one UE and for each UE.

Note that it is expected that using the number of CSI-RS ports greater than the number of layers used for data enables more accurate channel state measurement based on this CSI-RS, thereby contributing to throughput enhancement.

In Rel-15 NR, for DMRSs with a plurality of ports, up to 8 ports and up to 12 ports are supported in a case of type 1 DMRSs (in other words, DMRS configuration type 1) and a case of type 2 DMRSs (in other words, DMRS configuration type 2), respectively, by using frequency division multiplexing (FDM), a frequency domain orthogonal cover code (FD-OCC), a time domain OCC (TD-OCC), and the like.

In Rel-15 NR, as the above-described FDM, a comb-shaped transmission frequency pattern (comb-shaped resource set) is used. As the above-described FD-OCC, a cyclic shift (CS) is used. The above-described TD-OCC can be applied only to the double-symbol DMRS.

An OCC in the present disclosure may be interchangeably interpreted as an orthogonal code, orthogonalization, a cyclic shift, and the like.

Note that a DMRS type may be referred to as a DMRS configuration type.

A DMRS to which resource mapping in units of two consecutive (adjacent) symbols is applied, from among DMRSs, may be referred to as a double-symbol DMRS, and a DMRS to which resource mapping in units of one symbol is applied, from among DMRSs, may be referred to as a single-symbol DMRS.

Both of the DMRSs may be mapped to one or more symbols per slot, depending on a length of a data channel. A DMRS mapped to a start location of a data symbol may be referred to as a front-loaded DMRS, and a DMRS additionally mapped to a location other than the location may be referred to as an additional DMRS.

In a case of DMRS configuration type 1 and a single-symbol DMRS, a Comb and a CS may be used for orthogonalization. For example, up to four antenna ports (APs) may be supported by using two types of Comb and two types of CS (Comb2+2CS).

In a case of DMRS configuration type 1 and a double-symbol DMRS, a Comb, a CS, and a TD-OCC may be used for orthogonalization. For example, up to eight APs may be supported by using two types of Comb, two types of CS, and a TD-OCC ({1, 1} and {1, -1}).

In a case of DMRS configuration type 2 and a single-symbol DMRS, an FD-OCC may be used for orthogonalization. For example, up to six APs may be supported by applying an orthogonal code (2-FD-OCC) to two resource elements (REs) adjacent to each other in a frequency direction.

In a case of DMRS configuration type 2 and a double-symbol DMRS, an FD-OCC and a TD-OCC may be used for orthogonalization. For example, up to 12 APs may be supported by applying an orthogonal code (2-FD-OCC) to 2 REs adjacent to each other in a frequency direction and applying a TD-OCC ({1, 1} and {1, -1}) to 2 REs adjacent to each other in a time direction.

In Rel-15 NR, for CSI-RSs with a plurality of ports, up to 32 ports are supported by using FDM, time division multiplexing (TDM), a frequency domain OCC, a time domain OCC, and the like. The same method as that for the above-described DMRS may also be applied to orthogonalization of the CSI-RS.

Incidentally, a DMRS port group orthogonalized by such an FD-OCC/TD-OCC as that described above is also referred to as a code division multiplexing (CDM) group.

Different CDM groups are FDMed, and thus are orthogonal to each other. On the other hand, there is a case where in the same CDM group, orthogonality of an applied OCC collapses due to channel variation or the like. In this case, receiving signals in the same CDM group with different received powers may cause the near-far problem, thereby preventing orthogonality from being assured.

Here, a TD-OCC/FD-OCC for a DMRS of Rel-15 NR will be described. A DMRS mapped to a resource element (RE) may correspond to a sequence obtained by multiplying a DMRS sequence by a parameter (which may be referred to as a sequence element or the like) $w_f(k')$ for an FD-OCC and a parameter (which may be referred to as a sequence element or the like) $w_t(l')$ for a TD-OCC.

Both of the TD-OCC and FD-OCC for the DMRS of Rel-15 NR correspond to an OCC of a sequence length (which may be referred to as an OCC length) = 2. For example, Rel-15 Type1/Type2 DMRS port (for example, rel. 15 Type1/Type2 DMRS ports) may be defined as DMRS ports with an FD-OCC length of 2 (for example, DMRS ports with FD-OCC length = 2).

Thus, possible values of each of k' and l' described above are 0 and 1. Multiplying this FD-OCC in units of an RE enables DMRSs with two ports to be multiplexed by using the same time and frequency resources (2 REs). Applying both of these FD-OCC and TD-OCC enables DMRSs with four ports to be multiplexed by using the same time and frequency resources (4 REs).

The two existing DMRS port tables for PDSCH (association between antenna port numbers and parameters) described above correspond to respective DMRS configuration types 1 and 2. Note that p and $\Delta$ indicate an antenna port number and a parameter for shifting (offsetting) a frequency resource, respectively.

For example, $\{w_f(0), w_f(1)\} = \{+1, +1\}$ and $\{w_f(0), w_f(1)\} = \{+1, -1\}$ are applied to antenna ports 1000 and 1001, respectively, thereby orthogonalizing the antenna ports by using an FD-OCC.

$\Delta$ of different values are applied to antenna ports 1000 to 1001 and antenna ports 1002 to 1003 (and antenna ports 1004 to 1005 in a case of type 2), thereby applying FDM to the antenna ports. Accordingly, antenna ports 1000 to 1003 (or 1000 to 1005) corresponding to a single-symbol DMRS are orthogonalized by using an FD-OCC and FDM.

$\{w_t(0), w_t(1)\} = \{+1, +1\}$ and $\{w_t(0), w_t(1)\} = \{+1, -1\}$ are applied to antenna ports 1000 to 1003 and antenna ports 1004 to 1007 of type 1, respectively, thereby orthogonalizing the antenna ports by using a TD-OCC. Accordingly, antenna ports 1000 to 1007 (or 1000 to 1011) corresponding to a double-symbol DMRS are orthogonalized by using an FD-OCC, a TD-OCC, and FDM.

For only CP-OFDM, it is studied that a larger number of orthogonal DMRS ports for DL/UL MU-MIMO is defined (without increasing DMRS overhead), that a common design is applied to DL and UL DMRSs, that up to 24 orthogonal DMRS ports are applied, and that for each applicable DMRS configuration type, a maximum number of orthogonal DMRS ports is doubled for both a single-symbol DMRS and a double-symbol DMRS.

In Rel. 15, Cases 1 to 4 below can be configured.

{Case 1} Single-symbol DMRS of DMRS configuration type 1 A total number of DMRS ports is 2 (with comb/FDM) x 2 (with FD OCC) = 4 ports.

{Case 2} Double-symbol DMRS of DMRS configuration type 1 A total number of DMRS ports is 2 (with comb/FDM) x 2 (with FD OCC) x 2 (with TD OCC) = 8 ports.

{Case 3} Single-symbol DMRS of DMRS configuration type 2 A total number of DMRS ports is 3 (with FDM) x 2 (with FD OCC) = 6 ports.

{Case 4} Double-symbol DMRS of DMRS configuration type 2 A total number of DMRS ports is 3 (with comb) x 2 (with FD OCC) x 2 (with TD OCC) = 12 ports.

For Rel. 18, it is studied that the total numbers of DMRS ports are doubled to 8, 16, 12, and 24 for Cases 1, 2, 3, and 4, respectively.

For the increased numbers of DMRS ports, the following five options (methods for increasing the number of DMRS ports) are under study.

<Option 1>

- Introduction of a new OCC having a length (for example, 4 or 6) greater than that of an existing OCC.

In Option 1, items to be studied include a possibility of performance degradation, a possibility of scheduling restriction, backward compatibility, and the like in a case of a large delay spread.

<Option 2>

- Use of a TD-OCC over a plurality of non-consecutive DMRS symbols (for example, a TD-OCC over a front-loaded DMRS / additional DMRS).

In Option 2, items to be studied include a possibility of performance degradation, a possibility of scheduling restriction (for example, a method for applying frequency hopping), a possibility of a limited DMRS configuration (for example, the number of additional DMRSs is limited), backward compatibility, and the like in a case of a high UE speed.

<Option 3>

- Increasing the number of CDM groups (for example, increasing the number of combs / times of FDM).

In Option 3, items to be studied include a possibility of performance degradation, backward compatibility, and the like in a case of a large delay spread.

<Option 4>

- Increasing the number of orthogonal DMRS ports by reusing additional DMRS symbols.

In Option 4, items to be studied include a possibility of performance degradation, a possibility of a limited DMRS configuration (for example, the number of additional DMRSs is limited), backward compatibility, and the like in a case of a high UE speed.

<Option 5>

- Use of the TD-OCC on the plurality of DMRS symbols that are discontinuous in combination with the FD-OCC/FDM (reuse of the symbol of the additional DMRS to improve a channel estimation performance).

For option 5, the items to be studied include the possibility of performance degradation when the UE speed is high, the possibility of the scheduling restriction (for example, the application method of the frequency hopping), the possibility of the DMRS configuration being restricted (for example, the number of the additional DMRSs is restricted) and the backward compatibility.

Option 1/3 may be supported. In addition to that, the TD OCC may be supported. The difference between options 2 and 5 may be whether to support semi-static switching based on the RRC or to support dynamic switching based on the DCI between the FD-OCC and the TD-OCC.

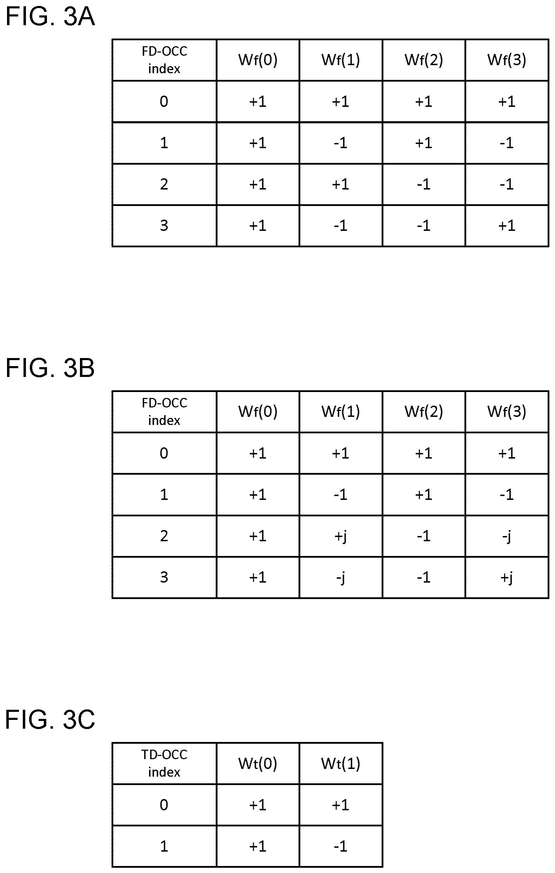

In option 5 of the increase method of the number of DMRS ports described above, as in the examples in FIG. 3, a new FD-OCC with a length of four may be applied, a new TD-OCC with a length of two may be applied to the plurality of DMRS symbols that are discontinuous, and the number of the DMRS ports in one CDM group may be four. In this case, a receiving side can separate the signals by decoding either the FD-OCC or the TD-OCC, which is an advantage compared to option 1/3. For example, in a case in which the use of the TD-OCC causes problems such as a characteristic (orthogonality) degrading when traveling at high speeds and a PDSCH decoding being delayed due to the need to receive an additional DMRS symbol since a channel estimation cannot be started even if only a front-loaded DMRS symbol is received, the receiving side can use only the FD-OCC for decoding. For example, in a case in which the use of the FD-OCC causes problems such as the characteristic (orthogonality) degrading when the delay spread is large, the receiving side can use only the TD-OCC for decoding.

In option 5 for increasing the number of the DMRS ports described above, a new FD-OCC with a length of six may be applied, and a new TD-OCC with a length of two may be applied to the plurality of DMRS symbols that are discontinuous.

In this way, in Rel. 18 and later versions, the new FD-OCC with a length longer than two is supported. The DMRS port for type 1/type 2 for Rel. 18 and later versions may be referred to, for example, as an Rel-18 enhanced type 1/enhanced type 2 DMRS port. Enhanced type 1/enhanced type 2 may be referred to as eType1/eType2.

For example, an Rel-18 eType1/eType2 DMRS port may be defined with the DMRS port with an FD-OCC length more than two (for example, DMRS ports with FD-OCC length > 2). For example, it may be the case that the FD-OCC length of the Rel-18 eType1/eType2 DMRS port = 4.

Note that a type 1/type 2 DMRS port with FD-OCC length = 2 defined from Rel. 15 may be referred to as the Rel-15 type 1/type 2 DMRS port.

It may be the case that for the Rel-18 eType1 DMRS port, port index p = #1000 to 1015. For example, for the DMRS port with new FD-OCC #0 and 1, the same DMRS port index as an Rel-15 DMRS port (DMRS ports #1000 to #1007) may be used. For the DMRS port with new FD-OCC #2 and 3, a different DMRS port index from the Rel-15 DMRS port (DMRS ports #1008 to #1015) may be used.

It may be the case that for the Rel-18 eType2 DMRS port, port index p = #1000 to 1023. For the DMRS port with new FD-OCC #0 and 1, the same DMRS port index as the Rel-15 DMRS port (DMRS ports #1000 to #1011) may be used. For the DMRS port with new FD-OCC #2 and 3, a different DMRS port index from the Rel-15 DMRS port (DMRS ports #1012 to #1023) may be used.

(New OCC for the DMRS of the PDSCH/PUSCH)

In Rel. 18, the FD-OCC with a length of four and the TD-OCC with a length of two are supported as a new OCC for the DMRS of the PDSCH/PUSCH (enhanced type 1/enhanced type 2 DMRS). FIGS. 3A to 3C are tables illustrating an example of the new OCC that can be applied. The FD-OCC and the TD-OCC may be referred to simply as the OCC.

As shown in FIG. 3A, the FD-OCC with a length of four based on a Walsh matrix (series) of four rows and four columns may be specified. In FIG. 3A, four series are obtained for FD-OCC indices i = {0, 1, 2, 3}. The Walsh matrix may be read interchangeably with a Hadamard code (for example, Hadamard code). The OCC based on the Walsh matrix (series) is useful for a DL reception (for example, a reception of the PDSCH).

As shown in FIG. 3B, the OCC with a length of four based on the cyclic shift may be specified. In FIG. 3B, for FD-OCC indices i = {0, 1, 2, 3}, four series are obtained by using the cyclic shifts {i·0, i·π, i·π/2, i·3π/2}. The OCC based on the cyclic shift is useful for a UL transmission (for example, a transmission of the PUSCH).

As shown in FIG. 3C, the TD-OCC with a length of two may be specified. In FIG. 3C, two series are obtained for TD-OCC indices i = {0, 1}.

In association with the OCC shown in FIG. 3, a table for the enhanced type 1/enhanced type 2 DMRS (association of the port index, a CDM group index and a new OCC index) may be specified. The port index of the PDSCH may be indicated by a no. resulting from the addition of 1000 to the port index of the PUSCH.

The new FD-OCC may be any of the OCCs described above.

In FIG. 3A and FIG. 3B, each of a first half and a second half of OCC #0 and #1 with a length of four (the OCCs corresponding to OCC indices 0 and 1) is, for example, the same as OCC #0 and #1 with a length of two shown in FIG. 3C (the OCCs corresponding to OCC indices 0 and 1).

In the present disclosure, the OCC (FD-OCC/TD-OCC) corresponding to OCC index i may be referred to as OCC #i.

Some of a plurality of series of the new FD-OCC may be associated with an Rel-15 DMRS port index.

In a case in which the FD-OCC with a length of two is used, an Rel-15 DMRS port table for DMRS configuration type 1 and the Rel-15 DMRS port table for DMRS configuration type 2 may be used.

Enhanced DMRS configuration type 1 (DMRS enhanced type 1, DMRS enhanced type = 1, DMRS eType 1) uses a frequency domain arrangement of DMRS configuration type 1 (DMRS type 1, DMRS type = 1, DMRS Type 1) and the new FD-OCC. Enhanced DMRS configuration type 2 (DMRS enhanced type 2, DMRS enhanced type = 2, DMRS eType 2) uses the frequency domain arrangement of DMRS configuration type 2 (DMRS type 2, DMRS type = 2, DMRS Type 2) and the new FD-OCC.

In the present disclosure, DMRS configuration type 1, DMRS type 1, DMRS type = 1 and DMRS Type 1 may be read interchangeably with one another. In the present disclosure, DMRS configuration type 2, DMRS type 2, DMRS type = 2 and DMRS Type 2 may be read interchangeably with one another. In the present disclosure, enhanced DMRS configuration type 1, DMRS enhanced type 1, DMRS enhanced type = 1 and DMRS eType 1 may be read interchangeably with one another. In the present disclosure, enhanced DMRS configuration type 2, DMRS enhanced type 2, DMRS enhanced type = 2 and DMRS eType 2 may be read interchangeably with one another.

In the present disclosure, DMRS maximum length and maxLength may be read interchangeably with each other.

In the present disclosure, existing FD-OCC, FD-OCC with a length of two, Rel-15 FD-OCC and $w_f(k')$ may be read interchangeably with one another. In each of the embodiments, new FD-OCC, FD-OCC with a length longer than two, Rel-18 FD-OCC and $w_f(k')$ may be read interchangeably with one another.

(CDM group)

As described above, the plurality of DMRS ports that are mapped to the same RE (the resource of the time and the frequency) are referred to as the DMRS CDM group.

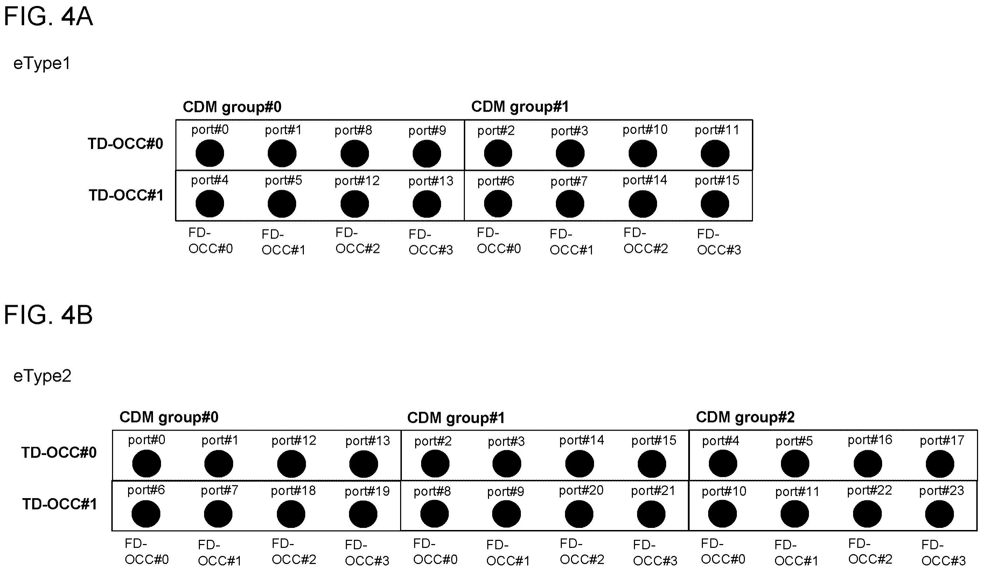

FIG. 4A is a diagram illustrating an example of an association of the CDM groups, the DMRS ports and the OCCs in enhanced type 1. FIG. 4B is a diagram illustrating an example of the association of the CDM groups, the DMRS ports and the OCCs in enhanced type 2. The DMRS ports in FIG. 4A and FIG. 4B may be referred to as an enhanced DMRS port. Note that FIG. 4A and FIG. 4B can be applied to both the single-symbol DMRS and the double-symbol DMRS.

As shown in FIG. 4A, eight DMRS ports (ports #0 to 3 and 8 to 11) can be used for DMRS configuration enhanced type 1 and the single-symbol DMRS. In each of the DMRS CDM groups (CDM groups #0 and 1), four DMRS ports (ports #0 and 1, and 8 and 9, and ports #2 and 3, and 10 and 11) are multiplexed by the FD OCCs (FD-OCCs #0 to 3) with a length of four. Two DMRS ports are multiplexed by the FDM between the plurality of DMRS CDM groups (two DMRS CDM groups (CDM groups #0 and 1)).

As shown in FIG. 4A, in the case of DMRS configuration enhanced type 1 and the double-symbol DMRS, eight more DMRS ports (ports #4 to 7 and 12 to 15) can also be used. In each of the DMRS CDM groups (CDM groups #0 and 1), four DMRS ports (ports #4 and 5, and 12 and 13, and ports #6 and 7, and 14 and 15) are multiplexed by the FD OCCs (FD-OCCs #0 to 3) with a length of four. Two DMRS ports are multiplexed by the FDM between the plurality of DMRS CDM groups (two DMRS CDM groups (CDM groups #0 and 1)). In addition, two DMRS ports in the time direction are multiplexed by the TD OCCs (TD-OCCs #0 and 1) with a length of two. In other words, a plurality of (two) CDM groups that include the same index are multiplexed by the TDM.

In enhanced type 1 shown in FIG. 4A, the DMRS ports corresponding to CDM group #0 are {ports #0, 1, 8 and 9} and {ports #4, 5, 12 and 13}, and the DMRS ports corresponding to CDM group #1 are {ports #2, 3, 10 and 11} and {ports #6, 7, 14 and 15}.

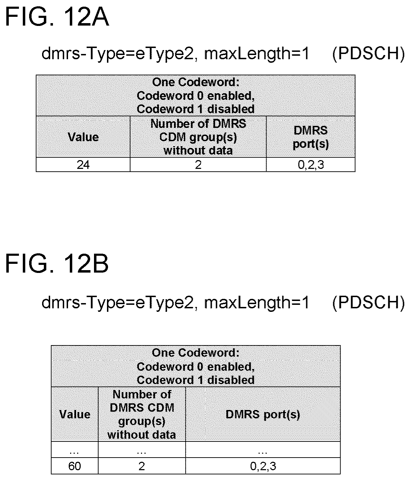

As shown in FIG. 4B, 12 DMRS ports (ports #0 to 5 and 12 to 17) can be used for DMRS configuration enhanced type 2 and the single-symbol DMRS. In each of the DMRS CDM groups (CDM groups #0 to 2), four DMRS ports (ports #0 and 1, and 12 and 13, ports #2 and 3, and 14 and 15, and ports #4 and 5, and 16 and 17) are multiplexed by the FD OCCs (FD-OCCs #0 to 3) with a length of four. Three DMRS ports are multiplexed by the FDM between the plurality of DMRS CDM groups (three DMRS CDM groups (CDM groups #0 to 2)).

As shown in FIG. 4B, in the case of DMRS configuration enhanced type 2 and the double-symbol DMRS, 12 more DMRS ports (ports #6 to 11 and 18 to 23) can also be used. In each of the DMRS CDM groups (CDM groups #0 to 2), four DMRS ports (ports #6 and 7, and 18 and 19, ports #8 and 9, and 20 and 21, and ports #10 and 11, and 22 and 23) are multiplexed by the FD OCCs (FD-OCCs #0 to 3) with a length of four. Three DMRS ports are multiplexed by the FDM between the plurality of DMRS CDM groups (three DMRS CDM groups (CDM groups #0 to 2)). In addition, two DMRS ports in the time direction are multiplexed by the TD OCCs (TD-OCCs #0 and 1) with a length of two. In other words, the plurality of (two) CDM groups that include the same index are multiplexed by the TDM.

In enhanced type 2 shown in FIG. 4B, the DMRS ports corresponding to CDM group #0 are {ports #0, 1, 12 and 13} and {ports #6, 7, 18 and 19}, the DMRS ports corresponding to CDM group #1 are {ports #2, 3, 14 and 15} and {ports #8, 9, 20 and 21}, and the DMRS ports corresponding to CDM group #2 are {ports #4, 5, 16 and 17} and {ports #10, 11, 22 and 23}.

(DMRS port combination)

For an antenna port indication of the enhanced type 1/extended type 2 DMRS port with DMRS maximum length = 1/2 for the PDSCH, all of the following several categories of port combinations are under study to be able to be indicated.

(Category 1) A combination of a plurality of indices of existing ports (p = 0 to 7 for enhanced type 1 and p = 0 to 11 for enhanced type 2).
(Category 2) The combination of the plurality of indices of new ports (p = 8 to 15 for enhanced type 1 and p = 12 to 23 for enhanced type 2).
(Category 3) The combination of an existing port index and a new port index in one CDM group with at least DMRS maximum length = 1 (for enhanced type 1, at least one combination of up to four ports from p = {0, 1, 8, 9} and up to four ports from p = {2, 3, 10, 11}, and for enhanced type 2, at least one combination of up to four ports from p = {0, 1, 12, 13} and up to four ports from p = {2, 3, 14, 15}). For up to four ranks, only one CDM group is used. For more than four ranks, more than one CDM group can be used.

The DMRS port for the PDSCH is determined by p + 1000.

For the enhanced type 1/enhanced type 2 DMRS port for the PDSCH/PUSCH, DMRS maximum length = 1 and rank = 5, 6, 7, 8 are under study to be supported.

(MU-MIMO scheduling restriction)

For the MU-MIMO, a plurality of DMRSs for a plurality of UEs are multiplexed. The plurality of DMRSs may be CDMed using different OCCs in one CDM group, or FDMed using different subcarriers (Comb) between the plurality of CDM groups. In a CDM, a problem due to a difference in distance from a base station to the plurality of UEs (problem of distance) arises. While in a flat fading environment, using the FD-OCC does not cause an inter-symbol interference, in a frequency-selective fading environment, using the FD-OCC causes the inter-symbol interference, resulting in a degradation of quality. To prevent this, the MU-MIMO scheduling restriction (an existing MU-MIMO scheduling restriction) is specified.

Note that, similarly, while in an environment in which there is no fluctuation in the channel state in a time domain (static state), using the TD-OCC does not cause the inter-symbol interference, in an environment in which there is fluctuation in the channel state in the time domain (traveling state), using the TD-OCC causes the inter-symbol interference, resulting in a degradation of quality.

For the PDSCH using DMRS configuration type 1, the following MU-MIMO scheduling restriction is specified.

- In DMRS configuration type 1, if the UE is scheduled with one codeword (CW) and is assigned an antenna port mapping with indices {2, 9, 10, 11, 30} in an existing antenna port table for DMRS configuration type 1, or if the UE is scheduled with two CWs, the UE may assume that the remaining antenna ports that are orthogonal are not associated with the transmission of the PDSCH to another UE.

For a case in which number 1 and rank 1 (one DMRS port) of the DMRS CDM group without data is indicated, there may be no restriction in the same CDM group (one DMRS port of another UE may be CDMed to the DMRS port of the UE). For a case in which number 1 and rank 2 (two DMRS ports) of the DMRS CDM group without data are indicated, since all DMRS ports in the same CDM group are indicated, in the same CDM group, the DMRS port of another UE cannot be CDMed to the DMRS port of the UE. For a case in which number 2 and rank 3 (three DMRS ports) of the DMRS CDM group without data are indicated, since three DMRS ports out of four DMRS ports in two CDM groups are indicated, one DMRS port is vacant, to which one DMRS port of another UE cannot be CDMed. For a case in which number 2 and rank 4 (four DMRS ports) of the DMRS CDM group without data are indicated, since all DMRS ports in the same CDM group are indicated, in the same CDM group, the DMRS port of another UE cannot be CDMed to the DMRS port of the UE.

If the UE is configured with an Rel-18 DMRS port, the UE may follow at least one of the following several restrictions.

- Restriction 1

The existing MU-MIMO scheduling restriction is applied. This means that many DMRS ports are not used by another UE. For example, if a category 1/2 DMRS port combination is used for more than four ranks or a 2CW, a vacant port is not used by another UE.

- Restriction 2

The MU-MIMO scheduling restriction is updated. The UE may follow at least one of the following several restrictions.

-- Restriction 2-1

There is no existing MU-MIMO scheduling restriction. There may be no MU-MIMO scheduling restriction for the Rel-18 DMRS port.

-- Restriction 2-2

Several new MU-MIMO scheduling restrictions are introduced.

-- Restriction 2-3

There is no MU-MIMO scheduling restriction across the plurality of CDM groups that are different, and the new MU-MIMO scheduling restriction in one CDM group is introduced.

The MU-MIMO scheduling restriction in restriction 1 may be that if the DMRS port combination using two CDM groups #0 and #1 is indicated in enhanced type 2, the DMRS port in another CDM group #2 cannot be applied to another UE.

The MU-MIMO scheduling restriction in restriction 2-3 is that if the DMRS port combination using two CDM groups #0 and #1 is indicated in enhanced type 2, the DMRS port in another CDM group #2 may be able to be assigned to another UE.

(Analysis)

By the way, if the Rel-18 DMRS port is used, the schedule of the PUSCH/PDSCH for one/two codewords (CWs) is expected to be controlled. However, the antenna port table, and the like to be referenced in such a case have not been sufficiently studied. If these are not clearly specified, the communication throughput/communication quality may not be preferably improved.

Therefore, the inventors of the present invention came up with the idea of a control method for a case in which the Rel-18 DMRS port is specified.

Embodiments according to the present disclosure will be described in detail with reference to the drawings as follows. Note that the embodiments (for example, respective cases) to be described below may each be used individually, or at least two of the embodiments may be employed in combination.

(Various Interpretation etc.)

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

Note that, a CORESET pool and a CORESET pool index may be interchangeably interpreted.

In the present disclosure, description "Rel. XX" represents 3GPP release. Note, however, that the release number "XX " is an example, and may be replaced with another number.

In the present disclosure, a DMRS, a DL DMRS, a UL DMRS, a PDSCH DMRS and a PUSCH DMRS may be interchangeably interpreted.

In the present disclosure, an RE, an RB, and a PRB may be interchangeably interpreted.

In the present disclosure, an orthogonal sequence, an OCC, an FD OCC, and a TD OCC may be interchangeably interpreted.

In the present disclosure, a DMRS port, an antenna port, a port, and a DMRS port index may be interchangeably interpreted. In the present disclosure, DMRS CDM group(s), CDM group(s), DMRS group(s), DMRS CDM group(s) without data, and the like may be interchangeably interpreted. In the present disclosure, antenna port indication and an antenna port field may be interchangeably interpreted. In the present disclosure, a DMRS configuration type, a DMRS type, and an RRC parameter "dmrs-Type" may be interchangeably interpreted. In the present disclosure, a maximum DMRS length, a maximum number of DMRS symbols, the number of DMRS symbols, and an RRC parameter "maxLength" may be interchangeably interpreted.

In the present disclosure, DMRS type1 (or DMRS type = 1) may mean that an RRC parameter "dmrs-Type" is not configured (for example, an RRC parameter "dmrs-Type" is absent in a DMRS configuration (DMRS-DownlinkConfig information element / DMRS-UplinkConfig information element), or may mean that "1" (or type 1 (type1)) is configured as an RRC parameter related to a DMRS type.

In the present disclosure, a maximum DMRS length = 1 may mean that an RRC parameter "maxLength" is not configured (for example, an RRC parameter "maxLength" is absent in a DMRS configuration (DMRS-DownlinkConfig information element / DMRS-UplinkConfig information element), or may mean that "1" (or a length of 1 (len1)) is configured as an RRC parameter related to a maximum DMRS length.

In the present disclosure, a CDM group list, a port group list, and a list may be interchangeably interpreted. In the present disclosure, a CDM group subset, a port group subset, and a group subset may be interchangeably interpreted.

In the present disclosure, a rank, a transmission rank, the number of layers, and the number of antenna ports may be interchangeably interpreted. One codeword being applied and the number of layers being 4 layers or less may be interchangeably interpreted. Two codewords being applied and the number of layers being greater than 4 layers may be interchangeably interpreted.

In the present disclosure, "transform precoding being configured" may be interchangeably interpreted as "transform precoding being configured to be enabled."

Note that, in the present disclosure, "having capability of ..." may be interchangeably interpreted as "supporting/reporting capability of ...."

In the present disclosure, a table and one or a plurality of tables may be interchangeably interpreted.

In the present disclosure, STxMP, SiMPUL, simultaneous transmission using multi-panels, multi-panel simultaneous transmission and multi-panel simultaneous UL transmission may be read interchangeably with one another. STxMP may also mean that a plurality of joints/UL TCI states, the spatial relation and the beam are indicated/configured for one PUSCH/PUCCH/SRS. In the present disclosure, to support and to be configured/indicated may be read interchangeably with each other. In the present disclosure, transmission power and output power may be read interchangeably with each other. In the present disclosure, a determination by the UE and a configuration/an indication by a network (the base station/gNB) may be read interchangeably with each other.

In the present disclosure, UL panel, UE panel, (same) antenna coherent group, UL/joint TCI, spatial relation, PL-RS and (same) destination TRP may be read interchangeably with one another.

In the present disclosure, 8Tx and UL transmission with more than four layers/ranks may be read interchangeably with each other.

In the present disclosure, Rel-15 DMRS port, Rel-15 type 1/2 DMRS port and existing DMRS port may be read interchangeably with one another. In the present disclosure, Rel-18 DMRS port, Rel-18 enhanced type 1/2 DMRS port and new DMRS port may be read interchangeably with one another. Note that the Rel-18 DMRS port may correspond to the DMRS port with a total number of ports specified at least twice (for example, twice, three times, four times, ...) as many as the Rel-15 DMRS port.

In the present disclosure, the DMRS in a case in which the use of the Rel-15 DMRS port is configured or the use of the Rel-18 DMRS port is not configured (not enabled) may be referred to as the Rel-15 DMRS. In the present disclosure, the DMRS in a case in which the use of the Rel-18 DMRS port is configured (enabled) may be referred to as the Rel-18 DMRS. The DMRS for type 1/2 out of the Rel-15 DMRS may be referred to as an Rel-15 type 1/2 DMRS or simply a type 1/2 DMRS, or the like. The DMRS for enhanced type 1/2 out of the Rel-18 DMRS may be referred to as an Rel-18 enhanced type 1/2 DMRS or simply an enhanced type 1/2 DMRS, or the like.

In the present disclosure, Rel-15 DMRS configuration type, DMRS configuration type and type may be read interchangeably with one another. Rel-18 DMRS configuration type, enhanced DMRS configuration type, enhanced type and eType may be read interchangeably with one another.

In the present disclosure, antenna port table and antenna port indication table may be read interchangeably with each other. In the present disclosure, DMRS port combination, combination of DMRS ports and one or more DMRS ports corresponding to one value of antenna port field may be read interchangeably with one another.

In each of the embodiments, Rel-18 DMRS port being configured and DMRS enhanced type 1/2 being configured may be read interchangeably with each other.

In the antenna port table of each of the embodiments, an antenna port field value, and values of the number of the DMRS CDM groups without data and the DMRS port are examples, and different values may be specified.

In a new antenna port table in a case in which the Rel-18 DMRS port is used, some or all of the DMRS port combinations in the existing antenna port table may be reused. In this case, only the DMRS port out of DMRS ports 0 to 7 may be indicated for DMRS enhanced type 1, and only the DMRS port out of DMRS ports 0 to 11 may be indicated for DMRS enhanced type 2.

Although in each of the embodiments, for an application of a plurality of TCI states for a transmission/reception using a plurality of TRPs, the method of targeting two TRPs (in other words, a case in which at least one of an N and an M is 2) is mainly described, the number of TRPs may be three or more (plural), and each of the embodiments may be applied to correspond to the number of TRPs. In other words, at least one of the N and the M may be a number larger than 2.

Each of the embodiments may be applied to the single-symbol DMRS or may be applied to the double-symbol DMRS. Each of the following embodiments may be applied to DMRS configuration type 1 or may be applied to DMRS configuration type 2.

Each of the embodiments may be applied to DMRS enhanced type 1 or may be applied to DMRS enhanced type 2. Each of the embodiments may be applied to DMRS maximum length = 1 or may be applied to DMRS maximum length = 2.

In each of the embodiments, MU-MIMO scheduling restriction and orthogonal DMRS ports that are vacant (remaining) not being used by another UE may be read interchangeably with each other.

(Radio communication method)

The DMRS port of the PDSCH may be indicated by the antenna port field in a DCI format for scheduling the PDSCH (for example, DCI format 1_1/1_2).

The DMRS port of the PUSCH may be indicated by the antenna port field in the DCI format for scheduling the PUSCH (for example, DCI format 0_1/0_2).

The UE may reference a new antenna port table, which may also be referred to as the antenna port table, the antenna port indication table, or the like, to determine the antenna port that corresponds to a value of the antenna port field described above.

Note that the UE using the Rel-15 DMRS port may mean using (being able to use) an antenna port index p with p = #0 to 7 for type 1 and p = #0 to 11 for type 2. The UE using the Rel-18 DMRS port may mean using (being able to use) the antenna port index p with p = #0 to 15 (or #8 to 15) for type 1 and p = #0 to 23 (or #12 to 23) for type 2.

Note that in the present disclosure, the port index for the PDSCH/PUSCH DMRS may correspond to the no. resulting from the addition of 1000 to the no. shown as an example (for example, #1000) or may correspond to the no. shown as an example itself (for example, #0). The port index for the PDSCH/PUSCH DMRS and the port index for the PDSCH/PUSCH may correspond to the no. resulting from the addition to or subtraction from the port index for the PDSCH/PUSCH DMRS of 1000 or may be the same as the port index for the PDSCH/PUSCH DMRS.

The new antenna port table described above may be the table for the Rel-18 enhanced type 1/2 DMRS port. The new antenna port table described above preferably includes a combination of at least one DMRS port of the following categories 1 through 3 for the maximum number, which may be referred to as the maximum length and may be given by the higher layer parameter, the maxLength, = 1 or 2, in a DCI code point (or a row entry of the table):

- Category 1: Only a legacy DMRS port (the DMRS port to be specified in Rel. 17 and earlier versions. p = #0 to 7 for eType1 and p = #0 to 11 for eType2);
- Category 2: Only the new DMRS port (the DMRS port to be additionally specified in Rel. 18 or later versions. p = #8 to 15 for eType1 and p = #12 to 23 for eType2); and
- Category 3: The legacy DMRS port and the new DMRS port in at least one CDM group.

A combination of the new DMRS ports of category 2 may be a combination resulting from the addition of an X to the port index in a combination of the DMRS ports of category 1. For example, the X may be a number equal to or larger than eight (for example, eight) for eType1 and a number equal to or larger than 12 (for example, 12) for eType2. The X described above may be specified in a standard in advance, may be configured in the UE by the higher layer signaling or may be determined based on a UE capability. Such an X may be referred to as an offset indicator (offset index) or simply an offset.

The legacy DMRS port and the new DMRS port of category 3 may, for example, correspond to the following combination:

- The number of ranks in the CDM group: three or four.
- The index of the CDM group: 0 or 1 for eType1. 0, 1 or 2 for eType2.
- The number of CDM groups without data: 1 or 2 for eType1. 1, 2 or 3 for eType2.

Note that the legacy DMRS port and the new DMRS port of category 3 may not include all of the combinations described above. For example, for the number of CDM groups without data corresponding to the legacy DMRS port and the new DMRS port of category 3, (the codepoint corresponding to) either or both 1 and 2 in the antenna port table for eType1 may be specified, or (the codepoint corresponding to) one or more of 1, 2 and 3 in the antenna port table for eType2 may be specified.

The DMRS port of category 3 may also be the legacy DMRS port and the new DMRS port with a specific rank (for example, rank 3/4) in the same CDM group.

The DMRS port of category 3 may also include the following as a combination of the legacy DMRS port and the new DMRS port in at least one CDM group:

- For eType1, p = up to four ports from {#0, 1, 8, 9} or {#2, 3, 10, 11}.
- For eType2, p = up to four ports from {#0, 1, 12, 13}, {#2, 3, 14, 15} or {#4, 5, 16, 17}.

The combination described above may be applied for at least a single TRP.

For category 3, in a case of up to rank 4, only one CDM group may be used for one UE. In a case of rank 4 or higher, the plurality of CDM groups may be used for one UE.

Although the following embodiments show an example of the antenna port table for the PDSCH DMRS, the scope of coverage of the present disclosure is not limited to this. For example, (a method for configuring) the antenna port table of the following embodiments may be read interchangeably with (the method for configuring) the antenna port table for the PUSCH DMRS.

For example, the DCI in the following embodiments may correspond to the DCI format for the PDSCH (for example, DCI format 1_1/1_2) or may correspond to the DCI format for the PUSCH (for example, DCI format 0_1/0_2).

The antenna port table for the PUSCH DMRS may include only the DMRS port for one rank, unlike the antenna port table for the PDSCH DMRS. The UE may be indicated the number of ranks (number of layers) for the PUSCH DMRS using, for example, precoding information and a layer number field.

Note that although the antenna port table in the following embodiments shows an example in which all of the category 1 through 3 DMRS port combinations described above are included in any one of the DCI code points (or row entries of the table), it is not limited to this. For example, the antenna port table that does not include at least one of the category 1, 2 and 3 DMRS port combinations may be structured/used based on the contents of the present disclosure.

In the present disclosure, the value of the antenna port field (Value) may be read interchangeably with a row index.

In the present disclosure, the single TRP may be read interchangeably with one transmission/reception point, and multi-TRPs may be read interchangeably with a plurality of transmission/reception points.

In each of the antenna port tables in the following embodiments, (1) the antenna port table for the single TRP (to indicate an operation of the single TRP) may include at least an entry except for the entry indicated by [ ]. (2) The antenna port table for the multi-TRPs (to indicate the operation of the multi-TRPs) may include, in addition to the entry of the antenna port table for the single TRP described above, the entry indicated by [ ]. The entry indicated by [ ] may be associated with the DMRS port (the antenna port corresponding to the multi-TRPs) across, for example, the CDM groups.

In other words, each of the following antenna port tables may be specified separately for each of (1) and (2) described above, or for each category. In this case, the antenna port table used may be switched in accordance with a scenario to be applied (any one of the single TRP/multi-TRPs or categories 1 through 3). Switching (the number of rows in) the antenna port table in accordance with the scenario allows the antenna port table to be flexibly and efficiently indicated. The antenna port table may also be specified as one table that combines (1) and (2) described above.

The switching of the scenarios described above may be performed based on the higher layer signaling. The switching of the scenarios may not be performed, and only the antenna port table for multi-TRPs may be used. In other words, the antenna port table for the multi-TRPs may also serve as the antenna port table for the single TRP.

The DMRS port of the PDSCH may be indicated not only by the antenna port field in the DCI format for scheduling the PDSCH (for example, DCI format 1_1/1_2) but also by another existing field, a new DCI field, or a combination of these fields and the antenna port field. In addition, a specific DMRS port may be indicated by a combination of the existing fields such as a Time Domain Resource Assignment/Allocation (TDRA) field/Frequency Domain Resource Assignment/Allocation (FDRA) field and a new indicator.

In the present disclosure, each of the antenna port table for the single TRP and the antenna port table for the multi-TRPs may be separately specified, or a common antenna port table may be specified. In any of the antenna port tables, sizes of the antenna port fields included in DCI format 1_1/1_2 may be different. In this case, the size of the antenna port field for the single TRP may be smaller than the antenna port field for the multi-TRPs. More specifically, for example, the size of the antenna port field for the single TRP may be 4 bits, and the antenna port field for the multi-TRPs may be 5 bits.

Each of the embodiments may be applied to the DMRS of the PDSCH or may be applied to the DMRS of the PUSCH. A PUSCH DMRS port index may be expressed as p, and a PDSCH DMRS port index may be expressed as p + 1000. p may be replaced by the Value in the table (the row index) according to the present disclosure. In other words, in the following tables for the PDSCH, the PDSCH DMRS port index may be represented as p + 1000 for the Value (= p) in the table. In contrast, in the table for the PUSCH, the Value (= p) in the table may directly represent the PUSCH DMRS port index.

In the following antenna port tables according to the present disclosure, a column of "Notes" is a supplemental description and may not be included in the tables (may not be specified). In the following antenna port tables according to the embodiments, not all rows may be specified for each category (some rows may be omitted), and a row (a combination) that is not shown may be specified/added.

In the antenna port tables, a correspondence between a combination of the DMRS port indices, and the number of the DMRS CDM groups without data, the row index and a corresponding entry (various values in the tables) may be different. In other words, the order of the rows may be interchanged.

If some rows are omitted/removed (not specified), the indices (the Values) of the subsequent rows may be shifted up. In the following description, more specifically, the row that includes the value bracketed by [ ] may be removed from the table. In this case, the row indices (row numbers) that are subsequent to a removed column may be moved up (shifted up) by the number of columns removed. In this way, omitting/removing some rows in the table as necessary reduces a bit size (the number of bits) required to indicate the table. As a result, a DCI overhead can be reduced. Such contents are the same in each of the following embodiments.

In the present disclosure, in the antenna port table in each of the aspects, some/all rows may be indicated in common for the table for a single DCI multi-TRPs and the other tables (may be specified as a common table) or may be specified as separate tables.

In the present disclosure, the UE may assume that the row is added in the table for a single DCI-based multi-TRPs. If the row is added, it may be added at a certain position (for example, the bottom row of the table) or may be added to an arbitrary row.

The UE may assume that such an additional row is indicated only in a case in which the single DCI-based multi-TRPs are applied. The case in which the single DCI-based multi-TRPs are applied may be a case in which two active TCI states are indicated for at least one TCI code point. Note that such an additional row may be indicated regardless of whether it is the case of the single DCI-based multi-TRPs or not.

In the table for the single DCI-based multi-TRPs, all/some of the combinations of the DMRS ports corresponding to category 3 may be omitted/removed. Removal of the DMRS port of category 3 may only be applied in a case in which the number of rows in the table is large, for example, in a case of enhanced type 11 and DMRS maximum length = 2. In the table for the single DCI-based multi-TRPs, each TRP preferably uses the DMRS port of a different CDM group. Meanwhile, there is no use case for the DMRS port of category 3 since two TRPs always use the DMRS port of the same CDM group.

Whether a certain row is added to/omitted from/removed from the table or not, and whether it can be indicated or not may be configured/indicated by the higher layer signaling/physical layer signaling or may be in accordance with the UE capability.

<First embodiment>

The first embodiment relates to the antenna port field for the PDSCH.

[Embodiment 1.1]

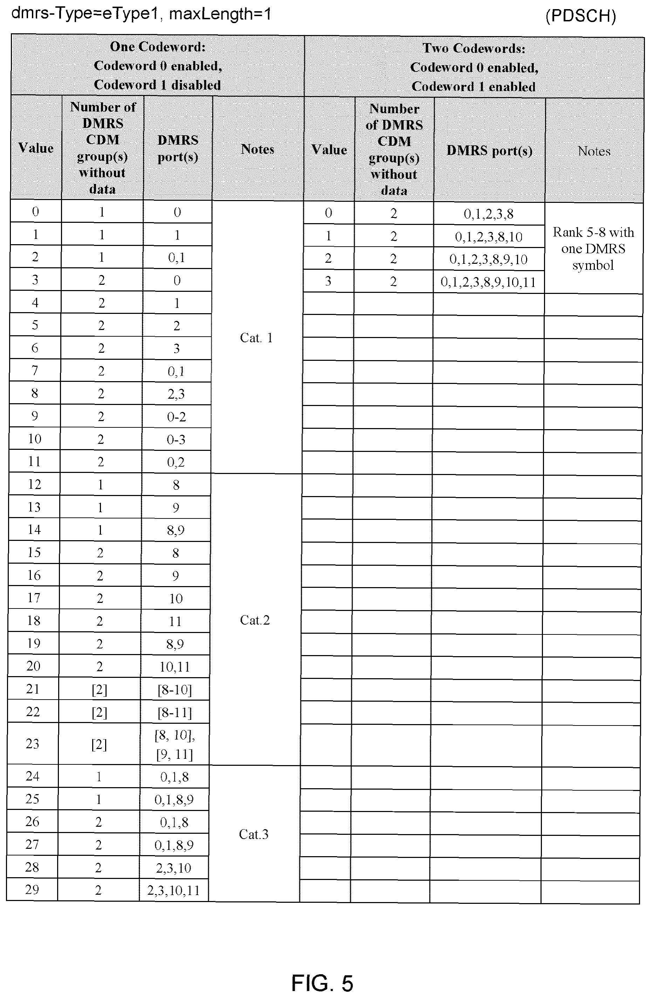

Embodiment 1.1 describes a case in which DMRS type = enhanced type 1 and DMRS maximum length = 1. FIG. 5 illustrates an example of the antenna port table for the PDSCH in the case in which DMRS type = enhanced type 1 and DMRS maximum length = 1.

In FIG. 5, a left side of the table corresponds to four or fewer layers and is referenced when the PDSCH with one codeword is scheduled. A right side of the table corresponds to five or more layers and is referenced when the PDSCH with two codewords is scheduled.

(The left side of) the antenna port table in the present example includes the DMRS port combination that includes only the category 1 DMRS port (the existing port), the DMRS port combination that includes only the category 2 DMRS port (the new port) and the DMRS port combination that includes the category 3 DMRS port (both the existing port and the new port).

The value of the antenna port field (Value) in a case of one codeword (1CW) in the present example = 0 to 11 corresponds to category 1, 12 to 23 corresponds to category 2, and 24 to 29 corresponds to category 3.

As for the X described above for the category 2 DMRS port in the present example, X = 8 (each of the DMRS port indices corresponding to the value of the antenna port field = 12 to 23 corresponds to each of all the DMRS port indices corresponding to the value of the antenna port field = 0 to 11 + 8 (addition of 8)). Such an X may be referred to as the offset indicator (offset index) or simply the offset. In this case, the offset is represented by + 8.

The DMRS port combination for the category 3 DMRS port in the present example (corresponding to the value of the antenna port field = 24 to 29) includes only the DMRS port in the same CDM group with respect to rank 3 or 4.

Each of the values (Values) of the antenna port field = 0 to 3 in a case of 2 codewords (2CW) in the table in FIG. 5 corresponds to ranks 5 to 8, respectively. Since DMRS maximum length = 1, the DMRS for two codewords can be transmitted in a 1 DMRS symbol.

Note that the UE may be configured with information related to the maximum number of codewords that can be scheduled by the DCI (for example, the RRC parameter, a maxNrofCodeWordsScheduledByDCI) from the base station, and if such information indicates a value larger than 1, and the DCI includes a plurality of specific fields (for example, an MCS field), then it may determine that the right side of the antenna port table is referenced.

In the combination of the DMRS ports in the case of the 1CW in Embodiment 1.1 (a left half of the table), a certain row entry, which may be simply referred to as an entry, or, for example, the entry indicated by [ ], is specifically described. Value of the antenna port field, Value and row index may be read interchangeably with one another.

In FIG. 5, the entries with the value of the antenna port field (Value) = 0 to 2, 12 to 14, and 24 and 25 may be associated with the number of the DMRS CDM groups without data = 1 (in other words, it means that the data are FDMed with the DMRS). According to this entry, even for the MU-MIMO, the throughput of the UE can be maximized by temporarily FDMing the data and the DMRS, in response to a traffic amount, or the like. In other words, these entries may be applied not only to the SU-MIMO but also to the MU-MIMO.

The entries with the value of the antenna port field (Value) = 9 to 11 and 21 to 23 may be associated with the number of the DMRS CDM groups without data = 2. These entries may correspond to rank 3/4. These entries may not be included for the single TRP.

Although Value = 24 to 29 already exists as an entry corresponding to rank 3/4, the UE can be efficiently multiplexed in one CDM group by providing a different entry from this one. In other words, multiplexing the plurality of UEs in different CDM groups is easier to guarantee orthogonality than multiplexing the plurality of UEs in the same CDM group.

Meanwhile, for the multi-TRPs, the DMRS ports of different CDM groups can be used. For the multi-TRPs, it is assumed that there is a difference in received power from each TRP. Therefore, when the orthogonality between the DMRS ports collapses (for example, in a case in which frequency selectivity is strong), characteristic degradation may occur if the DMRS port of the TRP with relatively strong received power interferes with the DMRS port of the TRP with relatively weak received power. Therefore, each TRP preferably uses the DMRS port corresponding to a different CDM group.

The entry with the value of the antenna port field (Value) = 11 may be associated with the number of the DMRS CDM groups without data = 2 and DMRS ports = {0, 2}. According to this entry, it is useful regardless of whether it is the single TRP/multi-TRPs. For example, if such an entry is selected, since the MU-MIMO is not applied (a vacant DMRS port is not used by other UEs), a process is simplified. For the UE that uses such an entry (antenna port), other UEs cannot use the vacant DMRS port. Therefore, for the entry with Value = 23 described below, the combination of DMRS ports = {8, 10} may not be specified. In other words, the gNB can only indicate either one of DMRS ports = {0, 2} or {8, 10} and cannot indicate each of the DMRS ports to different UEs at the same time.

The entry with the value of the antenna port field (Value) = 23 may be associated with the number of the DMRS CDM groups without data = 2 and DMRS ports = {8, 10} and {9, 11}. For example, if the DMRS ports of a certain UE, UE #1 = {0, 1, 8} is indicated, and the DMRS ports of another UE, UE #2 = {2, 3, 10} is indicated, then the orthogonal DMRS port can be effectively used to the maximum by simultaneously indicating DMRS ports = {9, 11} to another UE, UE #3.

For example, for the entry with the value of the antenna port field (Value) = 23, if DMRS ports = {8, 10} (for example, a case of 2 + 2 = 4 layers between two UEs), multiplexing with the DMRS ports of another UE in the same CDM group = {0, 2}, {1, 3} or {9, 11} is possible.

For the entry with the value of the antenna port field (Value) = 23, if DMRS ports = {9, 11} (for example, a case of 3 + 3 + 2 = 8 layers between three UEs), multiplexing with the DMRS ports of another UE in the same CDM group = {0, 1, 8} and {2, 3, 10} is possible.

The entry with the value of the antenna port field (Value) = 23 may include either one of DMRS ports = {8, 10} or DMRS ports = {9, 11}. As described above, the entry with the value of the antenna port field (Value) = 23 may not be included in the table.

For the combination of the DMRS ports for each rank in the case of the 2CW in Embodiment 1.1 (a right half of the table), at least one of the following combinations may be specified:

- for rank 5, a combination of the port indices {0, 1, 2, 3, 8};
- for rank 6, a combination of the port indices {0, 1, 2, 3, 8, 10};
- for rank 7, a combination of the port indices {0, 1, 2, 3, 8, 9, 10}; and
- for rank 8, a combination of the port indices {0, 1, 2, 3, 8, 9, 10, 11}.

The combination of the DMRS ports in the case of the 1CW (the left half of the table) in the first embodiment may include different combinations from the example described above, and at least one of the following combinations may be specified for each rank:

- for rank 1, a combination of one index from among the port indices {0, 1, 2, 3, 8, 9, 10, 11};
- for rank 2, a combination of two indices from among the port indices {0, 1, 2, 3, 8, 9, 10, 11};
- for rank 3, a combination of three indices from among the port indices {0, 1, 2, 3, 8, 9, 10, 11}; and
- for rank 4, a combination of four indices from among the port indices {0, 1, 2, 3, 8, 9, 10, 11}.

Here, the "port indices {0, 1, 2, 3, 8, 9, 10, 11}" described above may be read interchangeably with "one of a first set (for example, {0, 1, 2, 3}) and a second set (for example, {8, 9, 10, 11})" with each other. Such a first/second set may be defined in the standard in advance, may be configured in the UE by the higher layer signaling or may be determined based on the UE capability. Whether the index is selected from the first or second set may be specified in the standard in advance, may be configured in the UE by the higher layer signaling or may be determined based on the UE capability.

Variation of [Embodiment 1.1]

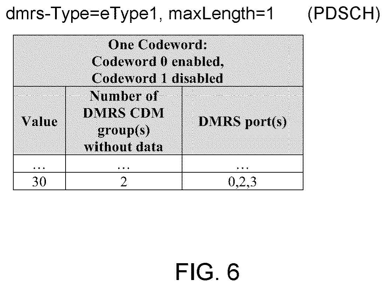

FIG. 6 illustrates a variation of the antenna port table for the PDSCH in the case in which DMRS type = enhanced type 1 and DMRS maximum length = 1. FIG. 6 illustrates the entry for the single DCI-based multi-TRPs, which may be added to the table in FIG. 5 or specified separately from FIG. 5 as a (dedicated) table for the single DCI-based multi-TRPs.
As shown in FIG. 6, for the entry with Value = 30, the number of the DMRS CDM groups without data = 2 and DMRS ports = {0, 2, 3} may be associated.
In the table in FIG. 5, a combination of DMRS ports = {0, 1, 2} is supported for the entry with Value = 9, and a combination of DMRS ports = {8, 9, 10} is supported for the entry with Value = 21. Therefore, 2 + 1 = 3 layers by two CDM groups can be indicated. On the other hand, for the entry with Value = 30 shown in FIG. 6, 1 + 2 = 3 layers by two CDM groups can be indicated by supporting DMRS ports = {0, 2, 3}.

[Embodiment 1.2]

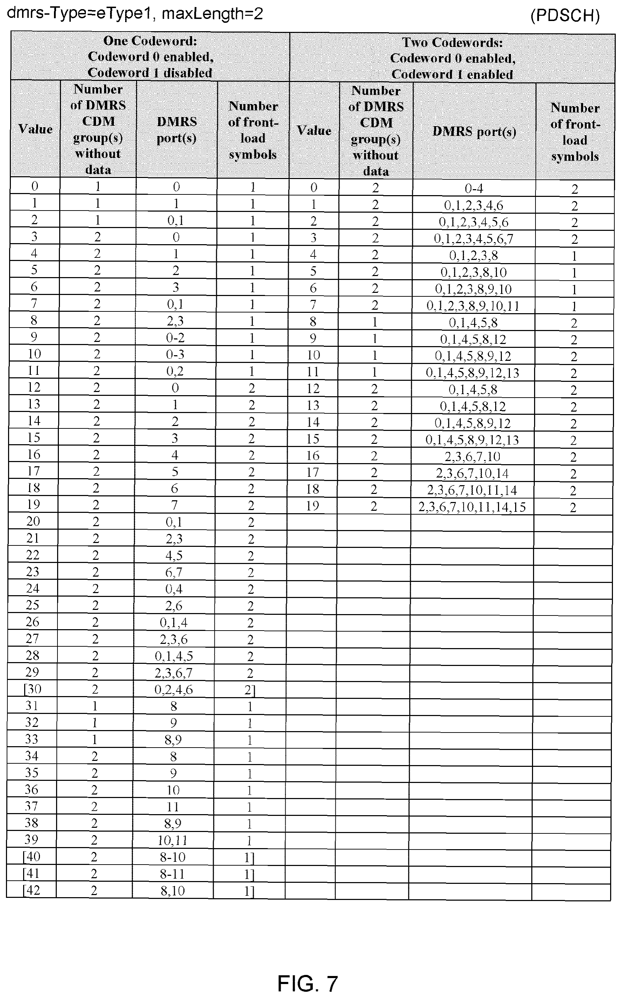

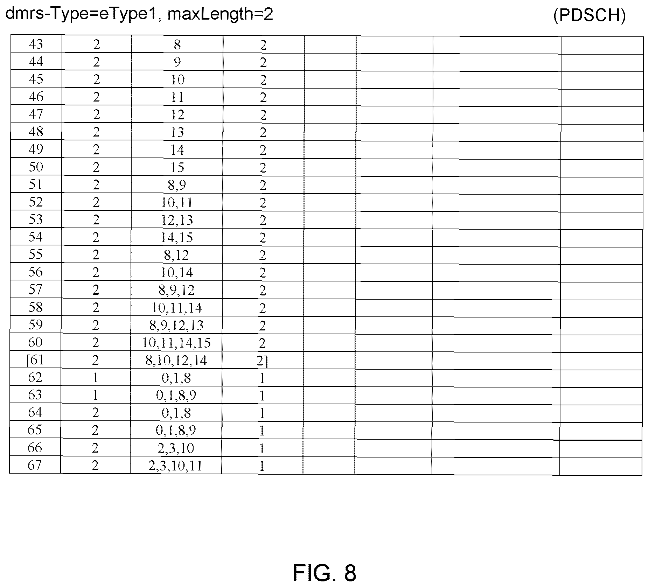

Embodiment 1.2 describes the case in which DMRS type = enhanced type 1 and DMRS maximum length = 1. Note that in Embodiment 1.2, the contents that may be the same as Embodiment 1.1 (or may be controlled/structured/adjusted, or the like in the same manner) are not repeated in the description. FIG. 7 and FIG. 8 illustrate an example of the antenna port table for the PDSCH in the case in which DMRS type = enhanced type 1 and DMRS maximum length = 2.
Note that the antenna port table according to Embodiment 1.2 is shown across the two figures of FIG. 7 and FIG. 8 for reasons of the number of rows. In other words, in the present example, FIG. 7 and FIG. 8 are to be specified as one table, with the two figures combined. More specifically, the description is provided on the assumption that the top row (Value = 43) of FIG. 8 follows directly below the bottom row (Value = 42) of FIG. 7. As described above, the table shown in FIG. 7 and FIG. 8 is only an example, and the tables divided according to the applicable scenario (the single TRP/multi-TRPs or any one of categories 1 to 3) may be specified.
First, the row entries of the 1CW (the left half of FIG. 7 and FIG. 8) are described. In the antenna port table shown in the present example, the Values of the 1CW = 0 to 11 may correspond to Value = 0 to 11 in FIG. 5. Value = 0 to 30 may correspond to category 1, 31 to 61 to category 2, and 62 to 67 to category 3. Note that in category 3, in a case of up to four ranks, only one CDM group may be used for each UE.
Value = 12 to 14 in FIG. 5 may correspond to Value = 31 to 33 in the present example. Value = 21 and 22 in FIG. 5 may correspond to Value = 40 and 41 in the present example. Value = 24 and 25 in FIG. 5 may correspond to Value = 62 and 63 in the present example.
The entries with Value = 12 to 30 (corresponding to FIG. 7) and 43 to 61 (corresponding to FIG. 8) in the present example are row entries newly added to FIG. 5. In other words, the entries with Value = 12 to 30 and 43 to 61 represent a case in which the number of front load symbols is two. For other Values, the number of front load symbols may be one.
Value = 43 to 61 in the present example may be associated with the number of the DMRS CDM groups without data = 2 and the number of front load symbols = 2. For these row entries, the plurality of DMRS ports may be indicated using the DMRS with a length of two in the same CDM group.

Associating Value = 0 to 2, 31 to 33, and 62 and 63 with the number of the DMRS CDM groups without data = 1 can reduce the overhead of the DMRS. For example, such rows can be used mainly in a SU-MIMO scenario to improve the throughput of the UE. On the other hand, even in a MU-MIMO scenario, the gNB may not always be able to find a good UE pair for the MU-MIMO. Therefore, the gNB may schedule the PDSCH with the SU-MIMO. Such rows are effective to respond to such a case.

The entries indicated by [ ], such as Value = 30 and 40 to 42, may not be specified (for example, they may be removed in a case of the single TRP) since Value = 62 to 67 corresponding to category 3 is supported. If such entries are to be removed, an indication by the antenna port field with 6 bits is possible.

According to the entry with Value = 42, multiplexing with the DMRS ports of another UE in the same CDM group = {0, 2}, {1, 3} or {9, 11} is possible (for example, the case of 2 + 2 = 4 layers between two UEs). However, if DMRS ports = {0, 2} is indicated for Value = 11, other DMRS ports are not used by other UEs. Therefore, the entry with Value = 42 may not necessarily be specified (may be removed).

Value = 26 to 29 and 57 to 60 are effective for multiplexing two UEs of rank 3 and 4 to different CDM groups for the double-symbol DMRS.

Next, the row entries of the 2CW (the right half of FIG. 7) are described. Value = 0 to 4 in FIG. 5 may correspond to Value = 4 and 7 in the present example. Value = 0 to 4 and 8 to 19 in the present example are newly added row entries. In other words, the entries with Value = 0 to 4 and 8 to 19 represent the case in which the number of the front load symbols is two. On the other hand, the entries with Value = 4 to 7 represent a case in which the number of front load symbols is one.

For the 2CW, the entries with Value = 0 to 7 and 12 to 19 may be associated with the number of the DMRS CDM groups without data = 2. In contrast, the entries with Value = 8 to 11 may be associated with the number of the DMRS CDM groups without data = 1.

For the 2CW, the entries with Value = 0 to 3 correspond to ranks 5 to 8, respectively. Similarly, entries with Value = 8 to 11, 12 to 15 and 16 to 19 may correspond to ranks 5 to 8, respectively.

For the 2CW, according to the entries with Value = 8 to 19, the number of borts for each of the plurality of CDM groups can be distributed (mapped) so that they are equal or the difference in the number of ports is small.

For example, if DMRS ports = {0, 1, 4, 5, 8} is indicated for Value = 8, as shown in FIG. 4A, in two CDM groups #0 to be TDMed, they can be distributed to DMRS ports = {0, 1, 8} that corresponds to TD-OCC #0 and DMRS ports = {4, 5} that corresponds to TD-OCC #1.

In this way, they are distributed among the plurality of CDM groups to be TDMed (among the CDM groups with the same index) so that the number of ports corresponding to a certain UE is equal or the difference is small. Note that in the example with Value = 8, since the number of ranks is five, which is an odd number, they may be distributed among the plurality of CDM groups to be TDMed so that the difference in each number of ports is small. For example, if the number of ranks is six, which is an even number, they may be distributed with an equal number of ports for each among the plurality of CDM groups to be TDMed.

In this way, indicating the DMRS ports equally or with a small difference in the number of ports provides a characteristic improvement effect when traveling at high speeds/with high frequency selectivity (in a case in which the problem of distance described above may arise). It is assumed that the orthogonality of the TD-OCC may collapse when traveling at high speeds. It is assumed that the orthogonality of the FD-OCC may collapse for a channel with strong frequency selectivity. By indicating the DMRS port so that the number of ports is equal or the difference is small, the FD-OCC and the TD-OCC can be equally applied. Either when traveling at high speeds or for the channel with strong frequency selectivity, extreme degradation of the characteristic can be avoided. In addition, the overhead of the DMRS can be reduced.

Variation of [Embodiment 1.2]

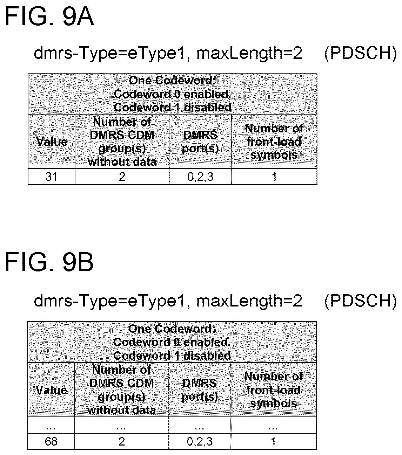

FIGS. 9A and 9B illustrate a variation of the antenna port table for the PDSCH in the case in which DMRS type = enhanced type 1 and DMRS maximum length = 2. FIGS. 9A and 9B illustrate the entry for the single DCI-based multi-TRPs, which may be added to the table in FIG. 7 and FIG. 8 or specified separately from FIG. 7 and FIG. 8 as a (dedicated) table for the single DCI-based multi-TRPs.

In the case in which DMRS type = enhanced type 1 and DMRS maximum length = 2, for example, in the table in FIG. 7 described above, the entry with the value of the antenna port field (Value) = 31 may be specified (may be replaced) as shown in FIG. 9A. In FIG. 9A, the number of the DMRS CDM groups without data = 2 and DMRS ports = {0, 2, 3} may be associated.

For example, for the entries with the value of the antenna port field (Value) = 9 and 40 in FIG. 7 described above, a combination of DMRS ports = {0, 1, 2} and {8, 9, 10} is supported. Therefore, 2 + 1 = 3 layers can be indicated by two CDM groups.

On the other hand, for the entry with the value of the antenna port field (Value) = 31, 1 + 2 = 3 layers by two CDM groups can be indicated by supporting DMRS ports = {0, 2, 3}.

In the table in FIG. 8 described above, for a case of the single DCI-based multi-TRPs, the entry with the value of the antenna port field (Value) = 68 as shown in FIG. 9B may be specified (may be added). In FIG. 9B, for the entry with Value = 68, the number of the DMRS CDM groups without data = 2 and DMRS ports = {0, 2, 3} may be associated. As with the description above, 1 + 2 = 3 layers by two CDM groups can be indicated by supporting DMRS ports = {0, 2, 3}.

[Embodiment 1.3]

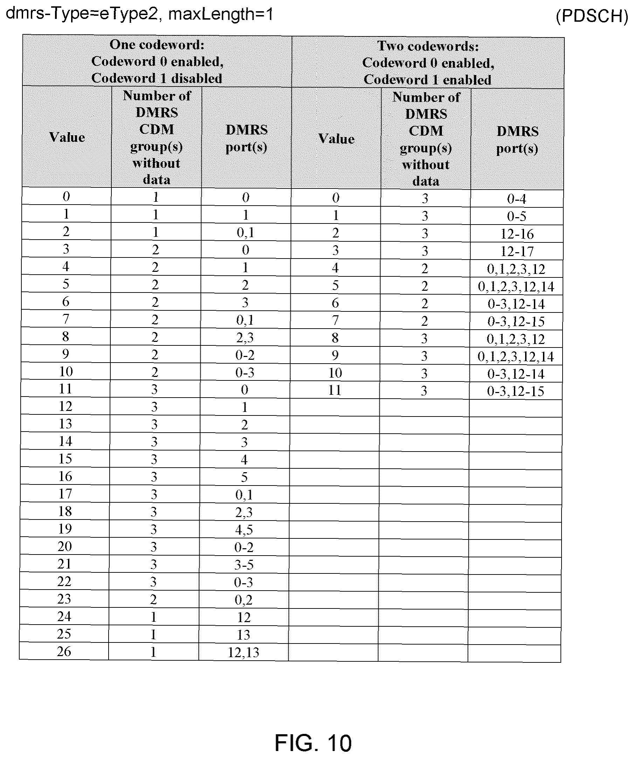

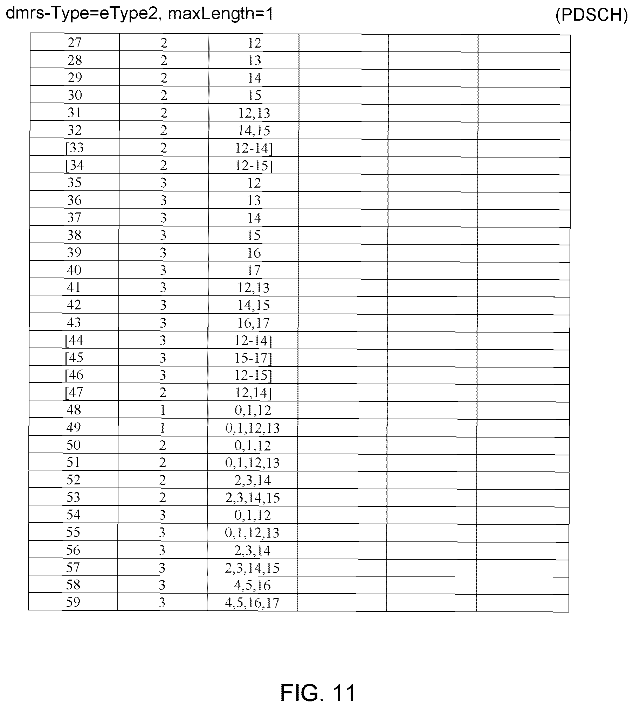

Embodiment 1.3 describes a case in which DMRS type = enhanced type 2 and DMRS maximum length = 1. Note that in Embodiment 1.3, the contents that may be the same as Embodiment 1.1/1.2 (or may be controlled/structured/adjusted, or the like in the same manner) are not repeated in the description. FIG. 10 and FIG. 11 illustrate an example of the antenna port table for the PDSCH in the case in which DMRS type = enhanced type 2 and DMRS maximum length = 1.

In the antenna port table of Embodiment 1.3, the difference between the indices of the category 1 DMRS port and the category 2 DMRS port is, for example, +12, and the number of CDM groups without data may be between 1 and 3. In other words, the offset indicator of category 2 to category 1 may be +12.

Note that the antenna port table according to Embodiment 1.3 is shown across the two figures of FIG. 10 and FIG. 11 for reasons of the number of rows. In other words, in the present example, FIG. 10 and FIG. 11 are to be specified as one table, with the two figures combined. More specifically, the description is provided on the assumption that the top row (Value = 27) of FIG. 11 follows directly below the bottom row (Value = 26) of FIG. 10. As described above, the table shown in FIG. 10 and FIG. 11 is only an example, and the tables divided according to the applicable scenario (the single TRP/multi-TRPs or any one of categories 1 to 3) may be specified.

First, the row entries of the 1CW (the left half of FIG. 10 and FIG. 11) are described. In the antenna port table shown in the present example, the Values of the 1CW = 0 to 10 may correspond to Value = 0 to 10 in FIG. 5.

Value = 0 to 23 may correspond to category 1, 24 to 47 to category 2, and 48 to 59 to category 3. Note that in category 3, all combinations of the number of the DMRS CDM groups without data = 1 to 3 may be covered, and some of the combinations may be omitted. For example, in a case in which the number of the DMRS CDM groups without data = 1, a combination of the DMRS ports for one CDM group may be specified, in a case in which the number of the DMRS CDM groups without data = 2, a combination of the DMRS ports for two CDM groups may be specified, and in a case in which the number of the DMRS CDM groups without data = 3, a combination of the DMRS ports for three CDM groups may be specified.

The entries indicated by [ ] in FIG. 5 may indicate the entries corresponding to the following Values in the present example. The entries indicated by [ ] may indicate the DMRS ports across the antenna ports/CDM groups corresponding to the multi-TRPs.

Value = 0 to 2 in FIG. 5 may correspond to Value = 0 to 2 in the present example. Value = 12 to 14 in FIG. 5 may correspond to Value = 24 to 26 in the present example. Value = 24 and 25 in FIG. 5 may correspond to Value = 48 and 49 in the present example.

Value = 9 and 10 in FIG. 5 may correspond to Value = 9 and 10 in the present example. Value = 21 and 22 in FIG. 5 may correspond to Value = 33 and 34 in the present example.

Value = 11 in FIG. 5 may correspond to Value = 23 in the present example. Value = 23 in FIG. 5 may correspond to Value = 47 in the present example.

The entries with Value = 11 to 22 and 35 to 46 in the present example may be associated with the number of the DMRS CDM groups without data = 3. The ones with other Values may be associated with the number of the DMRS CDM groups without data = 1/2.

For example, if Value = 23 is indicated in existing specifications, since the MU-MIMO is not applied (other DMRS ports are not used by another UE), Value = 47 may be excluded (removed).

In the case of the single TRP, all/at least one of the entries with Value = 33 and 34, and 44 to 47 may be removed. This reduces the overhead of the DMRS. For example, if the row with Value = 23 is indicated, other DMRS ports are not used by another UE. Therefore, Value = 47, which corresponds to Value = 23, may be removed (may not be specified) according to existing rules. As described below, the MU-MIMO scheduling restriction may be applied to the rows with Value = 23 and 47.

Next, the row entries of the 2CW (the right half of FIG. 10) are described. For the 2CW, Value = 0 to 3 and 8 to 11 in the present example may be associated with the number of the DMRS CDM groups without data = 3. Value = 4 to 7 in the present example may be associated with the number of the DMRS CDM groups without data = 2. These row entries may be associated with ranks 5 to 8.

Only either one of Value = 0 to 3 or 4 to 7 may be specified, or both may be specified. For example, in a case in which Value = 0 to 3, by setting the number of the DMRS CDM groups without data = 2, one CDM group can be FDMed with data using the MU-MIMO, thus improving the throughput of the UE. Meanwhile, in a case in which Value = 4 to 7, by setting the number of the DMRS CDM groups without data = 3, one CDM group can be assigned to another UE, thus improving a cell capacity.

For the 2CW, according to the entries with Value = 4 to 11, the number of borts for each of the plurality of CDM groups can be distributed (mapped) so that they are equal or the difference in the number of ports is small.

For example, if DMRS ports = {0, 1, 2, 3, 12} is indicated for Value = 4, as shown in FIG. 4B, in two CDM groups #0 and #1 to be FDMed, they can be distributed to DMRS ports = {0, 1, 12} each of which corresponds to TD-OCC #0 and {2, 3}.

In this way, they are distributed among the plurality of CDM groups to be TDMed (among the CDM groups with the same index) so that the number of ports corresponding to a certain UE is equal or the difference is small. Note that in the example with Value = 4, since the number of ranks is five, which is an odd number, they may be distributed (to three and two) among the plurality of CDM groups to be TDMed so that the difference in each number of ports is small.

For example, if DMRS ports = {0, 1, 2, 3, 12, 14} is indicated for Value = 5, as shown in FIG. 4B, in two CDM groups #0 and #1 to be FDMed, they can be distributed to DMRS ports = {0, 1, 12} each of which corresponds to TD-OCC #0 and {2, 3, 14}. In this way, if the number of ranks is six, which is an even number, they may be distributed (three each) with an equal number of ports for each among the plurality of CDM groups to be TDMed.

Variation of [Embodiment 1.3]

FIGS. 12A and 12B illustrate a variation of the antenna port table for the PDSCH in the case in which DMRS type = enhanced type 2 and DMRS maximum length = 1. FIGS. 12A and 12B illustrate the entry for the single DCI-based multi-TRPs, which may be added to the table in FIG. 10 and FIG. 11 or specified separately from FIG. 10 and FIG. 11 as the (dedicated) table for the single DCI-based multi-TRPs.

In the case in which DMRS type = enhanced type 2 and DMRS maximum length = 1, for example, in the table in FIGS. 10 and 11 described above, the entry with the value of the antenna port field (Value) = 24 may be specified (may be replaced) as shown in FIG. 12A. In FIG. 12A, the number of the DMRS CDM groups without data = 2 and DMRS ports = {0, 2, 3} may be associated.

For example, for the entries with the value of the antenna port field (Value) = 9 and 33 in FIGS. 10 and 11 described above, a combination of DMRS ports = {0, 1, 2} and {12, 13, 14} is supported. Therefore, 2 + 1 = 3 layers can be indicated by two CDM groups. On the other hand, for the entry with the value of the antenna port field (Value) = 24, 1 + 2 = 3 layers by two CDM groups can be indicated by supporting DMRS ports = {0, 2, 3}.

In the table in FIGS. 10 and 11 described above, for the case of the single DCI-based multi-TRPs, the entry with the value of the antenna port field (Value) = 60 as shown in FIG. 12B may be specified (may be added). In FIG. 12B, for the entry with Value = 60, the number of the DMRS CDM groups without data = 2 and DMRS ports = {0, 2, 3} may be associated. As with the description above, 1 + 2 = 3 layers by two CDM groups can be indicated by supporting DMRS ports = {0, 2, 3}.

[Embodiment 1.4]

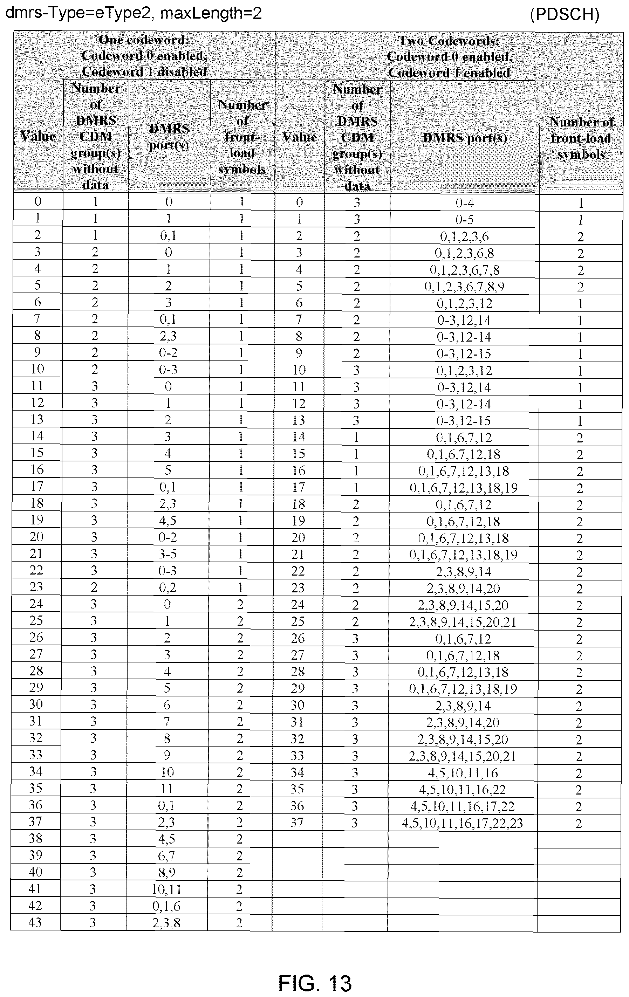

Embodiment 1.4 describes a case in which DMRS type = enhanced type 2 and DMRS maximum length = 2. Note that in Embodiment 1.4, the contents that may be the same as Embodiment 1.1/1.2/1.3 (or may be controlled/structured/adjusted, or the like in the same manner) are not repeated in the description. FIGS. 13 to 15 illustrate an example of the antenna port table for the PDSCH in the case in which DMRS type = enhanced type 2 and DMRS maximum length = 2.

In the antenna port table of Embodiment 1.4, the DMRS port combination that includes only the category 2 DMRS ports may be included. Such a combination may correspond, for example, to the DMRS port combination with all indices + X (for example, + 12) based on at least one of the DMRS port combinations that include only the category 1 DMRS ports described above.

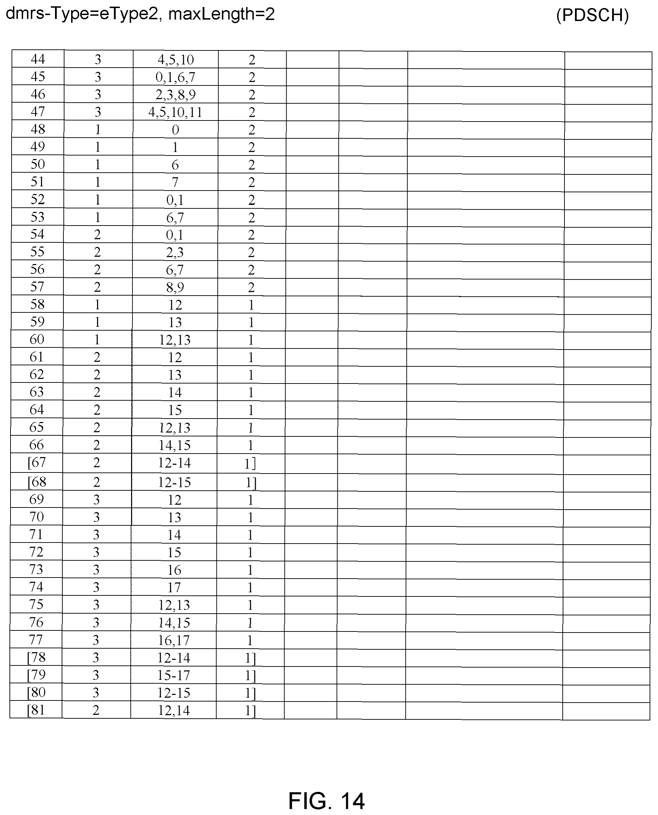

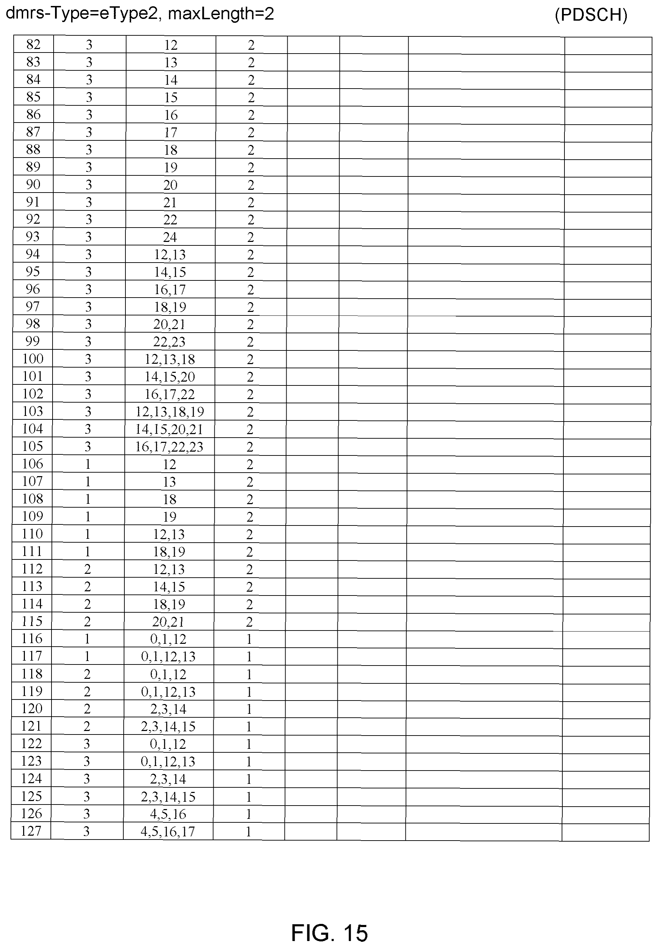

Note that the antenna port table according to Embodiment 1.4 is shown across the three figures of FIGS. 13 to 15 for reasons of the number of rows. In other words, in the present example, FIGS. 13 to 15 are to be specified as one table, with the three figures combined. More specifically, the description is provided on the assumption that the top row (Value = 44) of FIG. 14 follows directly below the bottom row (Value = 43) of FIG. 13, and the top row (Value = 82) of FIG. 15 follows directly below the bottom row (Value = 81) of FIG. 14. As described above, the table shown in FIGS. 13 to 15 is only an example, and the tables divided according to the applicable scenario (the single TRP/multi-TRPs or any one of categories 1 to 3) may be specified.

First, the row entries of the 1CW (the left half of FIGS. 13 to 15) are described. In the antenna port table shown in the present example, the Values of the 1CW = 0 to 10 may correspond to Value = 0 to 10 in FIG. 5.

Value = 0 to 57 may correspond to category 1, 58 to 115 to category 2, and 116 to 127 to category 3. Note that in category 3, all combinations of the number of the DMRS CDM groups without data = 1 to 3 may be covered, and some of the combinations may be omitted. For example, in the case in which the number of the DMRS CDM groups without data = 1, the combination of the DMRS ports for one CDM group may be specified, in the case in which the number of the DMRS CDM groups without data = 2, the combination of the DMRS ports for two CDM groups may be specified, and in the case in which the number of the DMRS CDM groups without data = 3, the combination of the DMRS ports for three CDM groups may be specified.

The entries indicated by [ ] in FIG. 5 may indicate the entries corresponding to the following Values in the present example. The entries indicated by [ ] may indicate the DMRS ports across the antenna ports/CDM groups corresponding to the multi-TRPs.

Value = 0 to 2 in FIG. 5 may correspond to Value = 0 to 2 in the present example. Value = 12 to 14 in FIG. 5 may correspond to Value = 58 to 60 in the present example. Value = 24 and 25 in FIG. 5 may correspond to Value = 116 and 117 in the present example.

Value = 9 and 10 in FIG. 5 may correspond to Value = 9 and 10 in the present example. Value = 21 and 22 in FIG. 5 may correspond to Value = 67 and 68 in the present example.

For example, if Value = 23 is indicated in the existing specifications, since the MU-MIMO is not applied (other DMRS ports are not used by another UE), Value = 81 may be excluded (removed). As described below, the MU-MIMO scheduling restriction may be applied to the rows with Value = 23 and 81.

In the case of the single TRP, all/at least one of the entries with Value = 67 and 68, and 78 to 80 may be removed. For example, Value = 67 and 68, and 78 to 80 may be removed since Value = 116 and 117 are more beneficial for minimizing the overhead of the DMRS. By removing some entries, the bit size can be reduced to, for example, 7 bits. This reduces the overhead of the DMRS.

Value = 42 to 47 and 100 to 105 are effective for multiplexing two UEs of rank 3 and 4 to different CDM groups for the double-symbol DMRS.

Next, the row entries of the 2CW (the right half of FIG. 13) are described. For the 2CW, Value = 0 and 1, 10 to 13, 26, 37, and 42 and 43 in the present example may be associated with the number of the DMRS CDM groups without data = 3. Value = 2 to 9, 18 to 25 and 38 to 41 in the present example may be associated with the number of the DMRS CDM groups without data = 2. Other entries (Value = 14 to 17) may be associated with the number of the DMRS CDM groups without data = 1. All row entries of the 2CW may be associated with ranks 5 to 8.

For the 2CW, according to the entries with Value = 14 to 37, in the combination of the DMRS ports using one CDM group, the overhead can be reduced.

For the 2CW, according to the entries with Value = 6 to 13 and 14 to 37, the number of borts for each of the plurality of CDM groups can be distributed (mapped) so that they are equal or the difference in the number of ports is small.

For example, if DMRS ports = {0, 1, 2, 3, 12, 14} is indicated for Value = 7, as shown in FIG. 4B, in two CDM groups #0 and #1 to be FDMed, they can be distributed to DMRS ports = {0, 1, 12} each of which corresponds to TD-OCC #0 and {2, 3, 14}, three each.

For example, if DMRS ports = {0, 1, 6, 7, 12,18} is indicated for Value = 15, as shown in FIG. 4B, in two CDM groups #0 to be TDMed, they can be equally distributed to DMRS ports = {0, 1, 12} each of which corresponds to TD-OCC #0 and DMRS ports = {6, 7, 18} that corresponds to TD-OCC #1, three each.

For example, if DMRS ports = {2, 3, 8, 9, 14, 20} is indicated for Value = 23, as shown in FIG. 4B, in two CDM groups #1 to be TDMed, they can be equally distributed to DMRS ports = {2, 3, 14} each of which corresponds to TD-OCC #0 and DMRS ports = {8, 9, 20} that corresponds to TD-OCC #1, three each.

In this way, if the number of ranks is six, which is an even number, they may be distributed (three each) with an equal number of ports for each among the plurality of CDM groups to be TDMed.

For example, if DMRS ports = {0, 1, 6, 7, 12} is indicated for Value = 14, as shown in FIG. 4B, in two CDM groups #0 to be TDMed, they can be distributed to DMRS ports = {0, 1, 12} each of which corresponds to TD-OCC #0 and {6, 7}.

In this way, they are distributed among the plurality of CDM groups to be TDMed (among the CDM groups with the same index) so that the number of ports corresponding to a certain UE is equal or the difference is small. Note that in the example with Value = 14, since the number of ranks is five, which is an odd number, they may be distributed (to three and two) among the plurality of CDM groups to be TDMed so that the difference in each number of ports is small.

All/at least one of the entries with Value = 38 to 43 may be removed. This reduces the overhead of the DMRS.

Variation of [Embodiment 1.4]

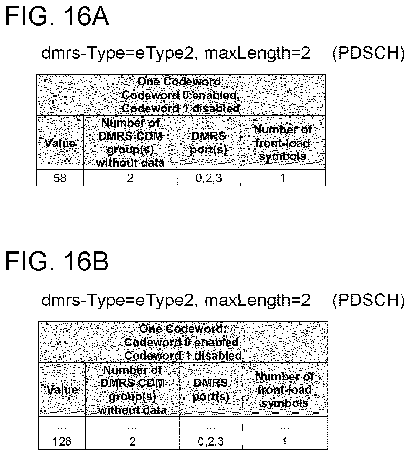

FIGS. 16A and 16B illustrate a variation of the antenna port table for the PDSCH in the case in which DMRS type = enhanced type 2 and DMRS maximum length = 2. FIGS. 16A and 16B illustrate the entry for the single DCI-based multi-TRPs, which may be added to the table in FIG. 13 to FIG. 15 or specified separately from FIG. 13 to FIG. 15 as the (dedicated) table for the single DCI-based multi-TRPs.

In the case in which DMRS type = enhanced type 2 and DMRS maximum length = 2, for example, in the table in FIGS. 13 to 15 described above, the entry with the value of the antenna port field (Value) = 58 may be specified (may be replaced) as shown in FIG. 16A. In FIG. 16A, the number of the DMRS CDM groups without data = 2 and DMRS ports = {0, 2, 3} may be associated.

For example, for the entry with the value of the antenna port field (Value) = 9 in FIGS. 13 to 15 described above, the combination of DMRS ports = {0, 1, 2} is supported. Therefore, 2 + 1 = 3 layers can be indicated by two CDM groups. On the other hand, for the entry with the value of the antenna port field (Value) = 58, 1 + 2 = 3 layers by two CDM groups can be indicated by supporting DMRS ports = {0, 2, 3}.

In the table in FIGS. 13 to 15 described above, for the case of the single DCI-based multi-TRPs, the entry with the value of the antenna port field (Value) = 128 as shown in FIG. 16B may be specified (may be added). In FIG. 16B, for the entry with Value = 128, the number of the DMRS CDM groups without data = 2 and DMRS ports = {0, 2, 3} may be associated. As with the description above, 1 + 2 = 3 layers by two CDM groups can be indicated by supporting DMRS ports = {0, 2, 3}.

<Variation>

In the first embodiment, as described in Embodiment 1.1 through 1.4, the number of the entries that constitute the antenna port table and the antenna port field for indicating the DMRS port can be massive. Therefore, the DMRS port may be indicated based on other information, not only on the antenna port field.

For example, the DMRS port may be indicated using both the CDM group subset and the antenna port field. Here, the CDM group subset may be a lower-level composing element of the CDM group, and one CDM group may include a plurality of CDM group subsets. The CDM group subset may be associated with the PDSCH/PUSCH and configured in the UE by the higher layer parameter (for example, an RRC signaling or the MAC CE), or may be indicated by the DCI that schedules the PDSCH/PUSCH. The CDM group subset may be identified by a CDM group subset ID.

For each group subset, the order of the CDM groups in the antenna port table may be reused. For example, if the antenna port table shows the DMRS port index j for a first group subset, for a second group subset, a table in which the DMRS port index j in a DMRS port table is replaced with j + P may be used. Here, P may be the number of the DMRS ports in the group subset (the maximum number of the DMRS ports in the group subset).

In the first embodiment, category 1/2/3 may all be specified in the antenna port table, or only part of them may be specified.

For example, reducing the size of the antenna port field may be configured in the UE by the higher layer parameter. Reducing the size of the antenna port field is expected to reduce the overhead of the DCI.

Note that if the higher layer parameter indicating that the size of the antenna port field of the DCI is to be reduced compared to the specifications of Rel-17 NR is configured in the UE, based on an RRC configuration or a rule determined in advance, a table in which one or more combinations of the DMRS ports are selected from a specific antenna port table (for example, the antenna port table in a case in which the higher layer parameter indicating that the size of the antenna port field of the DCI is increased compared to the specifications of Rel-17 NR is configured) may be used.

The row that can be indicated by the DCI (for example, DCI format 1_1/1_2) from among the antenna port table described above may be indicated/configured/restricted by the RRC/MAC CE. A certain DMRS port may be indicated based on different rules for DCI format 1_1 and DCI format 1_2. For example, a row that can be indicated may be indicated from the table with DCI format 1_1, and a row that can be removed/omitted may be indicated with DCI format 1_2. This reduces the overhead of the DCI.

For example, the DMRS port may be indicated in a bitmap (one or more bits) of each row of the antenna port table, for each subset with each row divided into group subsets (which may simply be referred to as being grouped) as described above. The rule of grouping may be defined in the specifications in advance and may be defined for each certain number of rows in the table described above/for each category/for each number of ranks/for each number of the DMRS CDM groups without data, or the like. A plurality of rows may be grouped, and the DMRS port that can be indicated may be indicated using the DCI for each group. This reduces the overhead of the RRC/MAC CE.

The rows that can be indicated/configured/restricted using the RRC/MAC CE may be limited to some rows in the table. In other words, rows other than these limited rows may be able to be indicated using the DCI. The row that can be indicated by the DCI for each of the subsets (groups composed of the plurality of rows) described above may be indicated/configured/restricted using the RRC/MAC CE.

According to the first embodiment described above, the UE can appropriately determine the Rel-18 PDSCH DMRS port to be used.

<Second embodiment>

The second embodiment relates to the MU-MIMO scheduling restriction.

The MU-MIMO scheduling restriction is described below using each of the antenna port tables described above as an example. The following Embodiments 2.1 through 2.4 correspond to Embodiments 1.1 through 1.4 described above, respectively.

In the present example, the MU-MIMO scheduling restriction between the plurality of DMRS ports for enhanced type 1/enhanced type 2 in one CDM group/between the plurality of CDM groups is described to support the examples described above.

For example, in a case in which DMRS type = enhanced type 1/enhanced type 2, if the UE is scheduled with the 1CW and assigned the antenna port mapping with a specific index out of the new antenna port table (each antenna port table described above), the UE may assume that all of the remaining antenna ports that are orthogonal may not be associated with the transmission of the PDSCH to another UE.

Here, the specific index out of the new antenna port table may correspond to the entry of the row index indicated by the condition described below. In other words, based on a certain condition, assuming the above by the UE may be read interchangeably with the MU-MIMO scheduling restriction.

"All of the remaining antenna ports that are orthogonal" described above may mean the DMRS ports in the same CDM group (one CDM group) (within a CDM group) or the DMRS ports in the plurality of CDM groups (within CDM groups).

For the 2CW, the MU-MIMO scheduling restriction may or may not be applied.

The UE, when applying DMRS type = enhanced type 1/enhanced type 2, based on a type of enhanced type (enhanced type 1/enhanced type 2), the DMRS maximum length (1/2), whether the single DCI-based multi-TRPs are applied or not, or the number of the CWs (1CW/2CW), may control the scheduling restriction described above (whether to assume the above or not).

For example, in the row (Value) in which the combination of the following DMRS ports is indicated, the UE may assume that the remaining DMRS ports in the same CDM group/plurality of CDM groups are not used by other UEs.

- All DMRS ports in the CDM group are already assigned to a certain UE (for example, the DMRS ports of enhanced type 1 = {0, 1, 8, 9} and the DMRS ports of enhanced type 2 = {0, 1, 12, 13}).
- The DMRS port corresponding to the 2CW (the right side of each antenna port table (corresponding to ranks 5 to 8)).
- Three DMRS ports in the CDM group are assigned to a certain UE (for example, the DMRS ports of enhanced type 1 = {0, 1, 8} and the DMRS ports of enhanced type 2 = {0, 1, 12}).

Each case is described below in Embodiment 2.1 through 2.4.

[Embodiment 2.1]

Embodiment 2.1 describes the case in which DMRS type = enhanced type 1 and DMRS maximum length = 1.

In the antenna port table shown in FIGS. 5 and 6 described above, if at least one of the following rows (conditions 1 through 4) is indicated, the UE may apply the MU-MIMO scheduling restriction. In other words, the UE may assume that other DMRS ports are not assigned to another UE.

<Condition 1>

(Value = 9, 10, 21, 22, 30, 31)

These row indices are examples of three/four ports being assigned across two CDM groups.

<Condition 2>

(Value = 11, 23)

These row indices are examples of two ports being assigned across two CDM groups. In this case, the UE can perform the channel estimation without considering the FD-OCC based on the knowledge that the MU-MIMO is not applied. In particular, in the case in which the frequency selectivity is strong, both a UE processing load reduction effect and the characteristic improvement effect (since the FD-OCC is substantially not used) are expected.

<Condition 3>

(Value = 24 to 29)

These row indices are examples of three/four ports being assigned in one CDM group.

- If "all of the remaining antenna ports that are orthogonal" described above mean the DMRS ports in the same CDM group (one CDM group) (within a CDM group), when four ports are assigned, additional multiplexing in the same CDM group is not physically possible. Therefore, such a restriction is necessary.
- If "all of the remaining antenna ports that are orthogonal" described above mean the DMRS ports in the plurality of CDM groups (within CDM groups), the additional multiplexing is possible in the plurality of CDM groups. Therefore, such a restriction may or may not be applied.

<Condition 4>

(Value of the 2CW (corresponding to the right half of the antenna port table) = 0 to 3)

In a case of the 2CW, assigning the vacant DMRS port to another UE may or may not be prohibited.

[Embodiment 2.2]

Embodiment 2.2 describes the case in which DMRS type = enhanced type 1 and DMRS maximum length = 2. Note that in Embodiment 2.2, the contents that may be the same as Embodiment 2.1 (or may be controlled/structured/adjusted, or the like in the same manner) are not repeated in the description.
In the antenna port table shown in FIGS. 7 to 9 described above, if at least one of the following rows (conditions 1 through 4) is indicated, the UE may apply the MU-MIMO scheduling restriction. In other words, the UE may assume that other DMRS ports are not assigned to another UE.

<Condition 1>

(Value = 9, 10, 26 to 30, 40 and 41, 57 to 61, 68, 69)

These row indices are examples of three/four ports being assigned across two CDM groups.

<Condition 2>

(Value = 11, 42)

These row indices are examples of two ports being assigned across two CDM groups. In this case, the UE can perform the channel estimation without considering the FD-OCC based on the knowledge that the MU-MIMO is not applied. In particular, in the case in which the frequency selectivity is strong, both the UE processing load reduction effect and the characteristic improvement effect (since the FD-OCC is substantially not used) are expected.

<Condition 3>

(Value = 62 to 67)

These row indices are examples of three/four ports being assigned in one CDM group.

- If "all of the remaining antenna ports that are orthogonal" described above mean the DMRS ports in the same CDM group (one CDM group) (within a CDM group), when four ports are assigned, the additional multiplexing in the same CDM group is not physically possible. Therefore, such a restriction is necessary.
- If "all of the remaining antenna ports that are orthogonal" described above mean the DMRS ports in the plurality of CDM groups (within CDM groups), the additional multiplexing is possible in the plurality of CDM groups. Therefore, such a restriction may or may not be applied.

<Condition 4>

(Value of the 2CW (corresponding to the right half of the antenna port table) = 0 to 23)

In the case of the 2CW, assigning the vacant DMRS port to another UE may or may not be prohibited.

[Embodiment 2.3]

Embodiment 2.3 describes the case in which DMRS type = enhanced type 2 and DMRS maximum length = 1. Note that in Embodiment 2.3, the contents that may be the same as Embodiment 2.1 and 2.2 (or may be controlled/structured/adjusted, or the like in the same manner) are not repeated in the description.
In the antenna port table shown in FIGS. 10 to 12 described above, if at least one of the following rows (conditions 1 through 4) is indicated, the UE may apply the MU-MIMO scheduling restriction. In other words, the UE may assume that other DMRS ports are not assigned to another UE.

<Condition 1>

(Value = 9, 10, 20 to 22, 33 and 34, 44 to 46, 60, 61)

These row indices are examples of three/four ports being assigned across two CDM groups. Note that Value = 10, 34 may be excluded from such a restriction.

<Condition 2>

(Value = 23, 47)

These row indices are examples of two ports being assigned across two CDM groups. In this case, the UE can perform the channel estimation without considering the FD-OCC based on the knowledge that the MU-MIMO is not applied. In particular, in the case in which the frequency selectivity is strong, both the UE processing load reduction effect and the characteristic improvement effect (since the FD-OCC is substantially not used) are expected.

<Condition 3>

(Value = 48 to 59)

These row indices are examples of three/four ports being assigned in one CDM group.

- If "all of the remaining antenna ports that are orthogonal" described above mean the DMRS ports in the same CDM group (one CDM group) (within a CDM group), when four ports are assigned, the additional multiplexing in the same CDM group is not physically possible. Therefore, such a restriction is necessary.
- If "all of the remaining antenna ports that are orthogonal" described above mean the DMRS ports in the plurality of CDM groups (within CDM groups), the additional multiplexing is possible in the plurality of CDM groups. Therefore, such a restriction may or may not be applied.

<Condition 4>

(Value of the 2CW (corresponding to the right half of the antenna port table) = 0 to 11)

In the case of the 2CW, assigning the vacant DMRS port to another UE may or may not be prohibited.

[Embodiment 2.4]

Embodiment 2.4 describes the case in which DMRS type = enhanced type 2 and DMRS maximum length = 2. Note that in Embodiment 2.4, the contents that may be the same as Embodiment 2.1 through 2.3 (or may be controlled/structured/adjusted, or the like in the same manner) are not repeated in the description.
In the antenna port table shown in FIGS. 13 to 16 described above, if at least one of the following rows (conditions 1 through 4) is indicated, the UE may apply the MU-MIMO scheduling restriction. In other words, the UE may assume that other DMRS ports are not assigned to another UE.

<Condition 1>

(Value = 9, 10, 20 to 22, 42 to 47, 67 and 68, 78 to 80, 100 to 105, 128 and 129)

These row indices are examples of three/four ports being assigned across two CDM groups. Note that Value = 10 may be excluded from such a restriction.

<Condition 2>

(Value = 23, 81)

These row indices are examples of two ports being assigned across two CDM groups. In this case, the UE can perform the channel estimation without considering the FD-OCC based on the knowledge that the MU-MIMO is not applied. In particular, in the case in which the frequency selectivity is strong, both the UE processing load reduction effect and the characteristic improvement effect (since the FD-OCC is substantially not used) are expected.

<Condition 3>

(Value = 116 to 127)

These row indices are examples of three/four ports being assigned in one CDM group.

- If "all of the remaining antenna ports that are orthogonal" described above mean the DMRS ports in the same CDM group (one CDM group) (within a CDM group), when four ports are assigned, the additional multiplexing in the same CDM group is not physically possible. Therefore, such a restriction is necessary.
- If "all of the remaining antenna ports that are orthogonal" described above mean the DMRS ports in the plurality of CDM groups (within CDM groups), the additional multiplexing is possible in the plurality of CDM groups. Therefore, such a restriction may or may not be applied.

<Condition 4>

(Value of the 2CW (corresponding to the right half of the antenna port table) = 0 to 43)

In the case of the 2CW, assigning the vacant DMRS port to another UE may or may not be prohibited.

<Variation>

As described in each of the embodiments described above, if the 2CW is indicated, the restriction described above may or may not be applied.

For the CDM group to which the DMRS port corresponding to the 2CW is mapped, the restriction described above may be applied. In contrast, for the CDM group different from such a CDM group (the CDM group to which the DMRS port of the 2CW is not mapped), the restriction described above may not be applied. For example, the row associated with the number of the DMRS CDM groups without data = 3 in a case in which two CDM groups are applied with enhanced type 2 corresponds to this case.

According to the total number of the MIMO layers that the UE can process, the maximum number of the UEs that can be multiplexed in the MU-MIMO may be restricted. For example, in a case in which its own UE is indicated three DMRS ports with up to four layers, in the same/different CDM groups, one additional DMRS port may be allowed to be assigned to another UE. In this case, in the same/different CDM groups, two or more additional DMRS ports may not be allowed to be assigned to another UE.

This is because the UE is assumed to have a limitation on an MIMO order (the number of layers) to process when receiving the PDSCH using the MU-MIMO. Note that the total number of the MIMO layers that the UE can process may be specified in the specifications, may be configured with a higher layer or may be reported with the UE capability. These values may be configured/specified/reported for each BWP/CC/Band/Frequency range.

According to the second embodiment described above, the UE can appropriately control an application of an MU-MIMO operation.

<Third embodiment>

The third embodiment relates to the switching of the DMRS ports using the MAC CE.

As described above, according to a new DMRS port table, the UE can be indicated the existing (Rel-15) DMRS port (for example, multiplexed by the FD OCC with a length of two)/the new (Rel-18) DMRS port. In this case, the switching between the existing DMRS port/new DMRS port is required.

Therefore, the inventors of the present invention came up with the idea of a switching method between the existing DMRS port/new DMRS port using the MAC CE. This enables a flexible gNB operation. If, for example, the application of the MU-MIMO is not required, the DMRS ports can be switched without reconfiguring the higher layer. This improves a demodulation performance of the PDSCH by the UE.

As described above, the size of a DMRTS port table to be referenced is different for the existing DMRS port and the new DMRS port. In other words, the size of the antenna port field included in the DCI (for example, DCI format 1_1/1_2) varies depending on the MAC CE.

<Option 1>

The size of the antenna port field included in the DCI (for example, DCI format 1_1/1_2) may vary depending on the MAC CE. The UE may assume that the size of the antenna port field included in the DCI varies depending on the MAC CE. A timeline for the switching of a DCI size (the size of the antenna port field included in the DCI) may be specified.

For example, the UE may switch (update) the DCI size to the slot (a next slot) a certain time (3 ms) after an ACK transmission for the reception of the PDSCH carrying (including) the MAC CE.

The switching of the DCI size and the switching of the DMRS ports may be read interchangeably with each other.

<Option 2>

The size of the antenna port field included in the DCI may be constant regardless of the MAC CE. The UE may assume that the size of the antenna port field included in the DCI is constant regardless of the MAC CE.

For example, the UE may be configured/indicated by the higher layer signaling/physical layer signaling that the switching of the existing DMRS port/new DMRS port may occur. In this case, the UE may determine/assume that the size of the antenna port field included in the DCI is of a certain size.

Here, the size of the antenna port field may be the size in a case in which the existing DMRS port is configured, the size in a case in which the new DMRS port is configured, or whichever is larger.

For example, if the size of the antenna port field is 5 bits in the case in which the existing DMRS port is configured, and the size of the antenna port field is 6 bits in the case in which the existing DMRS port is configured, the UE may determine/assume that the certain size is 6 bits.

The UE may be indicated the certain DMRS port by the antenna port field with 6 bits in the DCI when indicated the new DMRS port by the MAC CE. The antenna port table to be referenced may be the table of the first embodiment.

The UE may be indicated the certain DMRS port by some bits/code points in the antenna port field with 6 bits in the DCI when indicated the existing DMRS port by the MAC CE. For example, ignoring (regardless of) the highest bit (Most Significant bit (MSB))/lowest bit (Least Significant bit (LSB)), the UE may be indicated the certain DMRS port by the remaining 5 bits.

The antenna port table to be referenced may be the table of the existing specifications or may be a new table described above. If the new table is to be referenced, only some certain rows may be indicated.

Although the example described above describes the antenna port field in the DCI format (for example, DCI format 1_1/1_2) for scheduling the PDSCH, it is not limited to this. The present example can also be applied to the antenna port field in the DCI format (for example, DCI format 0_1/0_2) for scheduling the PUSCH. In other words, in the present example, the PDSCH can be read interchangeably with the PUSCH to be applied.

According to the third embodiment described above, the UE/gNB can appropriately control the switching of the DMRS ports to be used.

<Fourth embodiment>

The fourth embodiment relates to the antenna port field for the PUSCH.

The antenna port field for the PDSCH described in the first embodiment can be applied in the present embodiment by reading "PDSCH" as "PUSCH." The following Embodiments 4.1 through 4.4 may correspond to Embodiments 1.1 through 1.4 described above, respectively. In a case of the PUSCH, a different table may be specified for each rank.

As with the description above, the entries bracketed by [ ] in each table may be omitted/removed.

[Embodiment 4.1]

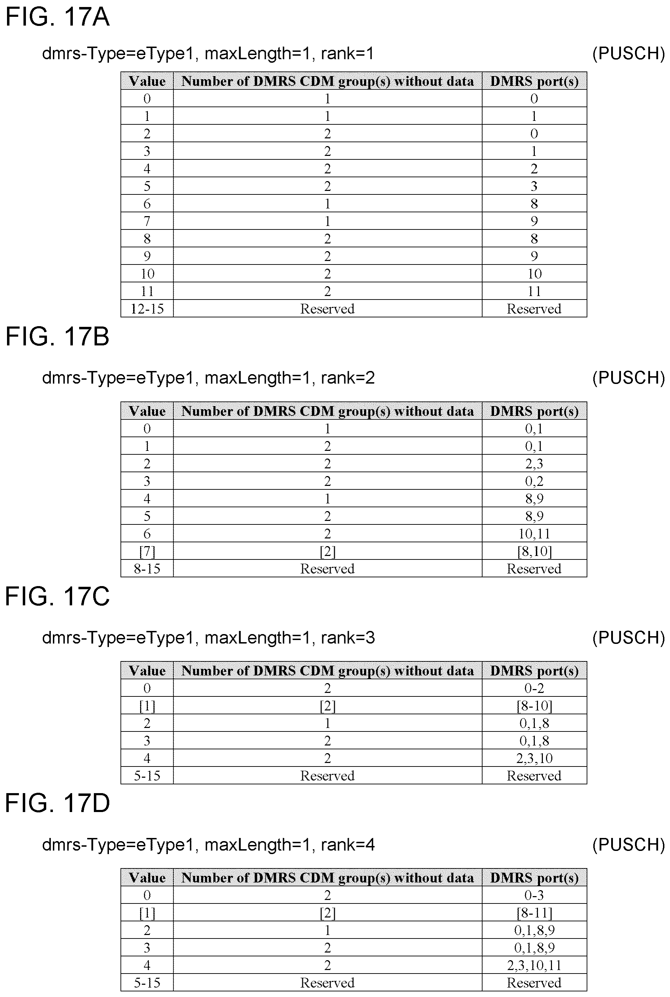

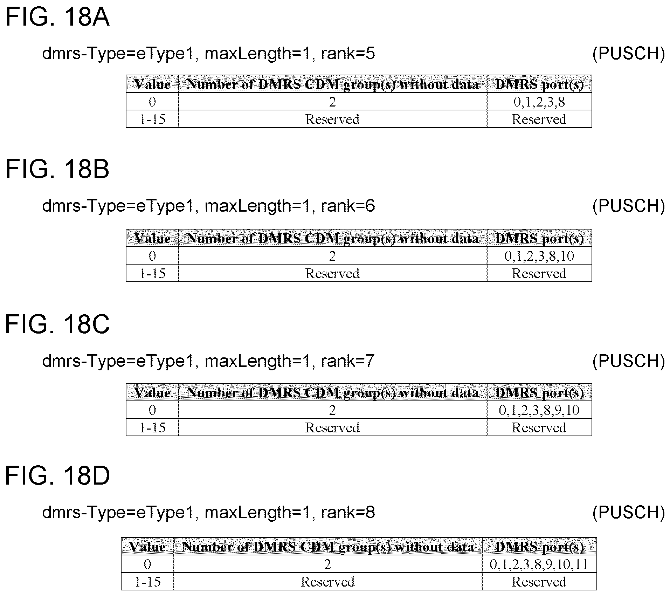

FIGS. 17A to 17D illustrate an example of the antenna port table for the PUSCH in a case in which DMRS type = enhanced type 1 and DMRS maximum length = 1 with the rank of 1 to 4. FIGS. 18A to 18D illustrate an example of the antenna port table for the PUSCH in a case in which DMRS type = enhanced type 1 and DMRS maximum length = 1 with the rank of 5 to 8.

Specifically, FIGS. 17A to 17D correspond to ranks 1 to 4, respectively, and FIGS. 18A to 18D correspond to ranks 5 to 8, respectively. Each of these tables specifies the row entries extracted from FIGS. 5 and 6 described above for each rank (in other words, for each number of the DMRS ports) as a table for each rank. In this case, the Value (the row index) of the row entries extracted may be shifted up for each table (for each rank).

In each table, an extra bit may be specified as a reserved bit (R bit).

[Embodiment 4.2]

In the case in which DMRS type = enhanced type 1 and DMRS maximum length = 2 for the PUSCH, the row entries extracted from the tables in FIGS. 7 to 9 for each rank may be specified as the table for each rank (the antenna port table for the PUSCH). In this case, the Value (the row index) of the row entries extracted may be shifted up for each table (for each rank).

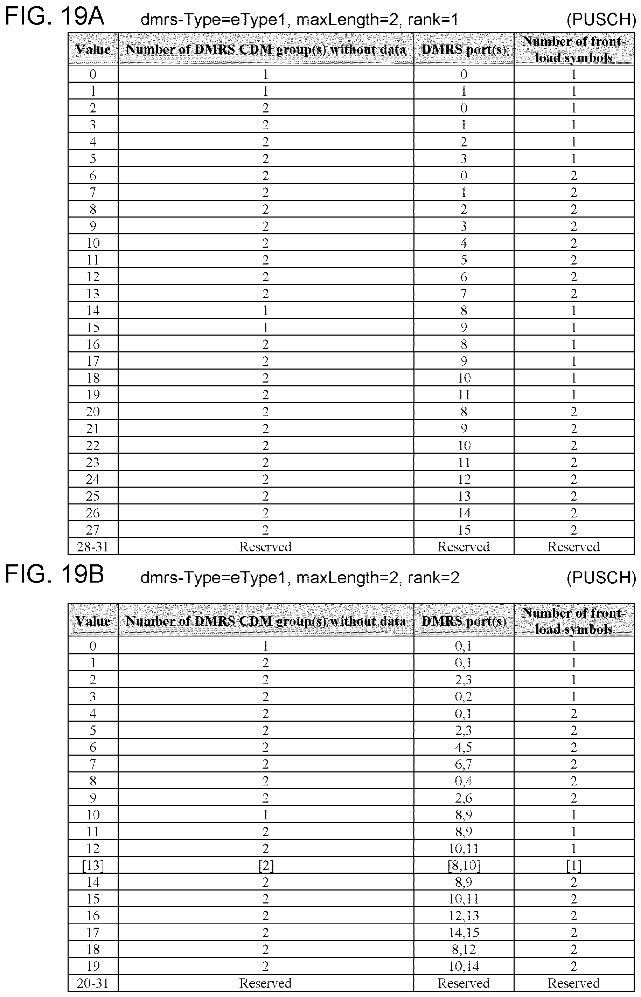

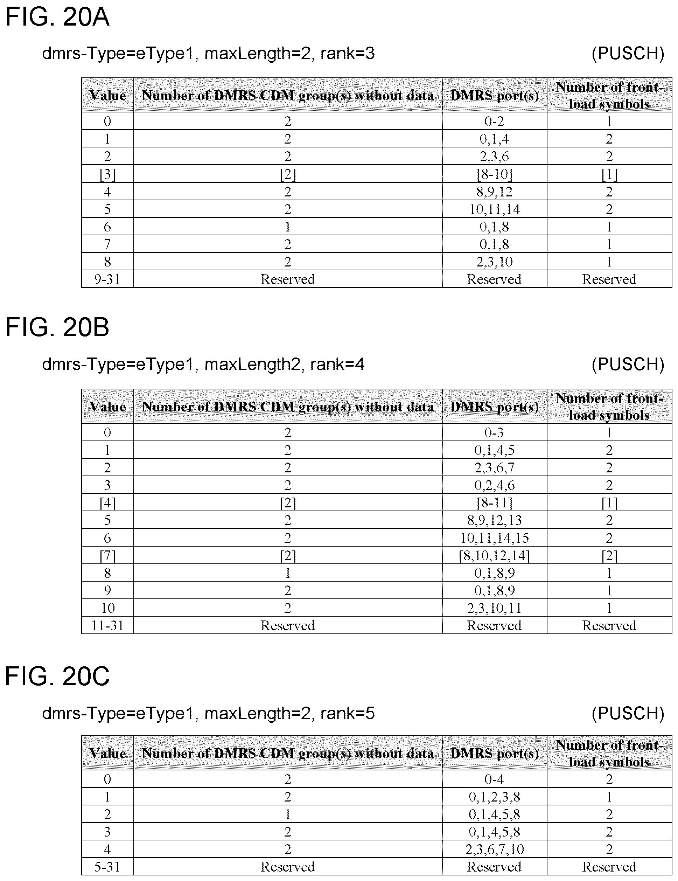

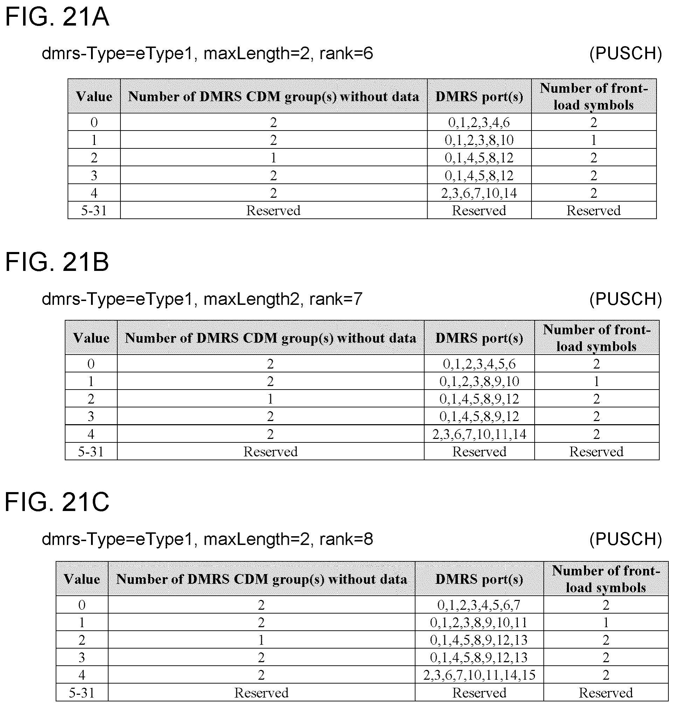

Specifically, FIGS. 19A and 19B illustrate an example of the antenna port table for the PUSCH in a case in which DMRS type = enhanced type 1 and DMRS maximum length = 2 with the rank of 1 and 2. FIGS. 20A to 20C illustrate an example of the antenna port table for the PUSCH in a case in which DMRS type = enhanced type 1 and DMRS maximum length = 2 with the rank of 3 to 5. FIGS. 21A to 21C illustrate an example of the antenna port table for the PUSCH in a case in which DMRS type = enhanced type 1 and DMRS maximum length = 2 with the rank of 6 to 8.

[Embodiment 4.3]

In the case in which DMRS type = enhanced type 2 and DMRS maximum length = 1 for the PUSCH, the row entries extracted from the tables in FIGS. 10 to 12 for each rank may be specified as the table for each rank (the antenna port table for the PUSCH). In this case, the Value (the row index) of the row entries extracted may be shifted up for each table (for each rank).

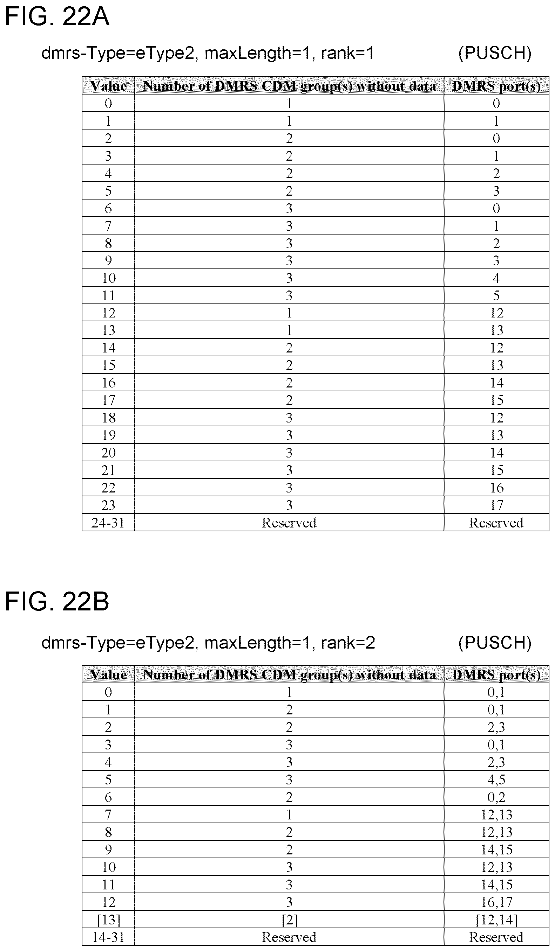

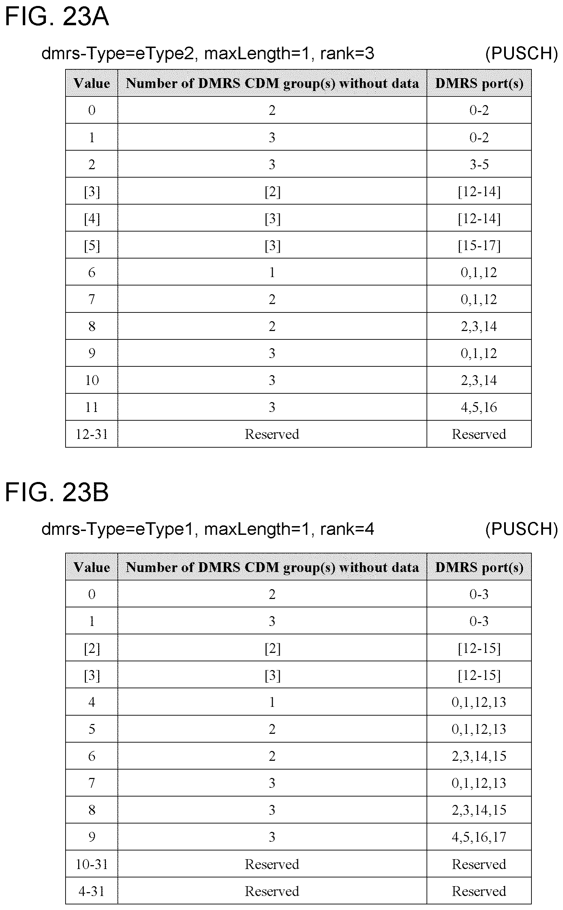

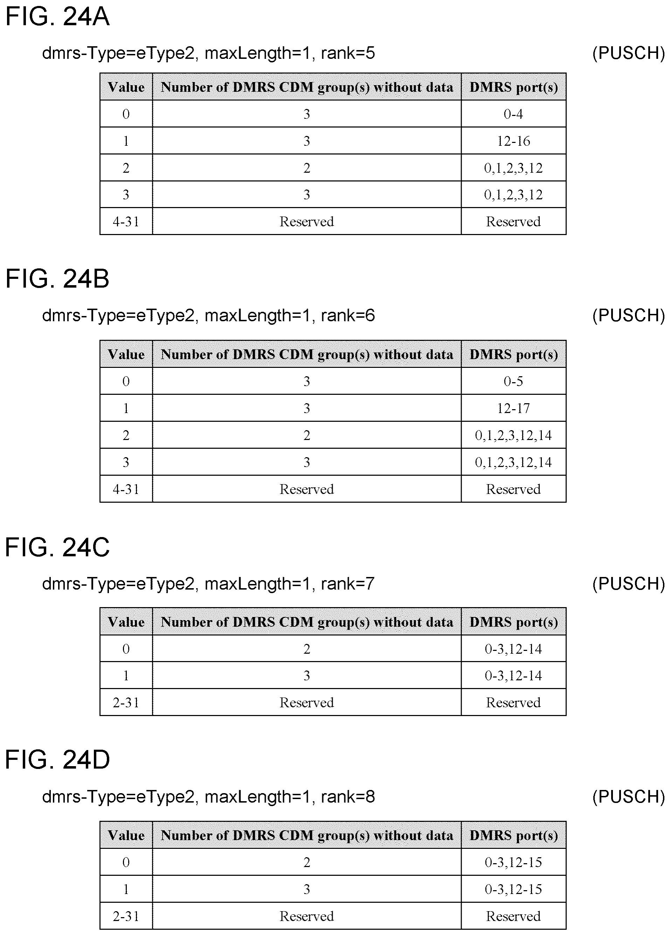

Specifically, FIGS. 22A and 22B illustrate an example of the antenna port table for the PUSCH in a case in which DMRS type = enhanced type 2 and DMRS maximum length = 1 with the rank of 1 and 2. FIGS. 23A and 23B illustrate an example of the antenna port table for the PUSCH in a case in which DMRS type = enhanced type 2 and DMRS maximum length = 1 with the rank of 3 and 4. FIGS. 24A to 24D illustrate an example of the antenna port table for the PUSCH in a case in which DMRS type = enhanced type 2 and DMRS maximum length = 1 with the rank of 5 to 8.

[Embodiment 4.4]

In the case in which DMRS type = enhanced type 2 and DMRS maximum length = 2 for the PUSCH, the row entries extracted from the tables in FIGS. 13 to 16 for each rank may be specified as the table for each rank (the antenna port table for the PUSCH). In this case, the Value (the row index) of the row entries extracted may be shifted up for each table (for each rank).

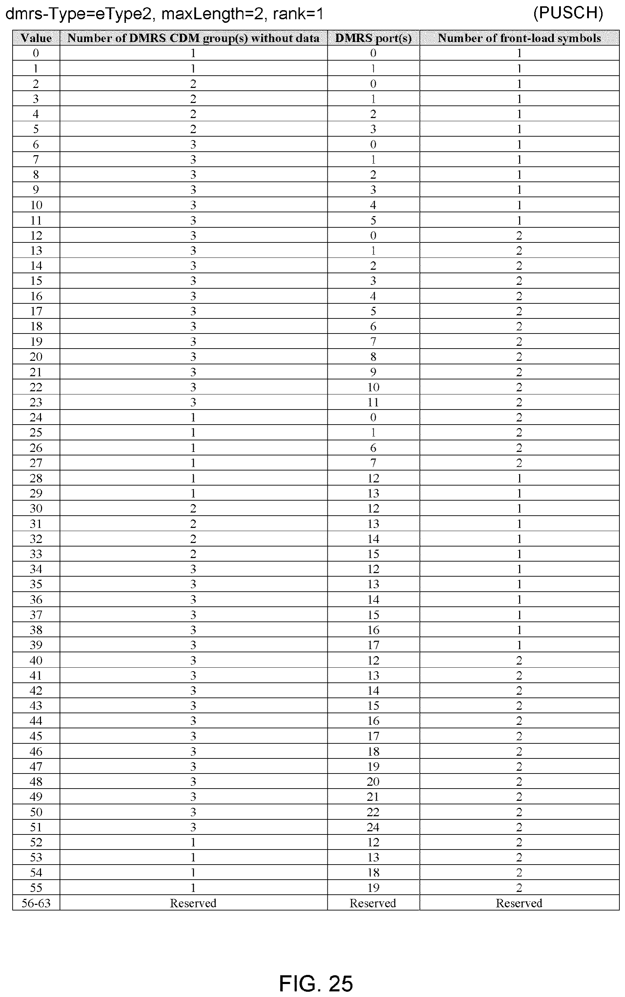

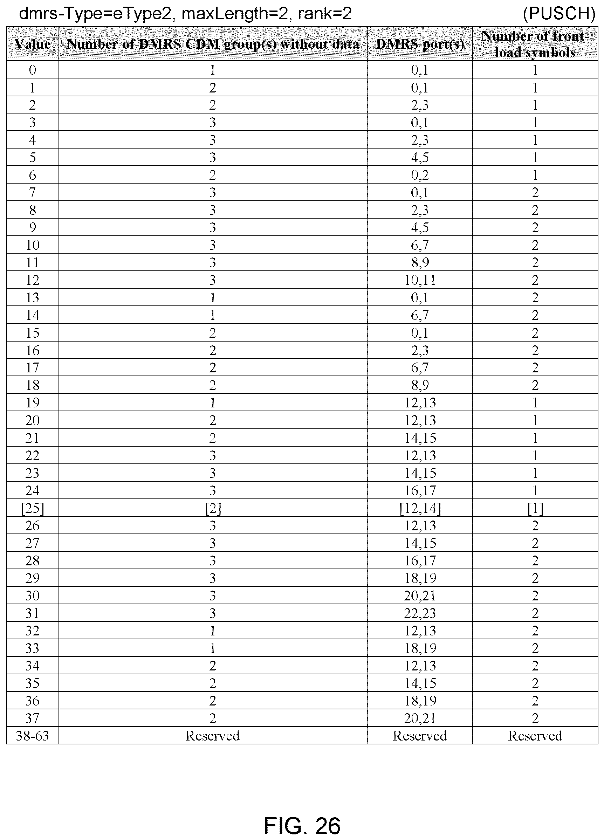

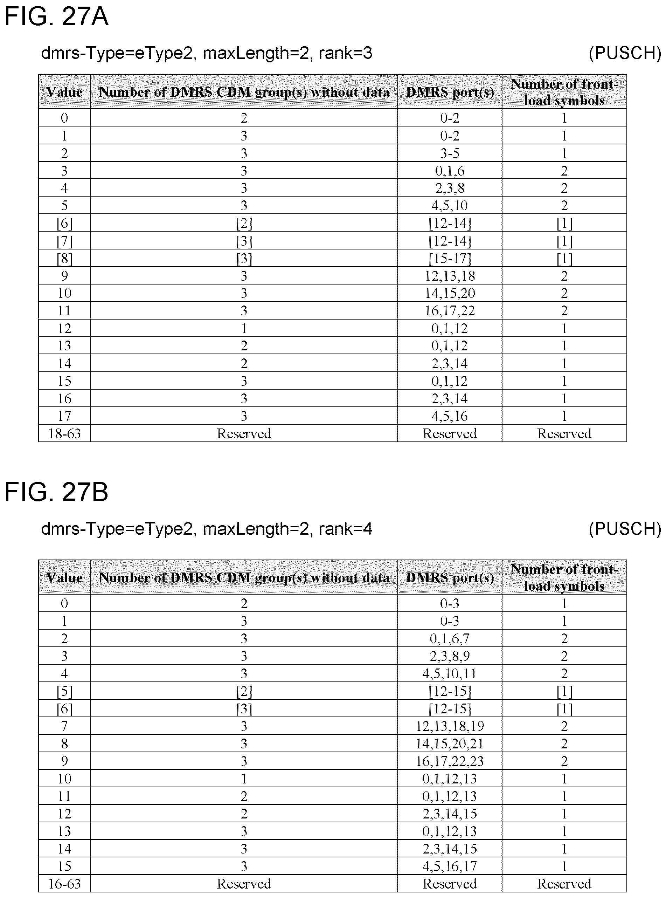

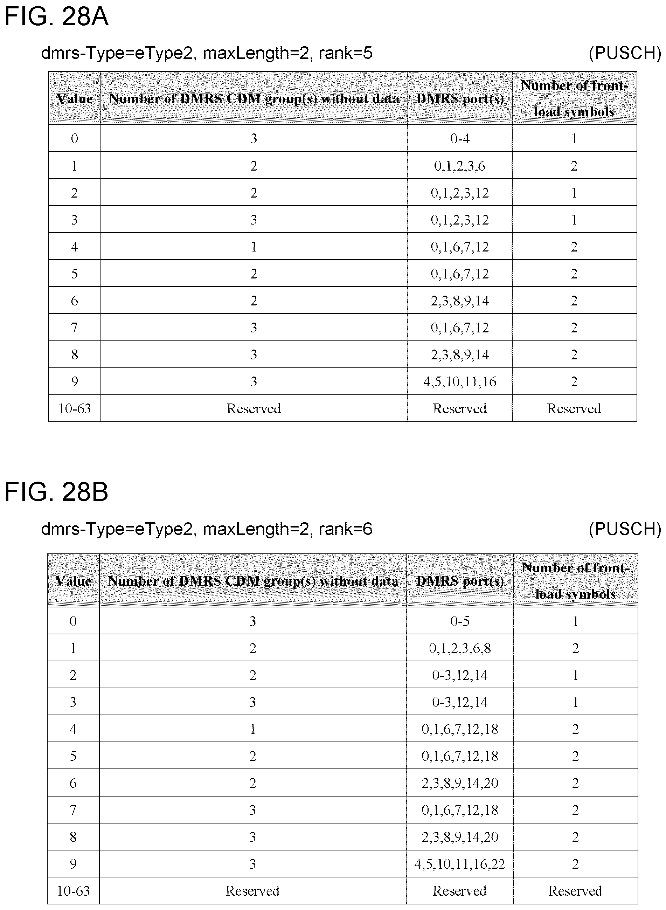

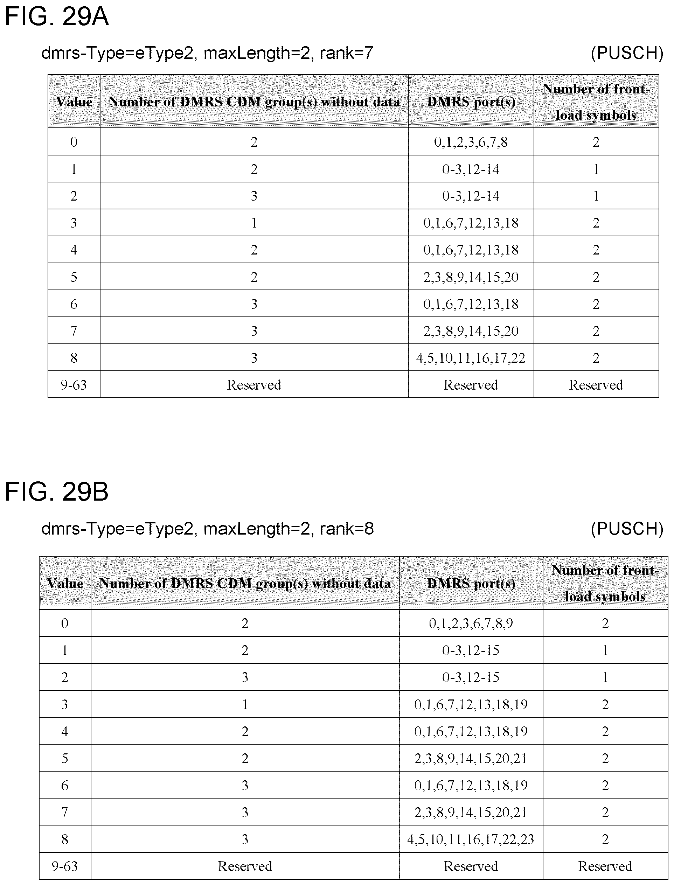

Specifically, FIG. 25 illustrates an example of the antenna port table for the PUSCH in a case in which DMRS type = enhanced type 2 and DMRS maximum length = 2 with the rank of 1. FIG. 26 illustrates an example of the antenna port table for the PUSCH in a case in which DMRS type = enhanced type 2 and DMRS maximum length = 2 with the rank of 2. FIGS. 27A and 27B illustrate an example of the antenna port table for the PUSCH in a case in which DMRS type = enhanced type 2 and DMRS maximum length = 2 with the rank of 3 and 4. FIGS. 28A and 28B illustrate an example of the antenna port table for the PUSCH in a case in which DMRS type = enhanced type 2 and DMRS maximum length = 2 with the rank of 5 and 6. FIGS. 29A and 29B illustrate an example of the antenna port table for the PUSCH in a case in which DMRS type = enhanced type 2 and DMRS maximum length = 2 with the rank of 7 and 8.

[Variation]

In Embodiments 4.1 through 4.4 described above, some row entries may be omitted/removed in the tables corresponding to ranks 5 to 8. For example, in each of the tables of ranks 5 to 8, only the entry of one row may be selected to specify the table. This enables the antenna port field to be reused for other indications for two codewords (for example, a New Data Indicator (NDI) or the modulation and coding scheme (MCS)) in a case of the PUSCH with ranks 5 to 8.

According to the fourth embodiment described above, the UE can appropriately determine the Rel-18 PUSCH DMRS port to be used.

<Variation>

In each of the embodiments described above, the size of the antenna port field in the DCI may be determined based on the number of the rows in the table. For example, when referencing the table with Value = 0 to 31, the UE may determine/assume that the antenna port field with 6 bits exists.

The size of the antenna port field may be configured/indicated by the higher layer signaling/physical layer signaling. Which row of the table can be configured with the antenna port field may be determined by a certain method specified in the specifications or may be configured/indicated by the higher layer signaling/physical layer signaling. The certain method may be, for example, to determine it as the number of the rows that can be indicated by the size (the number of bits) of the antenna port field on the table.

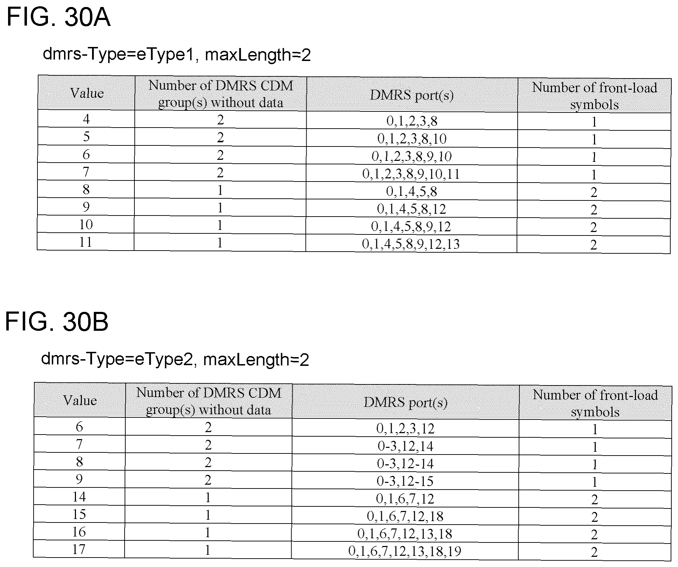

FIG. 30A illustrates an example of the antenna port table for the PDSCH in a case in which DMRS type = enhanced type 1 and DMRS maximum length = 2 with two codewords. In this case, as shown in FIG. 30A, entry groups of both or only one of the entries with Value = 4 to 7 and the entries with Value = 8 to 11 may be specified.

For example, Value = 4 to 7 in FIG. 30A uses two CDM groups with a single symbol for the DMRS. In contrast, Value = 8 to 11 uses one CDM group with a double symbol for the DMRS and another CDM group for the data.

In other words, since the number of the REs that can be used for the data is the same for Value = 4 to 7 and Value = 8 to 11, encoding of the data is equal. Although there is a difference in whether the DMRS is dense in the frequency direction or in the time direction, a difference in characteristics is considered to be almost negligible. Therefore, only one entry group (Value = 4 to 7 or Value = 8 to 11) may be specified.

FIG. 30B illustrates an example of the antenna port table for the PDSCH in the case in which DMRS type = enhanced type 2 and DMRS maximum length = 2 with two codewords. In this case, as shown in FIG. 30B, the entry groups of both or only one of the entries with Value = 6 to 9 and the entries with Value = 14 to 17 may be specified.

For example, Value = 6 to 9 in FIG. 30B uses two CDM groups with the single symbol for the DMRS. In contrast, Value = 14 to 17 uses one CDM group with the double symbol for the DMRS and another CDM group for the data.

In other words, since the number of the REs that can be used for the data is different between Value = 6 to 9 and Value = 14 to 17, the encoding of the data is also different. Specifically, assuming a case in which all of the CDM groups of the double symbol are used for the DMRS represents 1 (the ratio, which may be referred to as a DMRS density), the DMRS is 1/2 for Value = 6 to 9, and 1/3 for Value = 14 to 17.

Thus, since the encoding of the data is different, and the difference in characteristics is considered to be likely to occur, both entry groups may be specified.

On the other hand, since a smaller DMRS density reduces an encoding ratio of the data, only entries with Value = 14 to 17, which have smaller DMRS densities, may be specified.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

In a case where the notification described above is performed by a MAC CE, the MAC CE may be identified by a new logical channel ID (LCID) being included in a MAC sub-header, the new logical channel ID being not defined in an existing specification.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case where a specific condition is satisfied. The specific condition may be defined in a specification, or may be notified to the UE/BS by using higher layer signaling / physical layer signaling.

At least one of the above-described embodiments may be applied only to a UE that has reported specific UE capability or that supports the specific UE capability.

The specific UE capability may indicate at least one of the following:

- supporting specific processing/operation/control/information for at least one of the above-described embodiments;

- supporting, for a PDSCH/PUSCH, the number of DMRS ports greater than that of an existing specification;
- supporting the number of DMRS ports greater than that of an existing specification by using a TD-OCC/FD-OCC/FDM for a DMRS of a PDSCH/PUSCH;
- supporting an FD OCC having a length of 4/6;
- supporting Category 1/2/3 (Category 1/2/3 DMRS port, Category 1/2/3 DMRS port combination);
- supporting MU-MIMO restriction.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of functions for the respective embodiments, any RRC parameter for a specific release (for example, Rel. 18/19), or the like.

In a case where the UE does not support at least one of the specific UE capability or is not configured with the specific information, the UE may apply, for example, Rel-15/16 operation.

(Supplementary Note)

Regarding one embodiment of the present disclosure, the following supplementary notes of the invention will be given.

{Supplementary Note 1}

A terminal including:

a receiving section that, when a combination of a category 1 demodulation reference signal (DMRS) port, a category 2 DMRS port, and a category 3 DMRS port in at least one code division multiplexing (CDM) group is supported, receives downlink control information (DCI) indicating the combination and being for scheduling a downlink shared channel for one or two codewords; and
a control section that determines a DMRS port for the downlink shared channel, based on the combination, wherein the control section controls switching of the DMRS ports, based on information related to the switching of DMRS ports.

{Supplementary Note 2}

The terminal according to supplementary note 1, wherein the receiving section receives the information related to the switching of the DMRS ports by using a Medium Access Control (MAC) control element (CE).

{Supplementary Note 3}

The terminal according to supplementary note 1 or 2, wherein the information related to the switching of the DMRS ports is information related to a size of an antenna port field that indicates the combination.

{Supplementary Note 4}

The terminal according to any one of supplementary notes 1 to 3, wherein the control section switches the DMRS ports after a certain time has elapsed from when the receiving section receives the information related to the switching of the DMRS ports.

(Supplementary Note)

Regarding one embodiment of the present disclosure, the following supplementary notes of the invention will be given.

{Supplementary Note 1}

A terminal comprising:

a receiving section that, when a combination of a category 1 demodulation reference signal (DMRS) port, a category 2 DMRS port, and a category 3 DMRS port in at least one code division multiplexing (CDM) group is supported, receives downlink control information (DCI) indicating the combination and being for scheduling an uplink shared channel for one or two codewords; and
a control section that determines a DMRS port for the uplink shared channel, based on the combination, wherein the control section controls switching of the DMRS ports, based on information related to the switching of DMRS ports.

{Supplementary Note 2}

The terminal according to supplementary note 1, wherein the receiving section receives the information related to the switching of the DMRS ports by using a Medium Access Control (MAC) control element (CE).

{Supplementary Note 3}

The terminal according to supplementary note 1 or 2, wherein the information related to the switching of the DMRS ports is information related to a size of an antenna port field that indicates the combination.

{Supplementary Note 4}

The terminal according to any one of supplementary notes 1 to 3, wherein the control section switches the DMRS ports after a certain time has elapsed from when the receiving section receives the information related to the switching of the DMRS ports.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

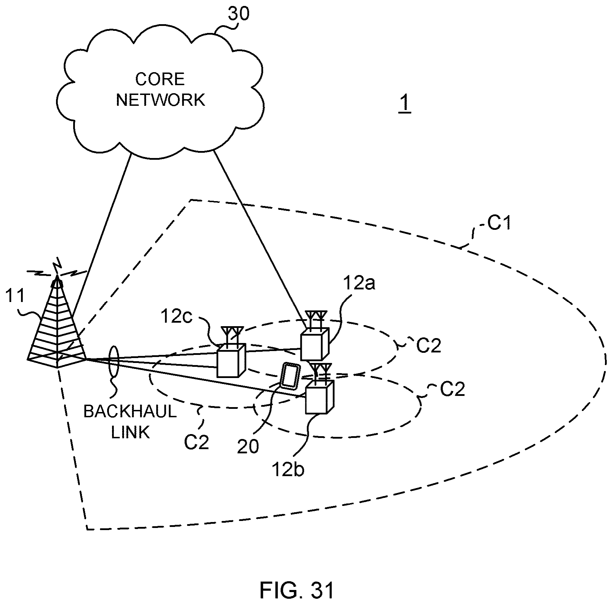

FIG. 31 is a diagram to show an example of a schematic structure of the radio communication system according to one embodiment. The radio communication system 1 (which may be simply referred to as system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

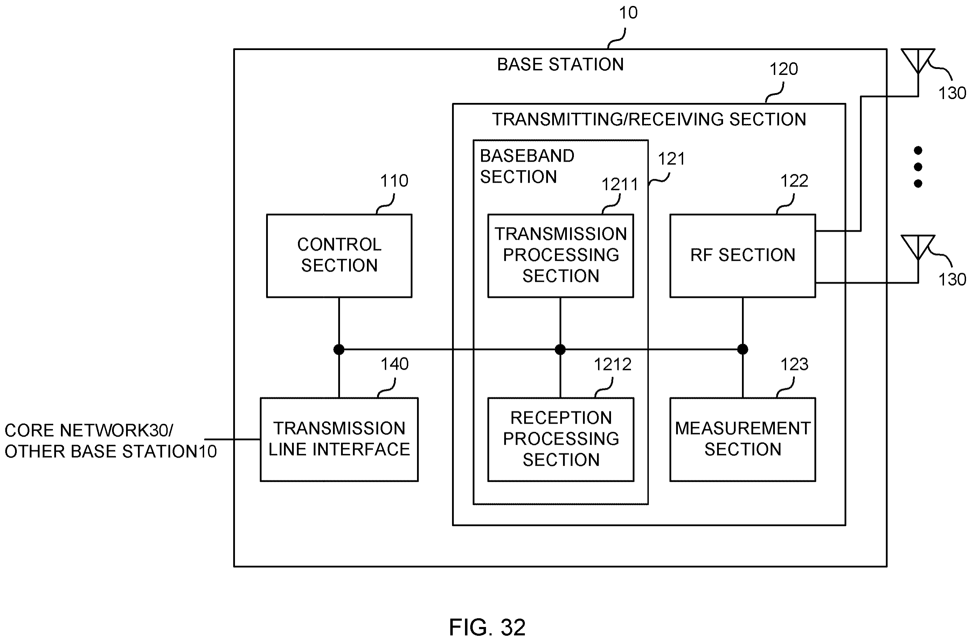

FIG. 32 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may receive, when a combination of a category 1 demodulation reference signal (DMRS) port, a category 2 DMRS port, and a category 3 DMRS port in at least one code division multiplexing (CDM) group is supported, downlink control information (DCI) indicating the combination and being for scheduling a downlink shared channel for one or two codewords.

The transmitting/receiving section 120 may receive, when a combination of a category 1 demodulation reference signal (DMRS) port, a category 2 DMRS port, and a category 3 DMRS port in at least one code division multiplexing (CDM) group is supported, uplink control information (DCI) indicating the combination and being for scheduling a downlink shared channel for one or two codewords. The transmitting/receiving section 120 may receive the downlink shared channel to be transmitted by a DMRS port for the downlink shared channel determined based on the combination. Based on information related to switching of the DMRS ports, the DMRS ports may be switched.

The control section 110 may control transmission of the uplink shared channel by using a DMRS port for the uplink shared channel determined based on the combination. The control section 110 may control switching of the DMRS ports, based on information related to the switching of DMRS ports.

(User Terminal)

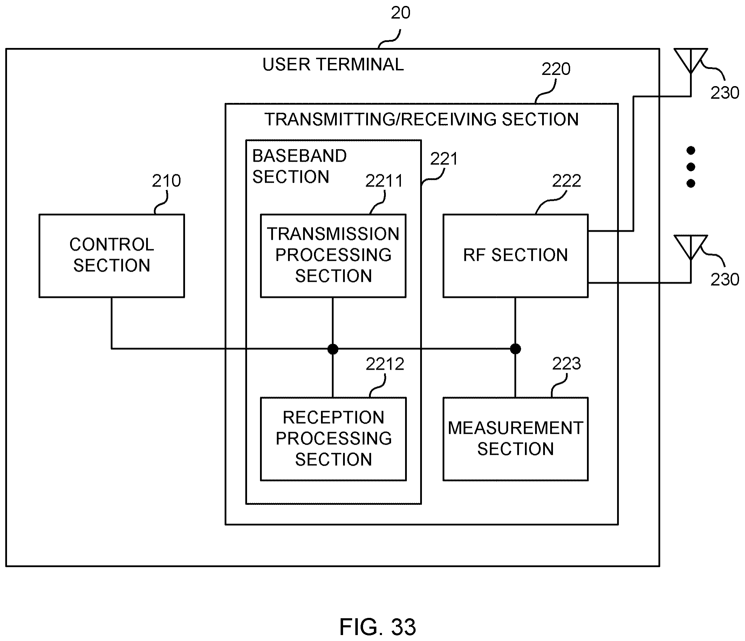

FIG. 33 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive, when a combination of a category 1 demodulation reference signal (DMRS) port, a category 2 DMRS port, and a category 3 DMRS port in at least one code division multiplexing (CDM) group is supported, downlink control information (DCI) indicating the combination and being for scheduling a downlink shared channel for one or two codewords. The transmitting/receiving section 220 may receive the information related to the switching of the DMRS ports by using a Medium Access Control (MAC) control element (CE). The transmitting/receiving section 220 may receive, when a combination of a category 1 demodulation reference signal (DMRS) port, a category 2 DMRS port, and a category 3 DMRS port in at least one code division multiplexing (CDM) group is supported, downlink control information (DCI) indicating the combination and being for scheduling an uplink shared channel for one or two codewords.

The control section 110 may determine a DMRS port for the downlink shared channel, based on the combination, The control section 210 may control switching of the DMRS ports, based on information related to the switching of DMRS ports. The information related to the switching of the DMRS ports may be information related to a size of an antenna port field that indicates the combination. The control section 210 may switch the DMRS ports after a certain time has elapsed from when the receiving section receives the information related to the switching of the DMRS ports.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

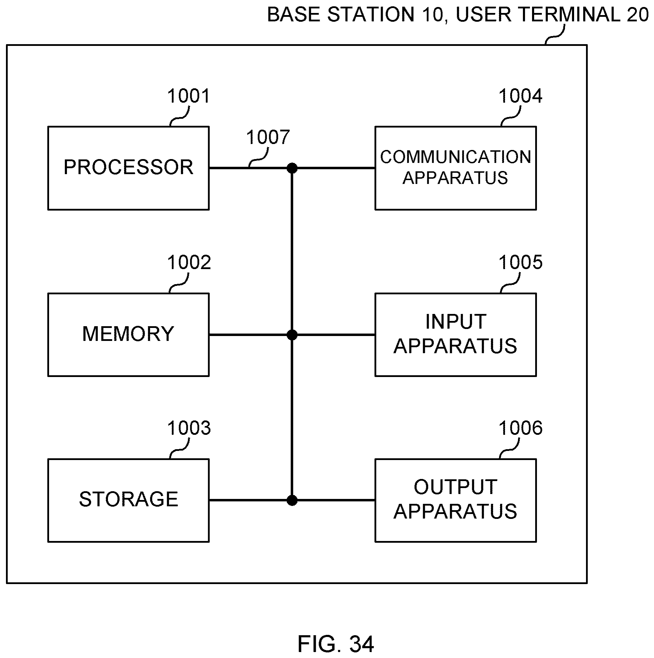

For example, a base station, a user terminal, and so on according to one embodiment of the present disclosure may function as a computer that executes the processes of the radio communication method of the present disclosure. FIG. 34 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

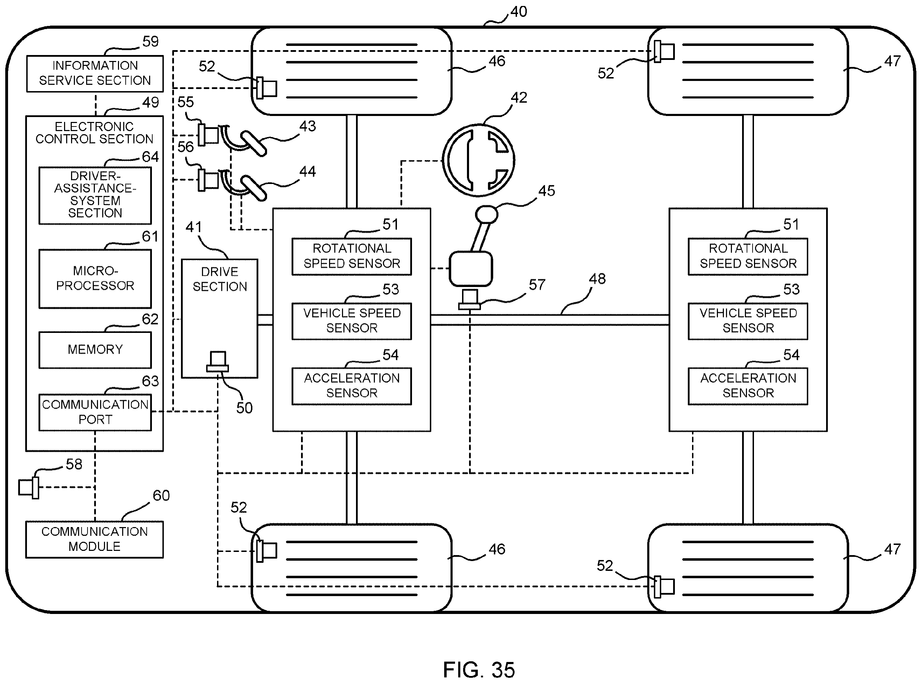

FIG. 35 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices.

The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:

   a receiving section that, when a combination of a category 1 demodulation reference signal (DMRS) port, a category 2 DMRS port, and a category 3 DMRS port in at least one code division multiplexing (CDM) group is supported, receives downlink control information (DCI) indicating the combination and being for scheduling a downlink shared channel for one or two codewords; and
   a control section that determines a DMRS port for the downlink shared channel, based on the combination, wherein
   the control section controls switching of the DMRS ports, based on information related to the switching of DMRS ports.

2. The terminal according to claim 1, wherein
   the receiving section receives the information related to the switching of the DMRS ports by using a Medium Access Control (MAC) control element (CE).

3. The terminal according to claim 1, wherein
   the information related to the switching of the DMRS ports is information related to a size of an antenna port field that indicates the combination.

4. The terminal according to claim 1, wherein
   the control section switches the DMRS ports after a certain time has elapsed from when the receiving section receives the information related to the switching of the DMRS ports.

5. A radio communication method for a terminal, the radio communication method comprising:

receiving, when a combination of a category 1 demodulation reference signal (DMRS) port, a category 2 DMRS port, and a category 3 DMRS port in at least one code division multiplexing (CDM) group is supported, downlink control information (DCI) indicating the combination and being for scheduling a downlink shared channel for one or two codewords;

determining a DMRS port for the downlink shared channel, based on the combination; and

controlling switching of the DMRS ports, based on information related to the switching of DMRS ports.

6. A base station comprising:

a transmitting section that, when a combination of a category 1 demodulation reference signal (DMRS) port, a category 2 DMRS port, and a category 3 DMRS port in at least one code division multiplexing (CDM) group is supported, transmits downlink control information (DCI) indicating the combination and being for scheduling a downlink shared channel for one or two codewords; and

a receiving section that receives the downlink shared channel to be transmitted by a DMRS port for the downlink shared channel determined based on the combination, wherein

based on information related to switching of the DMRS ports, the DMRS ports are switched.

## Parameters for PDSCH DM-RS configuration type 1.

| $p$ | CDM group $\lambda$ | $\Delta$ | $w_f(k')$ | | $w_t(l')$ | |
|------|------|------|------|------|------|------|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

## Parameters for PDSCH DM-RS configuration type 2.

| $p$ | CDM group $\lambda$ | $\Delta$ | $w_f(k')$ | | $w_t(l')$ | |
|------|------|------|------|------|------|------|
| | | | $k' = 0$ | $k' = 1$ | $l' = 0$ | $l' = 1$ |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

## FIG. 1

## Parameters for PUSCH DM-RS configuration type 1.

| $\widetilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 1 | +1 | +1 | +1 | +1 |
| 3 | 1 | 1 | +1 | -1 | +1 | +1 |
| 4 | 0 | 0 | +1 | +1 | +1 | -1 |
| 5 | 0 | 0 | +1 | -1 | +1 | -1 |
| 6 | 1 | 1 | +1 | +1 | +1 | -1 |
| 7 | 1 | 1 | +1 | -1 | +1 | -1 |

## Parameters for PUSCH DM-RS configuration type 2.

| $\widetilde{p}$ | CDM group $\lambda$ | $\Delta$ | $w_f(k')$ | | $w_t(l')$ | |
|---|---|---|---|---|---|---|
| | | | $k'=0$ | $k'=1$ | $l'=0$ | $l'=1$ |
| 0 | 0 | 0 | +1 | +1 | +1 | +1 |
| 1 | 0 | 0 | +1 | -1 | +1 | +1 |
| 2 | 1 | 2 | +1 | +1 | +1 | +1 |
| 3 | 1 | 2 | +1 | -1 | +1 | +1 |
| 4 | 2 | 4 | +1 | +1 | +1 | +1 |
| 5 | 2 | 4 | +1 | -1 | +1 | +1 |
| 6 | 0 | 0 | +1 | +1 | +1 | -1 |
| 7 | 0 | 0 | +1 | -1 | +1 | -1 |
| 8 | 1 | 2 | +1 | +1 | +1 | -1 |
| 9 | 1 | 2 | +1 | -1 | +1 | -1 |
| 10 | 2 | 4 | +1 | +1 | +1 | -1 |
| 11 | 2 | 4 | +1 | -1 | +1 | -1 |

## FIG. 2

FIG. 3A

| FD-OCC index | Wf(0) | Wf(1) | Wf(2) | Wf(3) |
|---|---|---|---|---|
| 0 | +1 | +1 | +1 | +1 |
| 1 | +1 | -1 | +1 | -1 |
| 2 | +1 | +1 | -1 | -1 |
| 3 | +1 | -1 | -1 | +1 |

FIG. 3B

| FD-OCC index | Wf(0) | Wf(1) | Wf(2) | Wf(3) |
|---|---|---|---|---|
| 0 | +1 | +1 | +1 | +1 |
| 1 | +1 | -1 | +1 | -1 |
| 2 | +1 | +j | -1 | -j |
| 3 | +1 | -j | -1 | +j |

FIG. 3C

| TD-OCC index | Wt(0) | Wt(1) |
|---|---|---|
| 0 | +1 | +1 |
| 1 | +1 | -1 |

# FIG. 4A

eType1

**CDM group#0**  **CDM group#1**

| | | | | | | | | |
|---|---|---|---|---|---|---|---|---|
| **TD-OCC#0** | port#0 | port#1 | port#8 | port#9 | port#2 | port#3 | port#10 | port#11 |
| | ● | ● | ● | ● | ● | ● | ● | ● |
| **TD-OCC#1** | port#4 | port#5 | port#12 | port#13 | port#6 | port#7 | port#14 | port#15 |
| | ● | ● | ● | ● | ● | ● | ● | ● |
| | FD-OCC#0 | FD-OCC#1 | FD-OCC#2 | FD-OCC#3 | FD-OCC#0 | FD-OCC#1 | FD-OCC#2 | FD-OCC#3 |

# FIG. 4B

eType2

**CDM group#0**  **CDM group#1**  **CDM group#2**

| | | | | | | | | | | | | |
|---|---|---|---|---|---|---|---|---|---|---|---|---|
| **TD-OCC#0** | port#0 | port#1 | port#12 | port#13 | port#2 | port#3 | port#14 | port#15 | port#4 | port#5 | port#16 | port#17 |
| | ● | ● | ● | ● | ● | ● | ● | ● | ● | ● | ● | ● |
| **TD-OCC#1** | port#6 | port#7 | port#18 | port#19 | port#8 | port#9 | port#20 | port#21 | port#10 | port#11 | port#22 | port#23 |
| | ● | ● | ● | ● | ● | ● | ● | ● | ● | ● | ● | ● |
| | FD-OCC#0 | FD-OCC#1 | FD-OCC#2 | FD-OCC#3 | FD-OCC#0 | FD-OCC#1 | FD-OCC#2 | FD-OCC#3 | FD-OCC#0 | FD-OCC#1 | FD-OCC#2 | FD-OCC#3 |

EP 4 693 942 A1

dmrs-Type=eType1, maxLength=1 (PDSCH)

| One Codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Notes | Value | Number of DMRS CDM group(s) without data | DMRS port(s) | Notes |
| 0 | 1 | 0 | Cat. 1 | 0 | 2 | 0,1,2,3,8 | Rank 5-8 with one DMRS symbol |
| 1 | 1 | 1 | | 1 | 2 | 0,1,2,3,8,10 | |
| 2 | 1 | 0,1 | | 2 | 2 | 0,1,2,3,8,9,10 | |
| 3 | 2 | 0 | | 3 | 2 | 0,1,2,3,8,9,10,11 | |
| 4 | 2 | 1 | | | | | |
| 5 | 2 | 2 | | | | | |
| 6 | 2 | 3 | | | | | |
| 7 | 2 | 0,1 | | | | | |
| 8 | 2 | 2,3 | | | | | |
| 9 | 2 | 0-2 | | | | | |
| 10 | 2 | 0-3 | | | | | |
| 11 | 2 | 0,2 | | | | | |
| 12 | 1 | 8 | Cat.2 | | | | |
| 13 | 1 | 9 | | | | | |
| 14 | 1 | 8,9 | | | | | |
| 15 | 2 | 8 | | | | | |
| 16 | 2 | 9 | | | | | |
| 17 | 2 | 10 | | | | | |
| 18 | 2 | 11 | | | | | |
| 19 | 2 | 8,9 | | | | | |
| 20 | 2 | 10,11 | | | | | |
| 21 | [2] | [8-10] | | | | | |
| 22 | [2] | [8-11] | | | | | |
| 23 | [2] | [8, 10], [9, 11] | | | | | |
| 24 | 1 | 0,1,8 | Cat.3 | | | | |
| 25 | 1 | 0,1,8,9 | | | | | |
| 26 | 2 | 0,1,8 | | | | | |
| 27 | 2 | 0,1,8,9 | | | | | |
| 28 | 2 | 2,3,10 | | | | | |
| 29 | 2 | 2,3,10,11 | | | | | |

# FIG. 5

dmrs-Type=eType1, maxLength=1     (PDSCH)

| One Codeword: Codeword 0 enabled, Codeword 1 disabled | | |
| Value | Number of DMRS CDM group(s) without data | DMRS port(s) |
|---|---|---|
| ... | ... | ... |
| 30 | 2 | 0,2,3 |

FIG. 6

dmrs-Type=eType1, maxLength=2　　　　　　　　　　　　　　　　　(PDSCH)

| One Codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4 | 2 | 0,1,2,3,8 | 1 |
| 5 | 2 | 2 | 1 | 5 | 2 | 0,1,2,3,8,10 | 1 |
| 6 | 2 | 3 | 1 | 6 | 2 | 0,1,2,3,8,9,10 | 1 |
| 7 | 2 | 0,1 | 1 | 7 | 2 | 0,1,2,3,8,9,10,11 | 1 |
| 8 | 2 | 2,3 | 1 | 8 | 1 | 0,1,4,5,8 | 2 |
| 9 | 2 | 0-2 | 1 | 9 | 1 | 0,1,4,5,8,12 | 2 |
| 10 | 2 | 0-3 | 1 | 10 | 1 | 0,1,4,5,8,9,12 | 2 |
| 11 | 2 | 0,2 | 1 | 11 | 1 | 0,1,4,5,8,9,12,13 | 2 |
| 12 | 2 | 0 | 2 | 12 | 2 | 0,1,4,5,8 | 2 |
| 13 | 2 | 1 | 2 | 13 | 2 | 0,1,4,5,8,12 | 2 |
| 14 | 2 | 2 | 2 | 14 | 2 | 0,1,4,5,8,9,12 | 2 |
| 15 | 2 | 3 | 2 | 15 | 2 | 0,1,4,5,8,9,12,13 | 2 |
| 16 | 2 | 4 | 2 | 16 | 2 | 2,3,6,7,10 | 2 |
| 17 | 2 | 5 | 2 | 17 | 2 | 2,3,6,7,10,14 | 2 |
| 18 | 2 | 6 | 2 | 18 | 2 | 2,3,6,7,10,11,14 | 2 |
| 19 | 2 | 7 | 2 | 19 | 2 | 2,3,6,7,10,11,14,15 | 2 |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| [30 | 2 | 0,2,4,6 | 2] | | | | |
| 31 | 1 | 8 | 1 | | | | |
| 32 | 1 | 9 | 1 | | | | |
| 33 | 1 | 8,9 | 1 | | | | |
| 34 | 2 | 8 | 1 | | | | |
| 35 | 2 | 9 | 1 | | | | |
| 36 | 2 | 10 | 1 | | | | |
| 37 | 2 | 11 | 1 | | | | |
| 38 | 2 | 8,9 | 1 | | | | |
| 39 | 2 | 10,11 | 1 | | | | |
| [40 | 2 | 8-10 | 1] | | | | |
| [41 | 2 | 8-11 | 1] | | | | |
| [42 | 2 | 8,10 | 1] | | | | |

# FIG. 7

dmrs-Type=eType1, maxLength=2                                    (PDSCH)

| 43 | 2 | 8 | 2 | | | | |
|---|---|---|---|---|---|---|---|
| 44 | 2 | 9 | 2 | | | | |
| 45 | 2 | 10 | 2 | | | | |
| 46 | 2 | 11 | 2 | | | | |
| 47 | 2 | 12 | 2 | | | | |
| 48 | 2 | 13 | 2 | | | | |
| 49 | 2 | 14 | 2 | | | | |
| 50 | 2 | 15 | 2 | | | | |
| 51 | 2 | 8,9 | 2 | | | | |
| 52 | 2 | 10,11 | 2 | | | | |
| 53 | 2 | 12,13 | 2 | | | | |
| 54 | 2 | 14,15 | 2 | | | | |
| 55 | 2 | 8,12 | 2 | | | | |
| 56 | 2 | 10,14 | 2 | | | | |
| 57 | 2 | 8,9,12 | 2 | | | | |
| 58 | 2 | 10,11,14 | 2 | | | | |
| 59 | 2 | 8,9,12,13 | 2 | | | | |
| 60 | 2 | 10,11,14,15 | 2 | | | | |
| [61 | 2 | 8,10,12,14 | 2] | | | | |
| 62 | 1 | 0,1,8 | 1 | | | | |
| 63 | 1 | 0,1,8,9 | 1 | | | | |
| 64 | 2 | 0,1,8 | 1 | | | | |
| 65 | 2 | 0,1,8,9 | 1 | | | | |
| 66 | 2 | 2,3,10 | 1 | | | | |
| 67 | 2 | 2,3,10,11 | 1 | | | | |

## FIG. 8

# FIG. 9A

dmrs-Type=eType1, maxLength=2    (PDSCH)

| | One Codeword: Codeword 0 enabled, Codeword 1 disabled | | |
| Value | Number of DMRS CDM group(s) without data | DMRS port(s) | Number of front-load symbols |
|---|---|---|---|
| 31 | 2 | 0,2,3 | 1 |

# FIG. 9B

dmrs-Type=eType1, maxLength=2    (PDSCH)

| | One Codeword: Codeword 0 enabled, Codeword 1 disabled | | |
| Value | Number of DMRS CDM group(s) without data | DMRS port(s) | Number of front-load symbols |
|---|---|---|---|
| ... | ... | ... | ... |
| 68 | 2 | 0,2,3 | 1 |

dmrs-Type=eType2, maxLength=1  (PDSCH)

| One codeword: Codeword 0 enabled, Codeword 1 disabled | | | Two codewords: Codeword 0 enabled, Codeword 1 enabled | | |
|---|---|---|---|---|---|
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2 | 3 | 12-16 |
| 3 | 2 | 0 | 3 | 3 | 12-17 |
| 4 | 2 | 1 | 4 | 2 | 0,1,2,3,12 |
| 5 | 2 | 2 | 5 | 2 | 0,1,2,3,12,14 |
| 6 | 2 | 3 | 6 | 2 | 0-3,12-14 |
| 7 | 2 | 0,1 | 7 | 2 | 0-3,12-15 |
| 8 | 2 | 2,3 | 8 | 3 | 0,1,2,3,12 |
| 9 | 2 | 0-2 | 9 | 3 | 0,1,2,3,12,14 |
| 10 | 2 | 0-3 | 10 | 3 | 0-3,12-14 |
| 11 | 3 | 0 | 11 | 3 | 0-3,12-15 |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 1 | 12 | | | |
| 25 | 1 | 13 | | | |
| 26 | 1 | 12,13 | | | |

FIG. 10

dmrs-Type=eType2, maxLength=1                                   (PDSCH)

| | | | | | |
|---|---|---|---|---|---|
| 27 | 2 | 12 | | | |
| 28 | 2 | 13 | | | |
| 29 | 2 | 14 | | | |
| 30 | 2 | 15 | | | |
| 31 | 2 | 12,13 | | | |
| 32 | 2 | 14,15 | | | |
| [33 | 2 | 12-14] | | | |
| [34 | 2 | 12-15] | | | |
| 35 | 3 | 12 | | | |
| 36 | 3 | 13 | | | |
| 37 | 3 | 14 | | | |
| 38 | 3 | 15 | | | |
| 39 | 3 | 16 | | | |
| 40 | 3 | 17 | | | |
| 41 | 3 | 12,13 | | | |
| 42 | 3 | 14,15 | | | |
| 43 | 3 | 16,17 | | | |
| [44 | 3 | 12-14] | | | |
| [45 | 3 | 15-17] | | | |
| [46 | 3 | 12-15] | | | |
| [47 | 2 | 12,14] | | | |
| 48 | 1 | 0,1,12 | | | |
| 49 | 1 | 0,1,12,13 | | | |
| 50 | 2 | 0,1,12 | | | |
| 51 | 2 | 0,1,12,13 | | | |
| 52 | 2 | 2,3,14 | | | |
| 53 | 2 | 2,3,14,15 | | | |
| 54 | 3 | 0,1,12 | | | |
| 55 | 3 | 0,1,12,13 | | | |
| 56 | 3 | 2,3,14 | | | |
| 57 | 3 | 2,3,14,15 | | | |
| 58 | 3 | 4,5,16 | | | |
| 59 | 3 | 4,5,16,17 | | | |

FIG. 11

# FIG. 12A

dmrs-Type=eType2, maxLength=1    (PDSCH)

| One Codeword: Codeword 0 enabled, Codeword 1 disabled | | |
|---|---|---|
| Value | Number of DMRS CDM group(s) without data | DMRS port(s) |
| 24 | 2 | 0,2,3 |

# FIG. 12B

dmrs-Type=eType2, maxLength=1    (PDSCH)

| One Codeword: Codeword 0 enabled, Codeword 1 disabled | | |
|---|---|---|
| Value | Number of DMRS CDM group(s) without data | DMRS port(s) |
| ... | ... | ... |
| 60 | 2 | 0,2,3 |

dmrs-Type=eType2, maxLength=2 (PDSCH)

| One codeword: Codeword 0 enabled, Codeword 1 disabled | | | | Two Codewords: Codeword 0 enabled, Codeword 1 enabled | | | |
|---|---|---|---|---|---|---|---|
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6 | 2 | 0,1,2,3,12 | 1 |
| 7 | 2 | 0,1 | 1 | 7 | 2 | 0-3,12,14 | 1 |
| 8 | 2 | 2,3 | 1 | 8 | 2 | 0-3,12-14 | 1 |
| 9 | 2 | 0-2 | 1 | 9 | 2 | 0-3,12-15 | 1 |
| 10 | 2 | 0-3 | 1 | 10 | 3 | 0,1,2,3,12 | 1 |
| 11 | 3 | 0 | 1 | 11 | 3 | 0-3,12,14 | 1 |
| 12 | 3 | 1 | 1 | 12 | 3 | 0-3,12-14 | 1 |
| 13 | 3 | 2 | 1 | 13 | 3 | 0-3,12-15 | 1 |
| 14 | 3 | 3 | 1 | 14 | 1 | 0,1,6,7,12 | 2 |
| 15 | 3 | 4 | 1 | 15 | 1 | 0,1,6,7,12,18 | 2 |
| 16 | 3 | 5 | 1 | 16 | 1 | 0,1,6,7,12,13,18 | 2 |
| 17 | 3 | 0,1 | 1 | 17 | 1 | 0,1,6,7,12,13,18,19 | 2 |
| 18 | 3 | 2,3 | 1 | 18 | 2 | 0,1,6,7,12 | 2 |
| 19 | 3 | 4,5 | 1 | 19 | 2 | 0,1,6,7,12,18 | 2 |
| 20 | 3 | 0-2 | 1 | 20 | 2 | 0,1,6,7,12,13,18 | 2 |
| 21 | 3 | 3-5 | 1 | 21 | 2 | 0,1,6,7,12,13,18,19 | 2 |
| 22 | 3 | 0-3 | 1 | 22 | 2 | 2,3,8,9,14 | 2 |
| 23 | 2 | 0,2 | 1 | 23 | 2 | 2,3,8,9,14,20 | 2 |
| 24 | 3 | 0 | 2 | 24 | 2 | 2,3,8,9,14,15,20 | 2 |
| 25 | 3 | 1 | 2 | 25 | 2 | 2,3,8,9,14,15,20,21 | 2 |
| 26 | 3 | 2 | 2 | 26 | 3 | 0,1,6,7,12 | 2 |
| 27 | 3 | 3 | 2 | 27 | 3 | 0,1,6,7,12,18 | 2 |
| 28 | 3 | 4 | 2 | 28 | 3 | 0,1,6,7,12,13,18 | 2 |
| 29 | 3 | 5 | 2 | 29 | 3 | 0,1,6,7,12,13,18,19 | 2 |
| 30 | 3 | 6 | 2 | 30 | 3 | 2,3,8,9,14 | 2 |
| 31 | 3 | 7 | 2 | 31 | 3 | 2,3,8,9,14,20 | 2 |
| 32 | 3 | 8 | 2 | 32 | 3 | 2,3,8,9,14,15,20 | 2 |
| 33 | 3 | 9 | 2 | 33 | 3 | 2,3,8,9,14,15,20,21 | 2 |
| 34 | 3 | 10 | 2 | 34 | 3 | 4,5,10,11,16 | 2 |
| 35 | 3 | 11 | 2 | 35 | 3 | 4,5,10,11,16,22 | 2 |
| 36 | 3 | 0,1 | 2 | 36 | 3 | 4,5,10,11,16,17,22 | 2 |
| 37 | 3 | 2,3 | 2 | 37 | 3 | 4,5,10,11,16,17,22,23 | 2 |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |

FIG. 13

dmrs-Type=eType2, maxLength=2 (PDSCH)

| 44 | 3 | 4,5,10 | 2 | | | | |
|---|---|---|---|---|---|---|---|
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58 | 1 | 12 | 1 | | | | |
| 59 | 1 | 13 | 1 | | | | |
| 60 | 1 | 12,13 | 1 | | | | |
| 61 | 2 | 12 | 1 | | | | |
| 62 | 2 | 13 | 1 | | | | |
| 63 | 2 | 14 | 1 | | | | |
| 64 | 2 | 15 | 1 | | | | |
| 65 | 2 | 12,13 | 1 | | | | |
| 66 | 2 | 14,15 | 1 | | | | |
| [67 | 2 | 12-14 | 1] | | | | |
| [68 | 2 | 12-15 | 1] | | | | |
| 69 | 3 | 12 | 1 | | | | |
| 70 | 3 | 13 | 1 | | | | |
| 71 | 3 | 14 | 1 | | | | |
| 72 | 3 | 15 | 1 | | | | |
| 73 | 3 | 16 | 1 | | | | |
| 74 | 3 | 17 | 1 | | | | |
| 75 | 3 | 12,13 | 1 | | | | |
| 76 | 3 | 14,15 | 1 | | | | |
| 77 | 3 | 16,17 | 1 | | | | |
| [78 | 3 | 12-14 | 1] | | | | |
| [79 | 3 | 15-17 | 1] | | | | |
| [80 | 3 | 12-15 | 1] | | | | |
| [81 | 2 | 12,14 | 1] | | | | |

## FIG. 14

dmrs-Type=eType2, maxLength=2          (PDSCH)

| | | | | | | | |
|---|---|---|---|---|---|---|---|
| 82 | 3 | 12 | 2 | | | | |
| 83 | 3 | 13 | 2 | | | | |
| 84 | 3 | 14 | 2 | | | | |
| 85 | 3 | 15 | 2 | | | | |
| 86 | 3 | 16 | 2 | | | | |
| 87 | 3 | 17 | 2 | | | | |
| 88 | 3 | 18 | 2 | | | | |
| 89 | 3 | 19 | 2 | | | | |
| 90 | 3 | 20 | 2 | | | | |
| 91 | 3 | 21 | 2 | | | | |
| 92 | 3 | 22 | 2 | | | | |
| 93 | 3 | 24 | 2 | | | | |
| 94 | 3 | 12,13 | 2 | | | | |
| 95 | 3 | 14,15 | 2 | | | | |
| 96 | 3 | 16,17 | 2 | | | | |
| 97 | 3 | 18,19 | 2 | | | | |
| 98 | 3 | 20,21 | 2 | | | | |
| 99 | 3 | 22,23 | 2 | | | | |
| 100 | 3 | 12,13,18 | 2 | | | | |
| 101 | 3 | 14,15,20 | 2 | | | | |
| 102 | 3 | 16,17,22 | 2 | | | | |
| 103 | 3 | 12,13,18,19 | 2 | | | | |
| 104 | 3 | 14,15,20,21 | 2 | | | | |
| 105 | 3 | 16,17,22,23 | 2 | | | | |
| 106 | 1 | 12 | 2 | | | | |
| 107 | 1 | 13 | 2 | | | | |
| 108 | 1 | 18 | 2 | | | | |
| 109 | 1 | 19 | 2 | | | | |
| 110 | 1 | 12,13 | 2 | | | | |
| 111 | 1 | 18,19 | 2 | | | | |
| 112 | 2 | 12,13 | 2 | | | | |
| 113 | 2 | 14,15 | 2 | | | | |
| 114 | 2 | 18,19 | 2 | | | | |
| 115 | 2 | 20,21 | 2 | | | | |
| 116 | 1 | 0,1,12 | 1 | | | | |
| 117 | 1 | 0,1,12,13 | 1 | | | | |
| 118 | 2 | 0,1,12 | 1 | | | | |
| 119 | 2 | 0,1,12,13 | 1 | | | | |
| 120 | 2 | 2,3,14 | 1 | | | | |
| 121 | 2 | 2,3,14,15 | 1 | | | | |
| 122 | 3 | 0,1,12 | 1 | | | | |
| 123 | 3 | 0,1,12,13 | 1 | | | | |
| 124 | 3 | 2,3,14 | 1 | | | | |
| 125 | 3 | 2,3,14,15 | 1 | | | | |
| 126 | 3 | 4,5,16 | 1 | | | | |
| 127 | 3 | 4,5,16,17 | 1 | | | | |

FIG. 15

## FIG. 16A

dmrs-Type=eType2, maxLength=2　(PDSCH)

| Value | One Codeword: Codeword 0 enabled, Codeword 1 disabled | | |
| --- | --- | --- | --- |
| | Number of DMRS CDM group(s) without data | DMRS port(s) | Number of front-load symbols |
| 58 | 2 | 0,2,3 | 1 |

## FIG. 16B

dmrs-Type=eType2, maxLength=2　(PDSCH)

| Value | One Codeword: Codeword 0 enabled, Codeword 1 disabled | | |
| --- | --- | --- | --- |
| | Number of DMRS CDM group(s) without data | DMRS port(s) | Number of front-load symbols |
| ... | ... | ... | ... |
| 128 | 2 | 0,2,3 | 1 |

## FIG. 17A

dmrs-Type=eType1, maxLength=1, rank=1        (PUSCH)

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 1 | 8 |
| 7 | 1 | 9 |
| 8 | 2 | 8 |
| 9 | 2 | 9 |
| 10 | 2 | 10 |
| 11 | 2 | 11 |
| 12-15 | Reserved | Reserved |

## FIG. 17B

dmrs-Type=eType1, maxLength=1, rank=2        (PUSCH)

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 2 | 0,2 |
| 4 | 1 | 8,9 |
| 5 | 2 | 8,9 |
| 6 | 2 | 10,11 |
| [7] | [2] | [8,10] |
| 8-15 | Reserved | Reserved |

## FIG. 17C

dmrs-Type=eType1, maxLength=1, rank=3        (PUSCH)

| Value | Number of DMRS CDM group(s) without data | DMRS port(s) |
|---|---|---|
| 0 | 2 | 0-2 |
| [1] | [2] | [8-10] |
| 2 | 1 | 0,1,8 |
| 3 | 2 | 0,1,8 |
| 4 | 2 | 2,3,10 |
| 5-15 | Reserved | Reserved |

## FIG. 17D

dmrs-Type=eType1, maxLength=1, rank=4        (PUSCH)

| Value | Number of DMRS CDM group(s) without data | DMRS port(s) |
|---|---|---|
| 0 | 2 | 0-3 |
| [1] | [2] | [8-11] |
| 2 | 1 | 0,1,8,9 |
| 3 | 2 | 0,1,8,9 |
| 4 | 2 | 2,3,10,11 |
| 5-15 | Reserved | Reserved |

# FIG. 18A

dmrs-Type=eType1, maxLength=1, rank=5                                        (PUSCH)

| Value | Number of DMRS CDM group(s) without data | DMRS port(s) |
|---|---|---|
| 0 | 2 | 0,1,2,3,8 |
| 1-15 | Reserved | Reserved |

# FIG. 18B

dmrs-Type=eType1, maxLength=1, rank=6                                        (PUSCH)

| Value | Number of DMRS CDM group(s) without data | DMRS port(s) |
|---|---|---|
| 0 | 2 | 0,1,2,3,8,10 |
| 1-15 | Reserved | Reserved |

# FIG. 18C

dmrs-Type=eType1, maxLength=1, rank=7                                        (PUSCH)

| Value | Number of DMRS CDM group(s) without data | DMRS port(s) |
|---|---|---|
| 0 | 2 | 0,1,2,3,8,9,10 |
| 1-15 | Reserved | Reserved |

# FIG. 18D

dmrs-Type=eType1, maxLength=1, rank=8                                        (PUSCH)

| Value | Number of DMRS CDM group(s) without data | DMRS port(s) |
|---|---|---|
| 0 | 2 | 0,1,2,3,8,9,10,11 |
| 1-15 | Reserved | Reserved |

FIG. 19A    dmrs-Type=eType1, maxLength=2, rank=1                    (PUSCH)

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 2 | 0 | 2 |
| 7 | 2 | 1 | 2 |
| 8 | 2 | 2 | 2 |
| 9 | 2 | 3 | 2 |
| 10 | 2 | 4 | 2 |
| 11 | 2 | 5 | 2 |
| 12 | 2 | 6 | 2 |
| 13 | 2 | 7 | 2 |
| 14 | 1 | 8 | 1 |
| 15 | 1 | 9 | 1 |
| 16 | 2 | 8 | 1 |
| 17 | 2 | 9 | 1 |
| 18 | 2 | 10 | 1 |
| 19 | 2 | 11 | 1 |
| 20 | 2 | 8 | 2 |
| 21 | 2 | 9 | 2 |
| 22 | 2 | 10 | 2 |
| 23 | 2 | 11 | 2 |
| 24 | 2 | 12 | 2 |
| 25 | 2 | 13 | 2 |
| 26 | 2 | 14 | 2 |
| 27 | 2 | 15 | 2 |
| 28-31 | Reserved | Reserved | Reserved |

FIG. 19B    dmrs-Type=eType1, maxLength=2, rank=2                    (PUSCH)

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 2 | 0,2 | 1 |
| 4 | 2 | 0,1 | 2 |
| 5 | 2 | 2,3 | 2 |
| 6 | 2 | 4,5 | 2 |
| 7 | 2 | 6,7 | 2 |
| 8 | 2 | 0,4 | 2 |
| 9 | 2 | 2,6 | 2 |
| 10 | 1 | 8,9 | 1 |
| 11 | 2 | 8,9 | 1 |
| 12 | 2 | 10,11 | 1 |
| [13] | [2] | [8,10] | [1] |
| 14 | 2 | 8,9 | 2 |
| 15 | 2 | 10,11 | 2 |
| 16 | 2 | 12,13 | 2 |
| 17 | 2 | 14,15 | 2 |
| 18 | 2 | 8,12 | 2 |
| 19 | 2 | 10,14 | 2 |
| 20-31 | Reserved | Reserved | Reserved |

## FIG. 20A

dmrs-Type=eType1, maxLength=2, rank=3                 (PUSCH)

| Value | Number of DMRS CDM group(s) without data | DMRS port(s) | Number of front-load symbols |
|---|---|---|---|
| 0 | 2 | 0-2 | 1 |
| 1 | 2 | 0,1,4 | 2 |
| 2 | 2 | 2,3,6 | 2 |
| [3] | [2] | [8-10] | [1] |
| 4 | 2 | 8,9,12 | 2 |
| 5 | 2 | 10,11,14 | 2 |
| 6 | 1 | 0,1,8 | 1 |
| 7 | 2 | 0,1,8 | 1 |
| 8 | 2 | 2,3,10 | 1 |
| 9-31 | Reserved | Reserved | Reserved |

## FIG. 20B

dmrs-Type=eType1, maxLength2, rank=4                 (PUSCH)

| Value | Number of DMRS CDM group(s) without data | DMRS port(s) | Number of front-load symbols |
|---|---|---|---|
| 0 | 2 | 0-3 | 1 |
| 1 | 2 | 0,1,4,5 | 2 |
| 2 | 2 | 2,3,6,7 | 2 |
| 3 | 2 | 0,2,4,6 | 2 |
| [4] | [2] | [8-11] | [1] |
| 5 | 2 | 8,9,12,13 | 2 |
| 6 | 2 | 10,11,14,15 | 2 |
| [7] | [2] | [8,10,12,14] | [2] |
| 8 | 1 | 0,1,8,9 | 1 |
| 9 | 2 | 0,1,8,9 | 1 |
| 10 | 2 | 2,3,10,11 | 1 |
| 11-31 | Reserved | Reserved | Reserved |

## FIG. 20C

dmrs-Type=eType1, maxLength=2, rank=5                 (PUSCH)

| Value | Number of DMRS CDM group(s) without data | DMRS port(s) | Number of front-load symbols |
|---|---|---|---|
| 0 | 2 | 0-4 | 2 |
| 1 | 2 | 0,1,2,3,8 | 1 |
| 2 | 1 | 0,1,4,5,8 | 2 |
| 3 | 2 | 0,1,4,5,8 | 2 |
| 4 | 2 | 2,3,6,7,10 | 2 |
| 5-31 | Reserved | Reserved | Reserved |

## FIG. 21A

dmrs-Type=eType1, maxLength=2, rank=6                                    (PUSCH)

| Value | Number of DMRS CDM group(s) without data | DMRS port(s) | Number of front-load symbols |
|-------|------------------------------------------|--------------|------------------------------|
| 0 | 2 | 0,1,2,3,4,6 | 2 |
| 1 | 2 | 0,1,2,3,8,10 | 1 |
| 2 | 1 | 0,1,4,5,8,12 | 2 |
| 3 | 2 | 0,1,4,5,8,12 | 2 |
| 4 | 2 | 2,3,6,7,10,14 | 2 |
| 5-31 | Reserved | Reserved | Reserved |

## FIG. 21B

dmrs-Type=eType1, maxLength2, rank=7                                    (PUSCH)

| Value | Number of DMRS CDM group(s) without data | DMRS port(s) | Number of front-load symbols |
|-------|------------------------------------------|--------------|------------------------------|
| 0 | 2 | 0,1,2,3,4,5,6 | 2 |
| 1 | 2 | 0,1,2,3,8,9,10 | 1 |
| 2 | 1 | 0,1,4,5,8,9,12 | 2 |
| 3 | 2 | 0,1,4,5,8,9,12 | 2 |
| 4 | 2 | 2,3,6,7,10,11,14 | 2 |
| 5-31 | Reserved | Reserved | Reserved |

## FIG. 21C

dmrs-Type=eType1, maxLength=2, rank=8                                    (PUSCH)

| Value | Number of DMRS CDM group(s) without data | DMRS port(s) | Number of front-load symbols |
|-------|------------------------------------------|--------------|------------------------------|
| 0 | 2 | 0,1,2,3,4,5,6,7 | 2 |
| 1 | 2 | 0,1,2,3,8,9,10,11 | 1 |
| 2 | 1 | 0,1,4,5,8,9,12,13 | 2 |
| 3 | 2 | 0,1,4,5,8,9,12,13 | 2 |
| 4 | 2 | 2,3,6,7,10,11,14,15 | 2 |
| 5-31 | Reserved | Reserved | Reserved |

# FIG. 22A

dmrs-Type=eType2, maxLength=1, rank=1 (PUSCH)

| Value | Number of DMRS CDM group(s) without data | DMRS port(s) |
|---|---|---|
| 0 | 1 | 0 |
| 1 | 1 | 1 |
| 2 | 2 | 0 |
| 3 | 2 | 1 |
| 4 | 2 | 2 |
| 5 | 2 | 3 |
| 6 | 3 | 0 |
| 7 | 3 | 1 |
| 8 | 3 | 2 |
| 9 | 3 | 3 |
| 10 | 3 | 4 |
| 11 | 3 | 5 |
| 12 | 1 | 12 |
| 13 | 1 | 13 |
| 14 | 2 | 12 |
| 15 | 2 | 13 |
| 16 | 2 | 14 |
| 17 | 2 | 15 |
| 18 | 3 | 12 |
| 19 | 3 | 13 |
| 20 | 3 | 14 |
| 21 | 3 | 15 |
| 22 | 3 | 16 |
| 23 | 3 | 17 |
| 24-31 | Reserved | Reserved |

# FIG. 22B

dmrs-Type=eType2, maxLength=1, rank=2 (PUSCH)

| Value | Number of DMRS CDM group(s) without data | DMRS port(s) |
|---|---|---|
| 0 | 1 | 0,1 |
| 1 | 2 | 0,1 |
| 2 | 2 | 2,3 |
| 3 | 3 | 0,1 |
| 4 | 3 | 2,3 |
| 5 | 3 | 4,5 |
| 6 | 2 | 0,2 |
| 7 | 1 | 12,13 |
| 8 | 2 | 12,13 |
| 9 | 2 | 14,15 |
| 10 | 3 | 12,13 |
| 11 | 3 | 14,15 |
| 12 | 3 | 16,17 |
| [13] | [2] | [12,14] |
| 14-31 | Reserved | Reserved |

## FIG. 23A

dmrs-Type=eType2, maxLength=1, rank=3          (PUSCH)

| Value | Number of DMRS CDM group(s) without data | DMRS port(s) |
|---|---|---|
| 0 | 2 | 0-2 |
| 1 | 3 | 0-2 |
| 2 | 3 | 3-5 |
| [3] | [2] | [12-14] |
| [4] | [3] | [12-14] |
| [5] | [3] | [15-17] |
| 6 | 1 | 0,1,12 |
| 7 | 2 | 0,1,12 |
| 8 | 2 | 2,3,14 |
| 9 | 3 | 0,1,12 |
| 10 | 3 | 2,3,14 |
| 11 | 3 | 4,5,16 |
| 12-31 | Reserved | Reserved |

## FIG. 23B

dmrs-Type=eType1, maxLength=1, rank=4          (PUSCH)

| Value | Number of DMRS CDM group(s) without data | DMRS port(s) |
|---|---|---|
| 0 | 2 | 0-3 |
| 1 | 3 | 0-3 |
| [2] | [2] | [12-15] |
| [3] | [3] | [12-15] |
| 4 | 1 | 0,1,12,13 |
| 5 | 2 | 0,1,12,13 |
| 6 | 2 | 2,3,14,15 |
| 7 | 3 | 0,1,12,13 |
| 8 | 3 | 2,3,14,15 |
| 9 | 3 | 4,5,16,17 |
| 10-31 | Reserved | Reserved |
| 4-31 | Reserved | Reserved |

## FIG. 24A

dmrs-Type=eType2, maxLength=1, rank=5 (PUSCH)

| Value | Number of DMRS CDM group(s) without data | DMRS port(s) |
|---|---|---|
| 0 | 3 | 0-4 |
| 1 | 3 | 12-16 |
| 2 | 2 | 0,1,2,3,12 |
| 3 | 3 | 0,1,2,3,12 |
| 4-31 | Reserved | Reserved |

## FIG. 24B

dmrs-Type=eType2, maxLength=1, rank=6 (PUSCH)

| Value | Number of DMRS CDM group(s) without data | DMRS port(s) |
|---|---|---|
| 0 | 3 | 0-5 |
| 1 | 3 | 12-17 |
| 2 | 2 | 0,1,2,3,12,14 |
| 3 | 3 | 0,1,2,3,12,14 |
| 4-31 | Reserved | Reserved |

## FIG. 24C

dmrs-Type=eType2, maxLength=1, rank=7 (PUSCH)

| Value | Number of DMRS CDM group(s) without data | DMRS port(s) |
|---|---|---|
| 0 | 2 | 0-3,12-14 |
| 1 | 3 | 0-3,12-14 |
| 2-31 | Reserved | Reserved |

## FIG. 24D

dmrs-Type=eType2, maxLength=1, rank=8 (PUSCH)

| Value | Number of DMRS CDM group(s) without data | DMRS port(s) |
|---|---|---|
| 0 | 2 | 0-3,12-15 |
| 1 | 3 | 0-3,12-15 |
| 2-31 | Reserved | Reserved |

dmrs-Type=eType2, maxLength=2, rank=1                       (PUSCH)

| Value | Number of DMRS CDM group(s) without data | DMRS port(s) | Number of front-load symbols |
|---|---|---|---|
| 0 | 1 | 0 | 1 |
| 1 | 1 | 1 | 1 |
| 2 | 2 | 0 | 1 |
| 3 | 2 | 1 | 1 |
| 4 | 2 | 2 | 1 |
| 5 | 2 | 3 | 1 |
| 6 | 3 | 0 | 1 |
| 7 | 3 | 1 | 1 |
| 8 | 3 | 2 | 1 |
| 9 | 3 | 3 | 1 |
| 10 | 3 | 4 | 1 |
| 11 | 3 | 5 | 1 |
| 12 | 3 | 0 | 2 |
| 13 | 3 | 1 | 2 |
| 14 | 3 | 2 | 2 |
| 15 | 3 | 3 | 2 |
| 16 | 3 | 4 | 2 |
| 17 | 3 | 5 | 2 |
| 18 | 3 | 6 | 2 |
| 19 | 3 | 7 | 2 |
| 20 | 3 | 8 | 2 |
| 21 | 3 | 9 | 2 |
| 22 | 3 | 10 | 2 |
| 23 | 3 | 11 | 2 |
| 24 | 1 | 0 | 2 |
| 25 | 1 | 1 | 2 |
| 26 | 1 | 6 | 2 |
| 27 | 1 | 7 | 2 |
| 28 | 1 | 12 | 1 |
| 29 | 1 | 13 | 1 |
| 30 | 2 | 12 | 1 |
| 31 | 2 | 13 | 1 |
| 32 | 2 | 14 | 1 |
| 33 | 2 | 15 | 1 |
| 34 | 3 | 12 | 1 |
| 35 | 3 | 13 | 1 |
| 36 | 3 | 14 | 1 |
| 37 | 3 | 15 | 1 |
| 38 | 3 | 16 | 1 |
| 39 | 3 | 17 | 1 |
| 40 | 3 | 12 | 2 |
| 41 | 3 | 13 | 2 |
| 42 | 3 | 14 | 2 |
| 43 | 3 | 15 | 2 |
| 44 | 3 | 16 | 2 |
| 45 | 3 | 17 | 2 |
| 46 | 3 | 18 | 2 |
| 47 | 3 | 19 | 2 |
| 48 | 3 | 20 | 2 |
| 49 | 3 | 21 | 2 |
| 50 | 3 | 22 | 2 |
| 51 | 3 | 24 | 2 |
| 52 | 1 | 12 | 2 |
| 53 | 1 | 13 | 2 |
| 54 | 1 | 18 | 2 |
| 55 | 1 | 19 | 2 |
| 56-63 | Reserved | Reserved | Reserved |

FIG. 25

dmrs-Type=eType2, maxLength=2, rank=2      (PUSCH)

| Value | Number of DMRS CDM group(s) without data | DMRS port(s) | Number of front-load symbols |
|---|---|---|---|
| 0 | 1 | 0,1 | 1 |
| 1 | 2 | 0,1 | 1 |
| 2 | 2 | 2,3 | 1 |
| 3 | 3 | 0,1 | 1 |
| 4 | 3 | 2,3 | 1 |
| 5 | 3 | 4,5 | 1 |
| 6 | 2 | 0,2 | 1 |
| 7 | 3 | 0,1 | 2 |
| 8 | 3 | 2,3 | 2 |
| 9 | 3 | 4,5 | 2 |
| 10 | 3 | 6,7 | 2 |
| 11 | 3 | 8,9 | 2 |
| 12 | 3 | 10,11 | 2 |
| 13 | 1 | 0,1 | 2 |
| 14 | 1 | 6,7 | 2 |
| 15 | 2 | 0,1 | 2 |
| 16 | 2 | 2,3 | 2 |
| 17 | 2 | 6,7 | 2 |
| 18 | 2 | 8,9 | 2 |
| 19 | 1 | 12,13 | 1 |
| 20 | 2 | 12,13 | 1 |
| 21 | 2 | 14,15 | 1 |
| 22 | 3 | 12,13 | 1 |
| 23 | 3 | 14,15 | 1 |
| 24 | 3 | 16,17 | 1 |
| [25] | [2] | [12,14] | [1] |
| 26 | 3 | 12,13 | 2 |
| 27 | 3 | 14,15 | 2 |
| 28 | 3 | 16,17 | 2 |
| 29 | 3 | 18,19 | 2 |
| 30 | 3 | 20,21 | 2 |
| 31 | 3 | 22,23 | 2 |
| 32 | 1 | 12,13 | 2 |
| 33 | 1 | 18,19 | 2 |
| 34 | 2 | 12,13 | 2 |
| 35 | 2 | 14,15 | 2 |
| 36 | 2 | 18,19 | 2 |
| 37 | 2 | 20,21 | 2 |
| 38-63 | Reserved | Reserved | Reserved |

FIG. 26

# FIG. 27A

dmrs-Type=eType2, maxLength=2, rank=3 (PUSCH)

| Value | Number of DMRS CDM group(s) without data | DMRS port(s) | Number of front-load symbols |
|---|---|---|---|
| 0 | 2 | 0-2 | 1 |
| 1 | 3 | 0-2 | 1 |
| 2 | 3 | 3-5 | 1 |
| 3 | 3 | 0,1,6 | 2 |
| 4 | 3 | 2,3,8 | 2 |
| 5 | 3 | 4,5,10 | 2 |
| [6] | [2] | [12-14] | [1] |
| [7] | [3] | [12-14] | [1] |
| [8] | [3] | [15-17] | [1] |
| 9 | 3 | 12,13,18 | 2 |
| 10 | 3 | 14,15,20 | 2 |
| 11 | 3 | 16,17,22 | 2 |
| 12 | 1 | 0,1,12 | 1 |
| 13 | 2 | 0,1,12 | 1 |
| 14 | 2 | 2,3,14 | 1 |
| 15 | 3 | 0,1,12 | 1 |
| 16 | 3 | 2,3,14 | 1 |
| 17 | 3 | 4,5,16 | 1 |
| 18-63 | Reserved | Reserved | Reserved |

# FIG. 27B

dmrs-Type=eType2, maxLength=2, rank=4 (PUSCH)

| Value | Number of DMRS CDM group(s) without data | DMRS port(s) | Number of front-load symbols |
|---|---|---|---|
| 0 | 2 | 0-3 | 1 |
| 1 | 3 | 0-3 | 1 |
| 2 | 3 | 0,1,6,7 | 2 |
| 3 | 3 | 2,3,8,9 | 2 |
| 4 | 3 | 4,5,10,11 | 2 |
| [5] | [2] | [12-15] | [1] |
| [6] | [3] | [12-15] | [1] |
| 7 | 3 | 12,13,18,19 | 2 |
| 8 | 3 | 14,15,20,21 | 2 |
| 9 | 3 | 16,17,22,23 | 2 |
| 10 | 1 | 0,1,12,13 | 1 |
| 11 | 2 | 0,1,12,13 | 1 |
| 12 | 2 | 2,3,14,15 | 1 |
| 13 | 3 | 0,1,12,13 | 1 |
| 14 | 3 | 2,3,14,15 | 1 |
| 15 | 3 | 4,5,16,17 | 1 |
| 16-63 | Reserved | Reserved | Reserved |

# FIG. 28A

dmrs-Type=eType2, maxLength=2, rank=5                          (PUSCH)

| Value | Number of DMRS CDM group(s) without data | DMRS port(s) | Number of front-load symbols |
|---|---|---|---|
| 0 | 3 | 0-4 | 1 |
| 1 | 2 | 0,1,2,3,6 | 2 |
| 2 | 2 | 0,1,2,3,12 | 1 |
| 3 | 3 | 0,1,2,3,12 | 1 |
| 4 | 1 | 0,1,6,7,12 | 2 |
| 5 | 2 | 0,1,6,7,12 | 2 |
| 6 | 2 | 2,3,8,9,14 | 2 |
| 7 | 3 | 0,1,6,7,12 | 2 |
| 8 | 3 | 2,3,8,9,14 | 2 |
| 9 | 3 | 4,5,10,11,16 | 2 |
| 10-63 | Reserved | Reserved | Reserved |

# FIG. 28B

dmrs-Type=eType2, maxLength=2, rank=6                          (PUSCH)

| Value | Number of DMRS CDM group(s) without data | DMRS port(s) | Number of front-load symbols |
|---|---|---|---|
| 0 | 3 | 0-5 | 1 |
| 1 | 2 | 0,1,2,3,6,8 | 2 |
| 2 | 2 | 0-3,12,14 | 1 |
| 3 | 3 | 0-3,12,14 | 1 |
| 4 | 1 | 0,1,6,7,12,18 | 2 |
| 5 | 2 | 0,1,6,7,12,18 | 2 |
| 6 | 2 | 2,3,8,9,14,20 | 2 |
| 7 | 3 | 0,1,6,7,12,18 | 2 |
| 8 | 3 | 2,3,8,9,14,20 | 2 |
| 9 | 3 | 4,5,10,11,16,22 | 2 |
| 10-63 | Reserved | Reserved | Reserved |

# FIG. 29A

dmrs-Type=eType2, maxLength=2, rank=7 (PUSCH)

| Value | Number of DMRS CDM group(s) without data | DMRS port(s) | Number of front-load symbols |
|---|---|---|---|
| 0 | 2 | 0,1,2,3,6,7,8 | 2 |
| 1 | 2 | 0-3,12-14 | 1 |
| 2 | 3 | 0-3,12-14 | 1 |
| 3 | 1 | 0,1,6,7,12,13,18 | 2 |
| 4 | 2 | 0,1,6,7,12,13,18 | 2 |
| 5 | 2 | 2,3,8,9,14,15,20 | 2 |
| 6 | 3 | 0,1,6,7,12,13,18 | 2 |
| 7 | 3 | 2,3,8,9,14,15,20 | 2 |
| 8 | 3 | 4,5,10,11,16,17,22 | 2 |
| 9-63 | Reserved | Reserved | Reserved |

# FIG. 29B

dmrs-Type=eType2, maxLength=2, rank=8 (PUSCH)

| Value | Number of DMRS CDM group(s) without data | DMRS port(s) | Number of front-load symbols |
|---|---|---|---|
| 0 | 2 | 0,1,2,3,6,7,8,9 | 2 |
| 1 | 2 | 0-3,12-15 | 1 |
| 2 | 3 | 0-3,12-15 | 1 |
| 3 | 1 | 0,1,6,7,12,13,18,19 | 2 |
| 4 | 2 | 0,1,6,7,12,13,18,19 | 2 |
| 5 | 2 | 2,3,8,9,14,15,20,21 | 2 |
| 6 | 3 | 0,1,6,7,12,13,18,19 | 2 |
| 7 | 3 | 2,3,8,9,14,15,20,21 | 2 |
| 8 | 3 | 4,5,10,11,16,17,22,23 | 2 |
| 9-63 | Reserved | Reserved | Reserved |

# FIG. 30A

dmrs-Type=eType1, maxLength=2

| Value | Number of DMRS CDM group(s) without data | DMRS port(s) | Number of front-load symbols |
|---|---|---|---|
| 4 | 2 | 0,1,2,3,8 | 1 |
| 5 | 2 | 0,1,2,3,8,10 | 1 |
| 6 | 2 | 0,1,2,3,8,9,10 | 1 |
| 7 | 2 | 0,1,2,3,8,9,10,11 | 1 |
| 8 | 1 | 0,1,4,5,8 | 2 |
| 9 | 1 | 0,1,4,5,8,12 | 2 |
| 10 | 1 | 0,1,4,5,8,9,12 | 2 |
| 11 | 1 | 0,1,4,5,8,9,12,13 | 2 |

# FIG. 30B

dmrs-Type=eType2, maxLength=2

| Value | Number of DMRS CDM group(s) without data | DMRS port(s) | Number of front-load symbols |
|---|---|---|---|
| 6 | 2 | 0,1,2,3,12 | 1 |
| 7 | 2 | 0-3,12,14 | 1 |
| 8 | 2 | 0-3,12-14 | 1 |
| 9 | 2 | 0-3,12-15 | 1 |
| 14 | 1 | 0,1,6,7,12 | 2 |
| 15 | 1 | 0,1,6,7,12,18 | 2 |
| 16 | 1 | 0,1,6,7,12,13,18 | 2 |
| 17 | 1 | 0,1,6,7,12,13,18,19 | 2 |

FIG. 31

FIG. 32

EP 4 693 942 A1

FIG. 33

BASE STATION 10, USER TERMINAL 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 34

FIG. 35

## INTERNATIONAL SEARCH REPORT

| International application No. |
| --- |
| **PCT/JP2023/014453** |

| | |
| --- | --- |
| **A.** | **CLASSIFICATION OF SUBJECT MATTER** |

*H04B 7/08*(2006.01)i; *H04J 13/18*(2011.01)i; *H04L 27/26*(2006.01)i
FI: H04B7/08 804; H04J13/18; H04L27/26 114

According to International Patent Classification (IPC) or to both national classification and IPC

| | |
| --- | --- |
| **B.** | **FIELDS SEARCHED** |

Minimum documentation searched (classification system followed by classification symbols)

H04B7/08; H04J13/18; H04L27/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | Huawei, HiSilicon, Enhancements on DMRS in Rel-18, [online], 3GPP TSG RAN WG 1 #112 R 1-2300096, 17 February 2023, [retrieved on 18 October 2023] sections 1, 2.2 | 1-6 |
| Y | WO 2020/230243 A1 (NTT DOCOMO, INC.) 19 November 2020 (2020-11-19) paragraph [0110] | 1-6 |
| Y | WO 2022/153395 A1 (NTT DOCOMO, INC.) 21 July 2022 (2022-07-21) paragraph [0096] | 1-6 |

☐ Further documents are listed in the continuation of Box C.  ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 October 2023** | **31 October 2023** |

| Name and mailing address of the ISA/JP | Authorized officer |
| --- | --- |
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

| International application No. |
| --- |
| **PCT/JP2023/014453** |

| Patent document cited in search report | Publication date (day/month/year) | Patent family member(s) | Publication date (day/month/year) |
| --- | --- | --- | --- |
| WO 2020/230243 A1 | 19 November 2020 | US 2022/0209918 A1 paragraph [0130]<br>CN 114128347 A | |
| WO 2022/153395 A1 | 21 July 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010